(19) Europäisches Patentamt
European Patent Office
Office européen des brevets

(11) EP 2 969 499 B1

(12) **EUROPEAN PATENT SPECIFICATION**

(45) Date of publication and mention of the grant of the patent:
**08.12.2021 Bulletin 2021/49**

(21) Application number: **14714841.5**

(22) Date of filing: **04.03.2014**

(51) Int Cl.:
***B29D 11/00*** *(2006.01)* ***B29C 48/08*** *(2019.01)*

(86) International application number:
**PCT/US2014/020234**

(87) International publication number:
**WO 2014/158802 (02.10.2014 Gazette 2014/40)**

(54) **METHOD OF PREPARING PHOTOCHROMIC-DICHROIC FILMS HAVING REDUCED OPTICAL DISTORTION**

VERFAHREN ZUR HERSTELLUNG DICHROMATISCHER PHOTOCHROMER FILME MIT VERMINDERTER OPTISCHER VERZERRUNG

PROCÉDÉ DE PRÉPARATION DE FILMS DICHROÏQUES-PHOTOCHROMIQUES PRÉSENTANT UNE DISTORSION OPTIQUE RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2013 US 201313798971**

(43) Date of publication of application:
**20.01.2016 Bulletin 2016/03**

(73) Proprietor: **Transitions Optical, Inc.**
**Pinellas Park, FL 33782 (US)**

(72) Inventors:
- **PARK, David**
  **Tuam (IE)**
- **KUMAR, Anil**
  **Murrysville, Pennsylvania 15668 (US)**

(74) Representative: **f & e patent**
**Braunsberger Feld 29**
**51429 Bergisch Gladbach (DE)**

(56) References cited:
**US-A- 6 060 003**
**US-A1- 2008 187 749**
**US-A1- 2009 169 810**
**US-A1- 2009 288 764**
**US-A1- 2011 080 628**
**US-A1- 2011 189 437**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD

The present invention relates to a method of preparing photochromic-dichroic films, having reduced optical distortion, in which a molten stream, that includes a first molten layer formed from a molten thermoplastic photochromic-dichroic composition, is passed between a rotating roll and a continuous belt.

### BACKGROUND

Conventional linearly polarizing elements, such as linearly polarizing lenses for sunglasses and linearly polarizing filters, are typically formed from unilaterally stretched polymer sheets, which can optionally contain a dichroic material, such as a dichroic dye. Consequently, conventional linearly polarizing elements are static elements having a single, linearly polarizing state. Accordingly, when a conventional linearly polarizing element is exposed to either randomly polarized radiation or reflected radiation of the appropriate wavelength, some percentage of the radiation transmitted through the element is linearly polarized.

In addition, conventional linearly polarizing elements are typically tinted. Typically, conventional linearly polarizing elements contain a static or fixed coloring agent and have an absorption spectrum that does not vary in response to actinic radiation. The color of the conventional linearly polarizing element will depend upon the static coloring agent used to form the element, and most commonly, is a neutral color (for example, brown, blue, or gray). Thus, while conventional linearly polarizing elements are useful in reducing reflected light glare, because of their static tint, they are typically not well suited for use under low-light conditions. Further, because conventional linearly polarizing elements have only a single, tinted linearly polarizing state, they are limited in their ability to store or display information.

Conventional photochromic elements, such as photochromic lenses that are formed using conventional thermally reversible photochromic materials are generally capable of converting from a first state, for example a "clear state," to a second state, for example a "colored state," in response to actinic radiation, and reverting back to the first state in response to thermal energy. Thus, conventional photochromic elements are generally well suited for use in both low-light and bright conditions. Conventional photochromic elements, however, that do not include linearly polarizing filters are generally not capable of linearly polarizing radiation. The dichroic ratio of conventional photochromic elements, in either state, is generally less than two. Therefore, conventional photochromic elements are not capable of reducing reflected light glare to the same extent as conventional linearly polarizing elements. In addition, conventional photochromic elements have a limited ability to store or display information.

Photochromic-dichroic compounds and materials have been developed that provide both photochromic properties and dichroic properties, if properly and at least sufficiently aligned. When exposed to actinic radiation, photochromic-dichroic compounds, that have been at least sufficiently aligned, typically provide a combination of color (or shading) and linear polarization of incident light.

It is known to form films that include one or more photochromic-dichroic compounds. Such photochromic-dichroic films can be used to form optical articles having photochromic and dichroic properties, such as by lamination or in-mold film injection methods. The formation of such photochromic-dichroic films is often and undesirably accompanied by the introduction of optical distortion into the photochromic-dichroic film. The optical distortion can result in the photochromic-dichroic film having undesirable properties, such as uneven shading, uneven linear polarization properties, and observable visual distortions when objects and/or direct light sources and/or indirect light sources are viewed through the film.

US2008/187749 A1 provides an optical element comprised of multiple layers of polymeric film, one of which possesses a light influencing property induced for instance by a photochromic material embedded in an oriented polymeric film.

US 2011/0080628 A1 provides composite optical elements comprising a photochromic linear polarizing element, the latter being formed from an at least partially ordered polymeric sheet and a reversible photochromic-dichroic material.

US2009/169810 A1 discloses a method for producing a thermoplastic film, in particular a cellulose acylate film, comprising extruding a molten thermoplastic resin from a die in a sheet shape followed by cooling and solidifying the sheet while sandwiching it between a metal cooling roll and an endless metal belt such that a film is obtained. The formation of films comprising more than one layer is not disclosed therein.

It would be desirable to develop new methods of forming photochromic-dichroic films having reduced or minimal optical distortion. It would be further desirable that such newly developed processes provide photochromic-dichroic films having a desirable level of photochromic and linear polarization properties.

## SUMMARY

In accordance with the present invention, there is provided a method of preparing a photochromic-dichroic film that comprises a photochromic-dichroic layer. The method further comprises the steps as laid out in independent claim 1.

## BRIEF DESCRIPTION OF THE DRAWINGS

FIG. 1 is a representative schematic of an extrusion assembly that can be used, with some embodiments, to prepare the photochromic-dichroic films in accordance with the present invention;

FIG. 2 is a representative schematic of the rotating roll, continuous belt and take-up roll of the extrusion assembly of FIG. 1; and

FIG. 3 is a graphical representation of average delta absorbance as a function of wavelength (over a visible wavelength region after activation with actinic radiation), and depicts two average difference absorption spectra obtained in two orthogonal planes for a photochromic-dichroic layer that includes a photochromic-dichroic compound;

In FIG.'s 1 through 3 like characters refer to the same structural features and components unless otherwise stated.

## DETAILED DESCRIPTION

As used herein, the term "actinic radiation" and similar terms, such as "actinic light" means electromagnetic radiation that is capable of causing a response in a material, such as, but not limited to, transforming a photochromic material from one form or state to another as will be discussed in further detail herein.

As used herein, the term "photochromic" and related terms, such as "photochromic compound" means having an absorption spectrum for at least visible radiation that varies in response to absorption of at least actinic radiation. Further, as used herein the term "photochromic material" means any substance that is adapted to display photochromic properties (i.e. adapted to have an absorption spectrum for at least visible radiation that varies in response to absorption of at least actinic radiation) and which includes at least one photochromic compound.

As used herein, the term "photochromic compound/material" includes thermally reversible photochromic compounds/materials and non-thermally reversible photochromic compounds/materials. The term "thermally reversible photochromic compounds/materials" as used herein means compounds/materials capable of converting from a first state, for example a "clear state," to a second state, for example a "colored state," in response to actinic radiation, and reverting back to the first state in response to thermal energy. The term "non-thermally reversible photochromic compounds/materials" as used herein means compounds/materials capable of converting from a first state, for example a "clear state," to a second state, for example a "colored state," in response to actinic radiation, and reverting back to the first state in response to actinic radiation of substantially the same wavelength(s) as the absorption(s) of the colored state (e.g., discontinuing exposure to such actinic radiation).

As used herein the term "dichroic" means capable of absorbing one of two orthogonal plane polarized components of at least transmitted radiation more strongly than the other.

As used herein, the term "photochromic-dichroic" and similar terms, such as "photochromic-dichroic materials" and "photochromic-dichroic compounds" means materials and compounds that possess and/or provide both photochromic properties (i.e., having an absorption spectrum for at least visible radiation that varies in response to at least actinic radiation), and dichroic properties (i.e., capable of absorbing one of two orthogonal plane polarized components of at least transmitted radiation more strongly than the other).

As used herein the term "dichroic ratio" refers to the ratio of the absorbance of radiation linearly polarized in a first plane to the absorbance of the same wavelength radiation linearly polarized in a plane orthogonal to the first plane, in which the first plane is taken as the plane with the highest absorbance.

As used herein to modify the term "state," the terms "first" and "second" are not intended to refer to any particular order or chronology, but instead refer to two different conditions or properties. For purposes of non-limiting illustration, the first state and the second state of the photochromic-dichroic compound of a photochromic-dichroic layer can differ with respect to at least one optical property, such as but not limited to the absorption or linear polarization of visible and/or UV radiation. Thus, according to various non-limiting embodiments disclosed herein, the photochromic-dichroic compound of a photochromic-dichroic layer can have a different absorption spectrum in each of the first and second state. For example, while not limiting herein, the photochromic-dichroic compound of a photochromic-dichroic layer can

be clear in the first state and colored in the second state. Alternatively, the photochromic-dichroic compound of a photochromic-dichroic layer can have a first color in the first state and a second color in the second state. Further, as discussed below in more detail, the photochromic-dichroic compound of a photochromic-dichroic layer can be non-linearly polarizing (or "non-polarizing") in the first state, and linearly polarizing in the second state.

As used herein the term "optical" means pertaining to or associated with light and/or vision. For example, according to various non-limiting embodiments disclosed herein, the optical article or element or device can be chosen from ophthalmic articles, elements and devices, display articles, elements and devices, windows, mirrors, and active and passive liquid crystal cell articles, elements and devices.

As used herein the term "ophthalmic" means pertaining to or associated with the eye and vision. Non-limiting examples of ophthalmic articles or elements include corrective and non-corrective lenses, including single vision or multi-vision lenses, which may be either segmented or non-segmented multi-vision lenses (such as, but not limited to, bifocal lenses, trifocal lenses and progressive lenses), as well as other elements used to correct, protect, or enhance (cosmetically or otherwise) vision, including without limitation, contact lenses, intra-ocular lenses, magnifying lenses, and protective lenses or visors.

As used herein the term "ophthalmic substrate" means lenses, partially formed lenses, and lens blanks.

As used herein the term "display" means the visible or machine-readable representation of information in words, numbers, symbols, designs or drawings. Non-limiting examples of display articles, elements and devices include screens, monitors, and security elements, such as security marks.

As used herein the term "window" means an aperture adapted to permit the transmission of radiation therethrough. Non-limiting examples of windows include automotive and aircraft transparencies, filters, shutters, and optical switches.

As used herein the term "liquid crystal cell" refers to a structure containing a liquid crystal material that is capable of being ordered. Active liquid crystal cells are cells in which the liquid crystal material is capable of being reversibly and controllably switched or converted between ordered and disordered states, or between two ordered states by the application of an external force, such as electric or magnetic fields. Passive liquid crystal cells are cells in which the liquid crystal material maintains an ordered state. A non-limiting example of an active liquid crystal cell element or device is a liquid crystal display.

As used herein the term "coating" means a supported film derived from a liquid or solid particulate flowable composition, which may or may not have a uniform thickness, and specifically excludes polymeric sheets. For purposes of non-limiting illustration, an example of a solid particulate flowable composition is a powder coating composition. In addition to including one or more preformed photochromic-dichroic films or layers that are prepared in accordance with the method of the present invention, photochromic-dichroic articles according to the present invention can include one or more optional further layers, such as an optional primer layer, and an optional topcoat layer, which in some embodiments, can each independently be a coating or formed from a coating composition.

As used herein the term "sheet" means a pre-formed film having a generally uniform thickness and capable of self-support.

As used herein the term "connected to" means in direct contact with an object or indirect contact with an object through one or more other structures or materials, at least one of which is in direct contact with the object. For purposes of non-limiting illustration, a preformed photochromic-dichroic film or layer prepared in accordance with the method of the present invention, can be, for example, in direct contact (e.g., abutting contact) with at least a portion of a substrate, or it can be in indirect contact with at least a portion of a substrate through one or more other interposed structures or materials, such as a primer layer and/or a monomolecular layer of a coupling or adhesive agent. For example, although not limiting herein, the preformed photochromic-dichroic film or layer can be in contact with one or more other interposed coatings, polymer sheets or combinations thereof, at least one of which is in direct contact with at least a portion of the substrate.

As used herein, the term "photosensitive material" means materials that physically or chemically respond to electromagnetic radiation, including, but not limited to, phosphorescent materials and fluorescent materials.

As used herein, the term "non-photosensitive materials" means materials that do not physically or chemically respond to electromagnetic radiation, including, but not limited to, static dyes.

As used herein, molecular weight values of polymers, such as weight average molecular weights (Mw), number average molecular weights (Mn), and z-average molecular weights (Mz) are determined by gel permeation chromatography using appropriate standards, such as polystyrene standards.

As used herein, polydispersity index (PDI) values represent a ratio of the weight average molecular weight (Mw) to the number average molecular weight (Mn) of the polymer (i.e., Mw/Mn).

As used herein, the term "polymer" means homopolymers (e.g., prepared from a single monomer species), copolymers (e.g., prepared from at least two monomer species), block copolymers, and graft polymers, including but not limited to, comb graft polymers, star graft polymers, and dendritic graft polymers.

As used herein, the term "(meth)acrylate" and similar terms, such as "(meth)acrylic acid ester" means methacrylates and/or acrylates. As used herein, the term "(meth)acrylic acid" means methacrylic acid and/or acrylic acid.

Unless otherwise indicated, all ranges or ratios disclosed herein are to be understood to encompass any and all subranges or subratios subsumed therein. For example, a stated range or ratio of "1 to 10" should be considered to include any and all subranges between (and inclusive of) the minimum value of 1 and the maximum value of 10; that is, all subranges or subratios beginning with a minimum value of 1 or more and ending with a maximum value of 10 or less, such as but not limited to, 1 to 6.1, 3.5 to 7.8, and 5.5 to 10.

As used herein and, unless otherwise indicated, left-to-right representations of linking groups, such as divalent linking groups, are inclusive of other appropriate orientations, such as, but not limited to, right-to-left orientations. For purposes of non-limiting illustration, the left-to-right representation of the divalent linking group

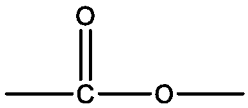

or equivalently -C(O)O-, is inclusive of the right-to-left representation thereof,

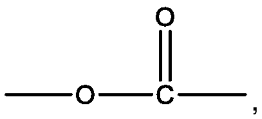

or equivalently -O(O)C- or -OC(O)-.

As used herein, the articles "a," "an," and "the" include plural referents unless otherwise expressly and unequivocally limited to a single (or one) referent.

As used herein, and unless otherwise indicated, "percent transmittance" can be determined using an art-recognized instrument, such as an ULTRASCAN PRO spectrometer obtained commercially from HunterLab, in accordance with instructions provided in the spectrometer user manual.

As used herein the term "linearly polarize" means to confine the vibrations of the electric vector of electromagnetic waves, such as light waves, to one direction or plane.

Other than in the operating examples, or where otherwise indicated, all numbers expressing quantities of ingredients, reaction conditions, and so forth used in the specification and claims are to be under stood as modified in all instances by the term "about."

As used herein, spatial or directional terms, such as "left", "right", "inner", "outer", "above", "below", and the like, relate to the invention as it is depicted in the drawing figures. However, it is to be understood that the invention can assume various alternative orientations and, accordingly, such terms are not to be considered as limiting.

As used herein, the terms "formed over," "deposited over," "provided over," "applied over," residing over," or "positioned over," mean formed, deposited, provided, applied, residing, or positioned on but not necessarily in direct (or abutting) contact with the underlying element, or surface of the underlying element. For example, a layer "positioned over" a substrate does not preclude the presence of one or more other layers, coatings, or films of the same or different composition located between the positioned or formed layer and the substrate.

The method of the present invention involves forming a molten thermoplastic photochromic-dichroic composition that includes a thermoplastic polymer and at least one photochromic-dichroic compound. The thermoplastic polymer of the molten thermoplastic photochromic-dichroic composition can include a single thermoplastic polymer or a combination of two or more thermoplastic polymers.

The method of the present invention further includes forming at least one further molten thermoplastic composition. Each further molten thermoplastic composition independently includes a further thermoplastic polymer. Each further thermoplastic polymer can include a single thermoplastic polymer or a combination of two or more thermoplastic polymers. The thermoplastic polymer of the molten thermoplastic photochromic-dichroic composition and the further thermoplastic polymer of each further molten thermoplastic composition can be the same or different.

With some embodiments, each further molten thermoplastic composition (and correspondingly each further molten layer, and each further layer) each independently include at least one of, one or more photochromic-dichroic compounds, one or more photochromic compounds, and one or more additives as described further herein with regard to the molten thermoplastic photochromic-dichroic composition, the first molten layer, and/or the first layer. With some embodiments, each further molten thermoplastic composition (and correspondingly each further molten layer, and each further layer) are each free of photochromic-dichroic compounds. With some further embodiments, each further molten thermoplastic composition (and correspondingly each further molten layer, and each further layer) are each free of photochromic-dichroic compounds and photochromic compounds.

The thermoplastic polymer of the molten thermoplastic photochromic-dichroic composition and the further thermoplastic polymer of each further molten thermoplastic composition can in each case, and with some embodiments, be independently selected from a wide variety of thermoplastic polymers. Non-limiting examples of such thermoplastic polymers include, polycarbonate, polyamide, polyimide, poly(meth)acrylate, polycyclic alkene, polyurethane, poly(urea)urethane, polythiourethane, polythio(urea)urethane, polyol(allyl carbonate), cellulose acetate, cellulose diacetate, cellulose triacetate, cellulose acetate propionate, cellulose acetate butyrate, polyalkene, polyalkylene-vinyl acetate (such as poly(ethylene-vinyl acetate) copolymer), poly(vinylacetate), poly(vinyl alcohol), poly(vinyl chloride), poly(vinylformal), poly(vinylacetal), poly(vinylidene chloride), poly(ethylene terephthalate), polyester, polysulfone, polyolefin, polyether, poly(ether-amide) block copolymer, polysiloxane copolymers thereof, mixtures thereof, and/or combinations thereof.

Thermoplastic polymers useful in the present invention can each independently be prepared by art-recognized methods, such as, but not limited to, addition polymerization and condensation polymerization. More particular non-limiting examples of polymerization methods include, but are not limited to, free radical polymerization, living polymerization, anionic polymerization, living anionic polymerization, cationic polymerization, living cationic polymerization, living radical polymerization, atom transfer radical polymerization, and single-electron living radical polymerization.

The thermoplastic polymers can, with some embodiments, each independently have architecture selected from, for example, linear architecture, branched architecture, comb architecture, star architecture, dendritic architecture, and combinations thereof. When formed from two or more different monomers, each thermoplastic polymer can, with some embodiments, be selected from random thermoplastic copolymers, block thermoplastic copolymers, combinations thereof, and combinations thereof within the same thermoplastic polymer molecule. For purposes of non-limiting illustration, with some embodiments, a thermoplastic copolymer having comb architecture can be described as having a backbone segment from which two or more teeth segments extend, and in which the backbone segment has random or block copolymer structure, and each tooth independently has random or block copolymer structure.

The thermoplastic polymers of the molten thermoplastic photochromic-dichroic composition and each further molten thermoplastic composition can each independently have, with some embodiments, one or more functional groups including, but not limited to, carboxylic acid groups, amine groups, epoxide groups (or oxirane groups), hydroxyl groups, thiol groups, carbamate groups, amide groups, urea groups, isocyanate groups (including blocked isocyanate groups) mercaptan groups, groups having ethylenic unsaturation (e.g., acrylate groups), vinyl groups, and combinations thereof.

With some embodiments, each thermoplastic polymer can be independently selected from thermoplastic polyamide polyalkyl(meth)acrylate block copolymers. Examples of thermoplastic polyamide polyalkyl(meth)acrylate block copolymers include, but are not limited to those described at column 4, line 24 through column 9, line 18 of United States Patent No. 7,282,551 B2. Further examples of thermoplastic polymers that can be used with some embodiments of the present invention are described at column 18, line 8 through column 19, line 5 of United States Patent No. 6,096,375.

With some embodiments, the thermoplastic polymers of the molten thermoplastic photochromic-dichroic composition and each further molten thermoplastic composition can each independently include, at least in part, thermoplastic elastomeric polymers. As used herein, the term "thermoplastic elastomeric polymer" means a thermoplastic polymer that has a high degree of resiliency and elasticity such that it is capable of at least partially reversible deformation or elongation. With some embodiments: when stretched, the molecules of a thermoplastic elastomeric polymer are (or become) aligned and can adopt aspects of a crystalline arrangement; and upon release, the thermoplastic elastomeric polymer can, at least to some extent, return to a disordered state.

A class of thermoplastic elastomeric polymers that can be used with some embodiments of the present invention include thermoplastic elastomeric block copolymers. Thermoplastic elastomeric block copolymers that can be used with some embodiments of the present invention have blocks (or segments) selected from ether blocks, amide blocks, urethane blocks, ester blocks, urea blocks, and combinations of two or more thereof. Examples of thermoplastic elastomeric block copolymers that can be used with some embodiments of the present invention include, but are not limited to, poly(ether-amide) block copolymers, poly(ester-ether) block copolymers, poly(ether-urethane) block copolymers, poly(ester-urethane) block copolymers, and/or poly(ether-urea) block copolymers. Examples of commercially available thermoplastic elastomeric block copolymers that can be used with some embodiments of the present invention include, but are not limited to, those available under the tradenames: DESMOPAN and TEXIN from Bayer Material Science LLC; ARNITEL from Royal DSM; and PEBAX from Atofina Chemicals or Cordis Corporation. While not intending to be bound by any theory, it is believed that, with some embodiments, thermoplastic elastomeric block copolymers exhibit hydrogen bonding that serves to maintain and stabilize a stretch ratio of the photochromic-dichroic film of the present invention, when subjected to unilateral and/or bilateral stretching.

In accordance with some embodiments of the present invention, the thermoplastic polymer and each further thermoplastic polymer, can in each case independently comprise at least one of, thermoplastic polyurethane, thermoplastic polycarbonate, thermoplastic polyester, thermoplastic polyolefin, thermoplastic(meth)acrylate, thermoplastic polyamide, thermoplastic polysulfone, thermoplastic poly(amide-ether) block copolymers, thermoplastic poly(ester-ether) block copolymers, thermoplastic poly(ether-urethane) block copolymers, thermoplastic poly(ester-urethane) block copolymers, and thermoplastic poly(ether-urea) block copolymers.

The molten thermoplastic photochromic-dichroic composition and each further molten thermoplastic composition can be prepared in accordance with suitable methods. For purposes of non-limiting illustration and with regard to the molten thermoplastic photochromic-dichroic composition, the components thereof, such as thermoplastic polymer(s), photochromic-dichroic compound(s), and optional additive(s) can, with some embodiments, be dry-blended together using a suitable dry blender, such as a twin-shell dry blender. With some embodiments, and for purposes of non-limiting illustration and with regard to the molten thermoplastic photochromic-dichroic composition, the components thereof, such as thermoplastic polymer(s), photochromic-dichroic compound(s), and optional additive(s) can be combined together by cryogenic mixing, such as in the presence of liquid nitrogen, in a suitable apparatus, such as a hammer mill or a jet mill. After the components of the composition are sufficiently dry blended or otherwise combined / mixed together, they can be subjected to elevated temperature, optionally under conditions of further mixing, such as mechanical mixing. The elevated temperature is typically selected so as to result in conversion of the dry blended composition into a molten thermoplastic composition. Mechanical mixing during exposure to elevated temperature can be achieved, for example, by paddles, blades, helical blades, impellers, single screw mixers, single reciprocating screw mixers, twin screw co-rotating mixers, twin screw counter-rotating mixers, and combinations thereof.

In accordance with some embodiments, the molten thermoplastic photochromic-dichroic composition is formed by combining one or more thermoplastic polymers with a photochromic-dichroic master batch that includes the photochromic-dichroic compound(s) and optionally one or more additives, as described in further detail herein. The photochromic-dichroic master batch, with some embodiments, is composed of one or more thermoplastic polymers, the photochromic-dichroic compound(s), and optionally one or more additives. The photochromic-dichroic compound(s) and optional additive(s) are present in the photochromic-dichroic master batch in amounts, such as percent by weights, based on total weight of the photochromic-dichroic master batch, that are greater than in the resulting molten thermoplastic photochromic-dichroic composition. Similarly, and with some embodiments, each further molten thermoplastic composition can be formed by combining one or more thermoplastic polymers with an additive master batch that includes one or more additives and one or more thermoplastic polymers. The additive(s) are present in the additive master batch in an amount, such as percent by weight, based on total weight of the additive master batch, that is greater than in the resulting further molten thermoplastic composition.

The method of the present invention includes forming a molten stream, which is composed of one or more layers. The molten stream includes a first molten layer that includes the molten thermoplastic photochromic-dichroic composition. The molten stream includes at least one further molten layer, in which each further molten layer independently includes a further molten thermoplastic composition. In the molten stream including two or more molten layers, each molten layer abuts at least one other molten layer. With some embodiments, the molten stream is formed by passing the molten thermoplastic photochromic-dichroic composition and one or more further molten thermoplastic compositions through a die, such as an extruder die.

In accordance with some embodiments of the present invention, the molten stream is a molten extrudate that is formed in and emerges from a die, such as an extruder die. With some embodiments, the molten thermoplastic photochromic-dichroic composition is formed in an extruder having a terminal portion, and each further molten thermoplastic composition is formed in at least one further extruder each having a terminal portion. The terminal portion of the extruder and the terminal portion of each further extruder are in fluid communication with a die, and the molten stream is a molten extrudate that emerges from the die.

For purposes of non-limiting illustration, and with reference to FIG. 1 there is depicted an extrusion assembly 1 that includes a first extruder 35 having a terminal portion 38. The molten thermoplastic photochromic-dichroic composition is formed, with some embodiments, in first extruder 35. Feed materials that are used to form the molten thermoplastic photochromic-dichroic composition, such as a first feed composition, can be introduced into first extruder 35 at one or more points along the length thereof, such as through feed port 36. First extruder 35 can be selected from single screw extruders, twin-screw co-rotating extruders, and twin-screw counter rotating extruders. First extruder 35 can, with some embodiments, include a heated barrel having one or more temperature controlled zones. As the first feed composition passes through the heated zones of first extruder 35 it is melted and mixed, and emerges from terminal portion 38 as the molten thermoplastic photochromic-dichroic composition. Terminal portion 38 of first extruder 35 is in fluid communication with a die 53 through first conduit 41. The molten thermoplastic photochromic-dichroic composition passes from terminal portion 38 of first extruder 35 through first conduit 41 and into die 53. With some embodiments the molten thermoplastic photochromic-dichroic composition is driven through first conduit 41 by pressure resulting from rotation of the screw or screws within first extruder 35. First conduit 41 can, with some embodiments, include a pump (not shown) that assists with propelling the molten thermoplastic photochromic-dichroic composition through first conduit 41, and into and through die 53. First conduit 41 can, with some embodiments, include a heated jacket (not shown) that serves to maintain the molten thermoplastic photochromic-dichroic composition passing therethrough in a molten state.

With some further embodiments, the photochromic-dichroic compound(s) and optional additives are introduced into first extruder 35 at one or more points, such as further feed ports (not shown), along the length of the heated barrel.

The photochromic-dichroic compound(s) and optional additives can each be so introduced along the length of the heated barrel of first extruder 35 in the form of one or more master batches.

Each further molten thermoplastic composition can, with some embodiments, be formed in one or more further extruders. With further reference to FIG. 1, extrusion assembly 1 further includes a second extruder 44 having a terminal portion 47. The further molten thermoplastic composition is formed, with some embodiments, in second extruder 44. Feed materials that are used to form the further molten thermoplastic composition, such as a second feed composition, can be introduced into second extruder 44 at one or points along the length thereof, such as through feed port 45. Second extruder 44 can be selected from single screw extruders, twin-screw co-rotating extruders, and twin-screw counter rotating extruders. Second extruder 44 can, with some embodiments, include a heated barrel having one or more temperature controlled zones. As the second feed composition passes through the heated zones of second extruder 44 it is melted and mixed, and emerges from terminal portion 47 as a further molten thermoplastic composition. Terminal portion 47 of second extruder 44 is in fluid communication with die 53 through second conduit 50. The further molten thermoplastic composition passes from terminal portion 47 of second extruder 44 through second conduit 50 and into die 53. With some embodiments, the further molten thermoplastic composition is driven through second conduit 50 by pressure resulting from rotation of the screw or screws within second extruder 44. Second conduit 50 can, with some embodiments, include a pump (not shown) that assists with propelling the further molten thermoplastic composition through second conduit 44, and into and through die 53. Second conduit 50 can, with some embodiments, include a heated jacket (not shown) that serves to maintain the further molten thermoplastic composition passing therethrough in a molten state.

With some further embodiments, optional additives are introduced into second extruder 44 at one or more points, such as further feed ports (not shown), along the length of the heated barrel. The optional additives can each be so introduced along the length of the heated barrel of second extruder 44 in the form of one or more master batches.

Die 53 serves to form the molten thermoplastic composition(s) passing therethrough into a molten stream that is in the form of a molten extrudate that includes at least a first layer that includes the molten thermoplastic photochromic-dichroic composition. With some embodiments, the die includes one or more filters that at least one molten thermoplastic composition passes through before exiting the die. The filter(s) within the die serve, with some embodiments, to remove particles, such as resin gel particles, from the molten thermoplastic composition(s) passing there-through. The molten extrudate further includes one or more further molten layers, in which each further molten layer independently includes a further molten thermoplastic composition.

Die 53 includes one or more internal channels (not shown) that are in fluid communication with an exit aperture, such as an exit slot (not visible in FIG. 1) from which the molten extrudate emerges. With reference to FIG. 1 and FIG. 2, a molten extrudate 17 is depicted as emerging from die 53. Molten extrudate 17 is a multi-layered extrudate having three separate layers. Molten extrudate 17 includes a first molten layer 29 that includes the molten thermoplastic photochromic-dichroic composition. The first molten layer 29 of molten extrudate 17 is interposed between two separate further molten layers (26 and 32) that define exterior surfaces of molten extrudate 17. With the non-limiting embodiment depicted in FIG. 1 and FIG. 2, the two separate further molten layers (26 and 32) each include the same further molten thermoplastic composition that is formed in second extruder 44. Die 53 includes interior channels (not shown) that serve to split the further molten thermoplastic composition formed in second extruder 44 into two separate further molten streams that form the exterior layers (26 and 32) of molten extrudate 17.

With the method of the present invention, the molten stream (or molten extrudate) is passed between and in contact with both a rotating roll and a continuous belt that is moving. The rotating roll rotates in a first direction, the continuous belt moves in a second direction, and the first direction and the second direction each correspond to a same relative direction.

With reference to FIG.1, and for purpose of non-limiting illustration, the molten stream, in the form of molten extrudate 17 is passed between and in contact with both a rotating roll 11 and a continuous belt 14 that is moving. Rotating roll 11 rotates in a first direction depicted by arcuate arrow 59, and continuous belt 14 moves in a second direction depicted by arrow 56. First direction 59 of roll 11 and second direction 56 of continuous belt 14 each correspond to a same relative direction depicted by arrow 62. Roll 11 and continuous belt 14 each move in the same relative direction 62, and do not move counter to each other, with some embodiments of the present invention.

In accordance with some embodiments of the present invention, the continuous belt provides substantially uniform pressure to the molten stream as the molten stream passes between and in contact with both of the rotating roll and the continuous belt. The continuous belt provides, with some embodiments, substantially uniform pressure over the width of the molten stream and/or the length of the molten stream, as the molten stream passes between and in contact with both of the rotating roll and the continuous belt. In accordance with some embodiments, the continuous belt provides substantially uniform pressure over both the width of the molten stream and the length of the molten stream, as the molten stream passes between and in contact with both of the rotating roll and the continuous belt. With some further embodiments, the continuous belt provides substantially uniform pressure over (or as between) any two points of the molten stream, as the molten stream passes between and in contact with both of the rotating roll and the continuous belt.

The pressure imparted by the continuous belt can be determined, with some embodiments, by positioning one or more contact pressure sensors concurrently or consecutively to various positions on the exterior surface of the roll, and then positioning the roll and the continuous belt such that the contact sensor(s) reside compressively therebetween. The contact pressure sensors can, with some embodiments, be imbedded within an elastomeric polymer sheet that is temporarily positioned over at least a portion of the roll, such that the elastomeric polymer sheet provides a substantially uniform thickness between the roll and the continuous belt. The contact pressure measurements can be obtained statically (with the roll and belt not moving) or dynamically (with the roll and continuous belt both moving). With some embodiments, the contact pressure measurements can be obtained in the presence or absence of the molten stream passing between the roll and the continuous belt. The pressure measurements over various points on the exterior surface of the roll can then be compared.

With some embodiments, the term "substantially uniform pressure" means that the pressure between any two points on the exterior surface of the roll (residing between the roll and the continuous belt) varies by less than or equal to 1 percent, or less than or equal to 0.5 percent, or less than or equal to 0.25 percent, or less than or equal to 0.15 percent, or less than or equal to 0.1 percent, or less than or equal to 0.05 percent, or from 0 percent to any of these recited upper percent values. Correspondingly the substantially uniform pressure provided by the continuous belt to the molten stream varies by less than or equal to 1 percent, or less than or equal to 0.5 percent, or less than or equal to 0.25 percent, or less than or equal to 0.15 percent, or less than or equal to 0.1 percent, or less than or equal to 0.05 percent, or from 0 percent to any of these recited upper percent values, relative to (or as between) any two points on the molten stream (residing between the roll and the continuous belt).

In accordance with some embodiments, the photochromic-dichroic film produced by the method of the present invention has substantially uniform thickness. The photochromic-dichroic film can have substantially uniform thickness across any width thereof and/or along any length thereof. With some embodiments, the photochromic-dichroic film has substantially uniform thickness across both any width thereof and along any length thereof. The term "substantially uniform thickness" means, with some embodiments, that the thickness between any two points on the photochromic-dichroic film varies by less than or equal to 5 percent, less than or equal to 2.5 percent, less than or equal to 2.0 percent, less than or equal to 1.5 percent, less than or equal to 1.0 percent, less than or equal to 0.5 percent, less than or equal to 0.25 percent, less than or equal to 0.2 percent, less than or equal to 0.15 percent, less than or equal to 0.1 percent, or less than or equal to 0.05 percent. While the variance in thickness of the photochromic-dichroic film can be 0 percent, with some embodiments it is greater than 0 percent, such as between greater than 0 percent and less than or equal to any of the previously recited upper percent values. The thickness of the photochromic-dichroic film can be measured with art-recognized devices including, but not limited to, contact gauges and non-contact gauges.

The photochromic-dichroic films prepared in accordance with some embodiments of the present invention can, with some embodiments, have a thickness of from 1 micrometers to 1000 micrometers, or from 2 micrometers to 400 micrometers, or from 3 micrometers to 200 micrometers, or from 5 micrometers to 50 micrometers, inclusive of the recited values.

Each layer of the photochromic-dichroic films prepared in accordance with some embodiments of the present invention can independently have a thickness of from 0.25 micrometers to 1000 micrometers, or from 0.5 micrometers to 200 micrometers, or from 0.75 micrometers to 100 micrometers, or from 1 micrometers to 20 micrometers, inclusive of the recited values.

In accordance with some embodiments, the rotating roll has an exterior surface, and the continuous belt has an exterior surface. A portion of the exterior surface of the rotating roll and a portion of the exterior surface of the continuous belt are in facing opposition to each other. Correspondingly, the molten stream passes between and in contact with both of the portion of the exterior surface of the rotating roll and the portion of said exterior surface of the continuous belt that are in facing opposition to each other.

For purposes of non-limiting illustration and with reference to FIG. 2, rotating roll 11 has an exterior surface 68, and continuous belt 14 has an exterior surface 71. A portion of exterior surface 68 of rotating roll 11 and a portion of exterior surface 71 of continuous belt 14 are in facing opposition to each other. A portion of exterior surface 68 of roll 11 (represented by double-headed arcuate arrow 74) and a portion of exterior surface 71 of continuous belt 14 (represented by double-headed arcuate arrow 77) are in facing opposition relative to each other. The molten stream, represented by molten extrudate 17, passes between and in contact with both of the portion 74 of exterior surface 68 of rotating roll 11 and the portion 77 of exterior surface 71 of continuous belt 14 that are in facing opposition to each other.

The continuous belt apparatus used in the method of the present invention can be moved linearly and continuously by art-recognized methods. With some embodiments, an interior surface of the continuous belt is moved linearly over and in contact with at least three rollers, at least one of which can be rotatively coupled to a motor (not shown). Each roller can be independently positionable so as to adjust the amount of the exterior surface of the rotating roll that is in facing opposition with the exterior surface of the continuous belt. With further reference to FIG. 2, interior surface 89 of continuous belt 14 is moved linearly over three rollers, 80, 83, and 86. One or more of rollers 80, 83, and 86 can be rotatively coupled to a motor that rotates the roller, thereby resulting in linear motion of continuous belt 14. In addition

or alternatively to the continuous belt be reversibly positionable (e.g., by one or more positionable rollers), the axis of rotation (e.g., 92) of the rotating roll (e.g., rotating roll 11), with some embodiments, can be reversibly positionable relative to the continuous belt (e.g., 14). With some embodiments, the axis of rotation of the rotating roll is substantially stationary, relative to the continuous belt.

With some embodiments, at least 10 percent and less than or equal to 75 percent (or at least 20 percent and less than or equal to 70 percent, or at least 30 percent and less than or equal to 60 percent) of the exterior surface of the rotating roll is in facing opposition with the exterior surface of the continuous belt. For purposes of non-limiting illustration and with reference to FIG. 2, at least 10 percent and less than or equal to 75 percent of exterior surface 68 of rotating roll 11 is in facing opposition with exterior surface 71 of continuous belt 14, with some embodiments of the method of the present invention.

In accordance with some embodiments of the present invention, the exterior surface of the rotating roll and the exterior surface of the continuous belt each independently have a surface roughness value (Ra) of less than or equal to 50 micrometers, or less than or equal to 40 micrometers, or less than or equal to 30 micrometers, or less than or equal to 25 micrometers, or less than or equal to 20 micrometers, or less than or equal to 15 micrometers, or less than or equal to 10 micrometers, or less than or equal to 5 micrometers, or from a value that is greater than 0 micrometers, such as 0.01 micrometers, to any of the previously recited upper values.

Each exterior surface of the photochromic-dichroic film, in accordance with some embodiments, independently have a surface roughness value (Ra) of less than or equal to 50 micrometers, or less than or equal to 40 micrometers, or less than or equal to 30 micrometers, or less than or equal to 25 micrometers, or less than or equal to 20 micrometers, or less than or equal to 15 micrometers, or less than or equal to 10 micrometers, or less than or equal to 5 micrometers, or from a value that is greater than 0 micrometers, such as 0.01 micrometers, to any of the previously recited upper values. For purposes of non-limiting illustration, and with reference to FIG.1, photochromic-dichroic film 23 has a first exterior surface 95' and a second exterior surface 98', each of which can, with some embodiments, have a surface roughness value (Ra) of less than or equal to 50 micrometers.

The exterior surface of the rotating roll and the exterior surface of the continuous belt, with some embodiments, are each independently defined by an elastomeric polymer, a metal, and combinations thereof. Examples of elastomeric polymers that can define the exterior surface of the rotating roll and/or the exterior surface of the continuous belt include, but are not limited to, silicone rubber, polytetrafluoroethylene, polypropylene, and combinations thereof.

The exterior surface of the rotating roll and the exterior surface of the continuous belt, in accordance with some embodiments, are each independently defined by a metal. In accordance with some further non-limiting embodiments, the exterior surface of the rotating roll and the exterior surface of the continuous belt are each independently defined by stainless steel. In accordance with some further embodiments, the exterior surface of the rotating roll and the exterior surface of the continuous belt are each independently defined by nickel coated stainless steel. For purposes of non-limiting illustration, and with reference to FIG. 2, rotating roll 11 has an exterior surface 68, and continuous belt 14 has an exterior surface 71.

The rotating roll, in accordance with some embodiments, is rotated at a circumferential velocity, the continuous belt is moved at a linear velocity, and the circumferential velocity of the rotating roll and the linear velocity of the continuous belt are substantially equivalent. The circumferential velocity of the rotating roll is the velocity at which the exterior surface (such as exterior surface 68 of rotating roll 11) of the rotating roll is rotated. With some embodiments, maintaining the circumferential velocity of the rotating roll and the linear velocity of the continuous belt substantially equivalent minimizes the amount of stresses introduced into the molten stream as it passes between the rotating roll and the continuous belt, and correspondingly results in the formation of a photochromic-dichroic film having reduced or minimal optical distortion. The circumferential velocity of the rotating roll and the linear velocity of the continuous belt, with some embodiments, can each be measured directly, such as with a laser.

With regard to the circumferential velocity of the rotating roll and the linear velocity of the continuous belt, the term "substantially equivalent" means, with some embodiments, that the velocities thereof vary by less than or equal to 10 percent, or less than or equal to 5 percent, or less than or equal to 1 percent, or less than or equal to 0.5 percent, or less than or equal to 0.1 percent. The circumferential velocity of the rotating roll and the linear velocity of the continuous belt can, with some embodiments, be equivalent, in which case the variance therebetween of 0 percent, or they can vary by a percentage that is 0 percent, or greater than 0 percent (such as 0.01 percent, or 0.02 percent, or 0.05 percent) to one of the previously recited upper percentage values.

With the method of the present invention, the molten stream includes at least a first molten layer that includes (or is formed from) the molten thermoplastic photochromic-dichroic composition. The first molten layer of the molten stream can be a single layer first molten layer, or a multi-layer first molten layer in which each layer thereof independently includes (or is formed from) one or more molten thermoplastic photochromic-dichroic compositions. In accordance with some embodiments, the first molten layer of the molten stream is a single layer first molten layer.

The molten stream further includes at least one further molten layer, in which each further molten layer independently includes (or is independently formed from) a further molten thermoplastic composition, as described previously

herein. Each further molten layer of the molten stream can independently be a single layer further molten layer or a multi-layer further molten layer in which each layer thereof independently includes (or is formed from) one or more further molten thermoplastic compositions. With some embodiments, each further molten layer of the molten stream is a single layer further molten layer.

With some embodiments of the method of the present invention, each molten layer of the molten stream corresponds to a layer (or solid layer) of the photochromic-dichroic film that is obtained from between the rotating roll and the continuous belt. The first molten layer of the molten stream corresponds to the photochromic-dichroic layer (or solid photochromic-dichroic layer) of the resulting photochromic-dichroic film. Each further molten layer of the molten stream corresponds to a further layer (or further solid layer) of the resulting photochromic-dichroic film. With some embodiments, each further molten layer of the molten stream is free of photochromic-dichroic compounds, and correspondingly each further layer (or each further solid layer) of the resulting photochromic-dichroic film is free of photochromic-dichroic compounds.

With some embodiments of the method of the present invention, the molten stream includes the first molten layer, a first further molten layer, and a second further molten layer. The first further molten layer and the second further molten layer each independently include (or are each independently formed from) one or more further molten thermoplastic compositions (and correspondingly one or more further molten layers). With some embodiments, the first molten layer is interposed between the first further molten layer and the second further molten layer. Correspondingly, and with some embodiments of the method of the present invention, the resulting photochromic-dichroic film includes a photochromic-dichroic layer (or first solid layer) that is interposed between a first further layer (or first further solid layer) and a second further layer (or second further solid layer).

For purposes of non-limiting illustration and with reference to FIG. 1 and FIG. 2, molten stream 17 includes a first molten layer 29 that is formed from the molten thermoplastic photochromic-dichroic composition, such as in extruder 35. Molten stream 17, as depicted, also includes a first further molten layer 26 and a second further molten layer 32, that are each independently formed from a further molten thermoplastic composition, such as in further extruder 44. First further molten layer 26 has (or defines) a first exterior surface 95 of molten stream / extrudate 17. Second further molten layer 32 has (or defines) a second exterior surface 98 of molten stream / extrudate 17.

With further reference to FIG. 1 and FIG. 2, molten stream 17 passes between rotating roll 11 and continuous belt 14, which results in the formation of a photochromic-dichroic film 23 that is obtained from between rotating roll 11 and continuous belt 14. The photochromic-dichroic film 23 is substantially solid at room temperature, such as at about 25°C. Photochromic-dichroic film 23, as depicted in the drawing figures, includes a photochromic-dichroic layer 29' (or first solid layer 29') that is interposed between a first further layer 26' and a second further layer 32'. The photochromic-dichroic layer 29' of photochromic-dichroic film 23 corresponds to (and is formed from) first molten layer 29 of molten stream 17. The first further layer 26' and the second further layer 32' of photochromic-dichroic film 23 correspond respectively to (and are respectively formed from) the first further molten layer 26 and the second further molten layer 32 of molten stream 17. Further correspondingly, first exterior surface 95 of first further molten layer 26 of molten stream 17 corresponds to first exterior surface 95' of first further layer 26 of photochromic-dichroic film 23, and second exterior surface 98 of second further molten layer 32 of molten stream 17 corresponds to first exterior surface 98' of second further layer 32 of photochromic-dichroic film 23.

The molten stream (or molten extrudate) with some embodiments of the present invention has an elevated temperature, such as from 150°C to 400°C, such as from 200°C to 350°C, or from 250°C to 325°C, inclusive of the recited values. To assist with conversion of the molten stream to a solid photochromic-dichroic film, the rotating roll with some embodiments is cooled to a temperature that is less than or equal to the melting or deformation temperature of the photochromic-dichroic film, such as less than 150°C, or less than 100°C, or less than 50°C, or less than 25°C. One or more heat transfer fluids can, with some embodiments, be introduced into one or more interior chambers of the rotating roll. With some embodiments, the rotating roll has a plurality of surface area zones that are each maintained at a different temperature. For purposes of non-limiting illustration and with reference to FIG. 2, the portion of the exterior surface of rotating roll 11 from the point where molten extrudate 17 contacts the exterior surface of rotating roll 11 through portion 74 thereof can be maintained at a higher temperature than the rest of the exterior surface of rotating roll 11, which can be maintained at one or more temperatures that are less than the melting or deformation temperature of photochromic-dichroic film 23. With some embodiments, the film removed from rotating roll 11 or optional take-up roll 20 has a temperature that is greater than or equal to the melting or deformation temperature of photochromic-dichroic film 23, and such film is subjected to one or more further cooling steps, such as art-recognized quench cooling (not depicted), which results in formation of photochromic-dichroic film 23.

The photochromic-dichroic film is formed from the molten stream (or molten extrudate) with the method of the present invention. Correspondingly, each layer of the photochromic-dichroic film is formed from a corresponding molten layer of the molten stream. With some embodiments, the photochromic-dichroic film is formed from the molten stream (or molten extrudate) by cooling the molten stream to a temperature that is below the melting point of the molten stream, such as room temperature. Correspondingly each layer of the photochromic-dichroic film is formed by cooling of each

corresponding molten layer of the molten stream to a temperature that is below the melting point of each such corresponding molten layer, such as room temperature. The photochromic-dichroic layer is formed from the first molten layer of the molten stream by cooling the first molten layer to a temperature that is below its melting point. Each further layer of the photochromic-dichroic film is formed by cooling the corresponding further molten layer of the molten stream to a temperature that is below the melting point of each such corresponding further molten layer.

To assist with obtaining the photochromic-dichroic film from between the rotating roll and the continuous belt, the extrusion assembly can further include, with some embodiments, one or more take-up rolls that serve to remove the photochromic-dichroic film from the rotating roll. Alternatively or in addition to one or more take-up rolls, one or more blades (not shown) can be provided, with some embodiments, in contact with a portion of exterior surface 68 of rotating roll 14, such as in the vicinity of arcuate arrow 59, for purposes of removing photochromic-dichroic film 23 from rotating roll 14.

For purposes of non-limiting illustration and with reference to FIG. 1 and FIG. 2, extrusion assembly 1 further includes an optional take-up roll 20. Take-up roll 20 rotates in a direction that is counter to that of rotating roll 11, as indicated by arcuate arrow 101. With some embodiments, take-up roll 20 rotates at a circumferential velocity that is substantially the same as that of rotating roll 11. Take-up roll 20 is positioned adjacent to but does not abut rotating roll 11. Photochromic-dichroic film 23 is transferred by contact from rotating roll 11 to take-up roll 20, and then is removed from take-up roll 20 and forwarded in the direction indicated by arrow 65 for further processing, such as collection on a collection roll (not shown). The surface of take-up roll 20 can, with some embodiments, be temperature controlled by, for example, the introduction of one or more heat exchange fluids into one or more interior chambers thereof.

With some embodiments of the present invention, the photochromic-dichroic film is further processed and/or incorporated into articles of manufacture, such as transparencies and lenses, such as ophthalmic lenses, substantially immediately after formation. With some further embodiments, the photochromic-dichroic film is stored and then later further processed and/or incorporated into articles of manufacture. Examples of further processing, that the photochromic-dichroic films prepared in accordance with the method of the present invention can be subjected to, include, but are not limited to: cutting; shaping; unilateral stretching; bilateral stretching; imbibing with one or more photochromic compounds, one or more photochromic-dichroic compounds, and/or one or more static tints or dyes; separation of at least one further layer from the photochromic-dichroic layer; and combinations of two or more thereof.

Imbibing one or more photochromic compounds, one or more photochromic-dichroic compounds, and/or one or more static tints or dyes into the photochromic-dichroic film can involve, with some embodiments, applying a solution or mixture that includes a carrier fluid (or solvent) and one or more photochromic-dichroic compounds, and/or one or more static tints or dyes to a surface of the photochromic-dichroic film with or without heating. The applied solution or mixture can be left in contact with the surface of the photochromic-dichroic film for a period of time (during which time some of the compounds are imbibed into the film), followed by washing of excess material off of the surface of the film.

In accordance with some embodiments, the method of the present invention further includes: collecting the photochromic-dichroic film on a collection roll thereby forming a wound roll; and optionally storing the wound roll. With reference to FIG. 1 and FIG. 2, the collection roll (not shown), and correspondingly the wound roll (not shown), is positioned, with some embodiments, further downstream in the process relative to the extrusion assembly 1, along the direction indicated by arrow 65.

In accordance with some further embodiments, the photochromic-dichroic film includes a photochromic-dichroic layer that is interposed between a first further layer and a second further layer (as described previously herein), and the method of the present invention further includes: collecting the photochromic-dichroic film on a collection roll thereby forming a wound roll; and optionally storing the wound roll. The first further layer defines a first exterior surface of the photochromic-dichroic film, and the second further layer defines a second exterior surface of the photochromic-dichroic film. The first exterior surface and/or the second exterior surface include micro-grooves. The micro-grooves are dimensioned, with some embodiments, to allow gas (such as air) to escape from between overlapping / abutting layers of the photochromic-dichroic film residing on the wound roll.

A separate interlayer is interposed between overlapping layers of the photochromic-dichroic film residing on the wound roll, with some embodiments. The interlayer, with some embodiments, can be composed of paper. The interlayer has a thickness of from 0.01 to 5 micrometers, with some embodiments.

Allowing the escape of gas from between overlapping layers of the wound roll results in the photochromic-dichroic film having reduced or minimized optical distortion. While not intending to be bound by any theory, it is believed that the presence of gas (such as in the form of gas bubbles) trapped between overlapping / abutting layers of the wound roll can result in the introduction of physical stresses and/or distortions into one or more layers of the photochromic-dichroic film, such as into the photochromic-dichroic layer thereof. The presence of such physical distortions can result in an undesirable level of optical distortion within the final photochromic-dichroic film, as will be described in further detail herein. With some embodiments, at least some of the micro-grooves are in fluid communication with an edge of the further layer in which the micro-grooves reside, which allows gas, if any, entrapped between overlapping / abutting layers of the wound roll to escape from between the overlapping / abutting layers.

For purposes of non-limiting illustration and with reference to FIG. 1, first further layer 26' of photochromic-dichroic film 23 defines a first exterior surface 95' of photochromic-dichroic film 23, and second further layer 32' of photochromic-dichroic film 23 defines a second exterior surface 98' of photochromic-dichroic film 23. First exterior surface 95' and/or second exterior surface 98' can each independently include micro-grooves (not shown). The micro-grooves can be present in the form of one or more repeating patterns, one or more random patterns, and combinations thereof.

The micro-grooves can be formed in the exterior surface of the first further layer and/or second further layer by methods including, but not limited to, etching (such as chemical etching, and/or actinic radiation etching, such as laser etching and/or energy beam etching), and/or imprinting. Imprinting of the micro-grooves can be achieved, with some embodiments, by contacting at least one exterior surface of the molten stream with a roll and/or continuous belt having a reverse image of the micro-groove pattern in a contact surface thereof. With some embodiments, the exterior surface of the continuous belt and/or the exterior surface of the rotating roll each independently have a micro-groove reverse image therein. Alternatively or in addition to the continuous belt and/or the rotating roll, one or more additional rolls and/or continuous belts (not shown) can be brought into contact with an exterior surface of the molten stream and/or the photochromic-dichroic film so as to impart one or more micro-groove patterns in the first and/or second exterior surfaces thereof. When brought into contact with an exterior surface of a further layer of the photochromic-dichroic film, the additional roll(s) and/or additional continuous belt(s) can be heated to assist with imprinting of the micro-groove pattern into the exterior surface.

The method of the present invention further includes, with some embodiments: removing each further layer from the photochromic-dichroic layer; and retaining the photochromic-dichroic layer alone, in which case the resulting final photochromic-dichroic film is defined by the photochromic-dichroic layer. Each further layer can be removed from the photochromic-dichroic layer, with some embodiments, by methods including but not limited to: temperature reduction, such as rapid temperature reduction or cold-shock treatment; solvent swelling; solvent dissolution; unilateral stretching; bilateral stretching; physically pulling a further layer and the photochromic-dichroic layer away from each other; and combinations of two or more thereof.

The further layer or further layers of the photochromic-dichroic film serve, with some embodiments, as one or more protective layers that protect the underlying and/or interior and/or sandwiched photochromic-dichroic layer from damage, which can result in an undesirable level of optical distortion therein. With some embodiments, formation and/or processing of the photochromic-dichroic film can result in the introduction of stresses and/or defects therein, which can result in an undesirable increase in optical distortion. Defects and/or stresses can, with some embodiments, be introduced into the photochromic-dichroic film as the molten stream is passed compressively between the rotating roll and the continuous belt. Alternatively or in addition thereto, defects and/or stresses can be introduced into the photochromic-dichroic film in conjunction with drawing it off of the rotating roll and/or collecting it on a collection roll. Formation and/or post-formation processing defects and/or stresses, if any, can be assumed and/or blocked by the exterior/outer further layer(s), thereby minimizing or preventing the introduction/impact of such defects into/on the photochromic-dichroic layer.

In accordance with some further embodiments, the photochromic-dichroic film includes a photochromic-dichroic layer that is interposed between a first further layer and a second further layer (as described previously herein), and the method of the present invention further includes: removing, from the photochromic-dichroic layer, the first further layer and the second further layer; and retaining said photochromic-dichroic layer, in which case the retained photochromic-dichroic layer defines the photochromic-dichroic film.

When the photochromic-dichroic film includes a photochromic-dichroic layer that is interposed between a first further layer and a second further layer (as described previously herein), the method of the present invention further includes, with some embodiments: subjecting the photochromic-dichroic film to stretching selected from unilateral stretching and bilateral stretching, in which the stretching results in separation of the first further layer from the photochromic-dichroic layer, and separation of the second further layer from the photochromic-dichroic layer; removing, from the photochromic-dichroic layer, the first further thermoplastic layer and the second further thermoplastic layer; and retaining the photochromic-dichroic layer, in which the retained photochromic-dichroic layer defines the photochromic-dichroic film.

The photochromic-dichroic film can be subjected to unilateral stretching or bilateral stretching substantially immediately after formation of the photochromic-dichroic film, or after collection and optional storage thereof (such as collection on a collection roll followed by optional storage of the wound roll).

The various layers of the photochromic-dichroic film formed in accordance with the method of the present invention can, with some embodiments, each independently include one or more thermoplastic polymers selected from those classes and examples recited previously herein. In accordance with some embodiments, the molten stream includes a first molten layer that is interposed between a first further molten layer and a second further molten layer. Correspondingly, and in accordance with some embodiments, the photochromic-dichroic film includes a photochromic-dichroic layer that is interposed between a first further layer and a second further layer.

The thermoplastic polymers of the first and second further layers and the photochromic-dichroic layer of the photochromic-dichroic film are each independently selected, with some embodiments, such that the first and second further layers separate from the photochromic-dichroic layer when the photochromic-dichroic film is subjected to unilateral

and/or bilateral stretching. With some embodiments, the photochromic-dichroic layer includes a thermoplastic block copolymer, and the first further layer and the second further layer each are free of thermoplastic block copolymers. In accordance with some further embodiments, the photochromic-dichroic layer includes a thermoplastic block copolymer selected from, for example, thermoplastic poly(ether-amide) block copolymers, thermoplastic poly(ester-ether) block copolymers, thermoplastic poly(ether-urethane) block copolymers, thermoplastic poly(ester-urethane) block copolymers, thermoplastic poly(ether-urea) block copolymers, and combinations of two or more thereof. The first further layer and the second further layer, with some embodiments, are each free of thermoplastic block copolymers, and each independently include a thermoplastic polymer selected from thermoplastic polyurethane, thermoplastic polycarbonate, thermoplastic polyester, thermoplastic polyolefin (such as thermoplastic polyalkylene, thermoplastic vinylacetate, and thermoplastic alkylene-vinyl acetate copolymer), thermoplastic(meth)acrylate, thermoplastic polyamide, thermoplastic polysulfone, and combinations of two or more thereof. In accordance with additional further embodiments, the first further layer and the second further layer are each free of thermoplastic block copolymers, and each independently include a thermoplastic random copolymer selected from thermoplastic poly($C_2$-$C_8$ linear or branched alkylene-vinyl acetate) copolymer, such as poly(ethylene-vinyl acetate) copolymer.

The first molten layer of the molten stream includes, with some embodiments, a molten thermoplastic block copolymer, such as a molten thermoplastic poly(ether-amide) block copolymer, and the first further molten layer and the second further molten layer each independently include a molten thermoplastic poly(alkylene-vinyl acetate) copolymer, such as a molten thermoplastic poly($C_2$-$C_8$ linear or branched alkylene-vinyl acetate) copolymer, such as a molten thermoplastic poly(ethylene-vinyl acetate) copolymer. The first further molten layer and the second further molten layer, with some further embodiments, are each free of a molten thermoplastic block copolymer.

The photochromic-dichroic film that is formed in accordance with some embodiments of the present invention includes: a photochromic-dichroic layer that includes at least one thermoplastic block copolymer, such as a thermoplastic poly(ether-amide) block copolymer; a first further layer that includes at least one thermoplastic poly(alkylene-vinyl acetate) copolymer, such as a thermoplastic poly($C_2$-$C_8$ linear or branched alkylene-vinyl acetate) copolymer, such as a thermoplastic poly(ethylene-vinyl acetate) copolymer; and a second further layer that includes at least one thermoplastic poly(alkylene-vinyl acetate) copolymer, such as a thermoplastic poly($C_2$-$C_8$ linear or branched alkylene-vinyl acetate) copolymer, such as a thermoplastic poly(ethylene-vinyl acetate) copolymer, in which the photochromic-dichroic layer is interposed between the first and second further layers. The first further layer and the second further layer, with some further embodiments, are each free of a thermoplastic block copolymer.

Examples of thermoplastic poly(ether-amide) block copolymers that can be used with some embodiments of the method of the present invention include, but are not limited to, PEBAX thermoplastic block copolymers that are commercially available from Arkema Inc., such as PEBAX 5533 SA 01 thermoplastic poly(ether-amide) block copolymer. Examples of thermoplastic poly(ethylene-vinyl acetate) copolymer that can be used with some embodiments of the method of the present invention include, but are not limited to, EVATANE thermoplastic poly(ethylene-vinyl acetate) copolymers that are commercially available from Arkema Inc., such as EVATANE 20-20 thermoplastic poly(ethylene-vinyl acetate) copolymer.

The photochromic-dichroic film includes a photochromic-dichroic layer and at least one further layer and, with some embodiments, the photochromic-dichroic layer has a thickness that is greater than each further layer. With some embodiments, the photochromic-dichroic layer has a thickness that is greater than each further layer by a multiple of: at least 1.2, or at least 1.5, or at least 2.0, or at least 2.5, or at least 3.0; less than or equal to 50, or less than or equal to 20, or less than or equal to 15, or less than or equal to 12, or less than or equal to 10; and any combination of such recited upper and lower threshold values, inclusive of the recited values.

With some embodiments, the photochromic-dichroic film includes a photochromic-dichroic layer and at least one further layer, in which: the photochromic-dichroic layer has a thickness of from 50 to 500 micrometers, or from 75 to 300 micrometers, or from 100 to 250 micrometers; and each further layer independently has a thickness of from 1 to 45 micrometers, or from 5 to 40 micrometers, or from 10 to 30 micrometers, in each case inclusive of the recited values.

Photochromic-dichroic films prepared in accordance with the method of the present invention have reduced or minimal optical distortion, compared to photochromic-dichroic films prepared by other methods, such as, but not limited to, methods that include passing a molten stream or extrudate between two counter-rotating rolls. With some embodiments, the level of optical distortion is determined subjectively by visual inspection of the photochromic-dichroic film. Visual inspection of the photochromic-dichroic film is conducted, with some embodiments, using a lens inspection apparatus that includes a source of illumination, such as an arc lamp, that is positioned above a table having a neutral color, such as white. The source of illumination is positioned so as to direct illumination downward toward the underlying table, and, with some embodiments, is vertically adjustable. The photochromic-dichroic film is positioned on the table or between the table and the source of illumination, and is typically observed visually with the eyes of the observer positioned above the source of illumination. Optical distortion defects that can be visually observed with such a lens inspection apparatus include, but are not limited to, shadows, swirls, reflection, refraction, interference, diffraction, and combinations of two or more thereof. With some embodiments, the photochromic-dichroic film, that is visually inspected

for optical distortion defects, is defined by the photochromic-dichroic layer alone in the absence of one or more further layers. An example of a lens inspection apparatus that can be used to visually inspect photochromic-dichroic films, such as those prepared in accordance with the method of the present invention, is a Lens Inspection System (Arc Lamp) Model BTX75LISII, which is commercially available from Practical Systems Inc.

The photochromic-dichroic films prepared in accordance with the method of the present invention are capable of exhibiting photochromic and/or dichroic properties. Depending on the wavelength or range of wavelengths, and/or energy (or strength) of incident electromagnetic energy, the photochromic-dichroic films prepared in accordance with the method of the present invention can provide a variety of photochromic and/or dichroic responses, resulting in a variety of observable colors, color intensities, and/or polarization effects. The photochromic-dichroic compound(s) of the photochromic-dichroic films prepared in accordance with the method of the present invention can each independently undergo any combination of photochromic activation (e.g., conversion to a colored state) and/or dichroic activation (resulting in at least partial linear polarization of incident electromagnetic radiation).

With some embodiments, the photochromic-dichroic compound(s), or at least some thereof, undergoes photochromic activation (e.g., is converted to a colored state) and dichroic activation, such as when the photochromic-dichroic film is exposed to direct sunlight. With some embodiments, the photochromic-dichroic compound(s), or at least some thereof, undergoes photochromic activation (e.g., is converted to a colored state) and/or dichroic activation, when the photochromic-dichroic film is exposed to actinic radiation having a limited range of wavelengths and/or reduced energy, such as when a glass panel, such as an automotive windshield or window, is interposed between the source of actinic radiation and the photochromic-dichroic film. With some further embodiments, the photochromic-dichroic compound(s) undergoes substantially no photochromic activation and substantially no dichroic activation, such as when the photochromic-dichroic film is exposed to ambient indoor light, such as fluorescent light.

The photochromic-dichroic film can, with some embodiments of the present invention, be non-polarizing in a first state (that is, the film will not confine the vibrations of the electric vector of light waves to one direction), and be linearly polarizing in a second state with regard to transmitted radiation. As used herein the term "transmitted radiation" refers to radiation that is passed through at least a portion of an object. Although not limiting herein, the transmitted radiation can be ultraviolet radiation, visible radiation, infrared radiation, or any combination thereof. Thus, according to various non-limiting embodiments of the present invention, the photochromic-dichroic film can be non-polarizing in the first state and linearly polarizing in the second state thereby transmitting linearly polarized ultraviolet radiation, transmitting linearly polarized visible radiation, or a combination thereof in the second state.

According to still other non-limiting embodiments, the photochromic-dichroic film can have a first absorption spectrum in the first state, a second absorption spectrum in the second state, and can be linearly polarizing in both the first and second states.

With some embodiments, the photochromic-dichroic film can have an average dichroic ratio of at least 1.5 in at least one state. With some further embodiments, the photochromic-dichroic film can have an average dichroic ratio ranging from at least 1.5 to 50 (or greater) in at least one state. The term "dichroic ratio" refers to the ratio of the absorbance of radiation linearly polarized in a first plane to the absorbance of radiation linearly polarized in a plane orthogonal to the first plane, in which the first plane is taken as the plane with the highest absorbance. Thus, the dichroic ratio (and the average dichroic ratio which is described below) is an indication of how strongly one of two orthogonal plane polarized components of radiation is absorbed by an object or material, such as the photochromic-dichroic film.

The average dichroic ratio of a photochromic-dichroic film (or layer) that includes a photochromic-dichroic compound can be determined as set forth below. For example, to determine the average dichroic ratio of a photochromic-dichroic layer that includes a photochromic-dichroic compound, a substrate having a photochromic-dichroic layer is positioned on an optical bench and the photochromic-dichroic layer is placed in a linearly polarizing state by activation of the photochromic-dichroic compound. Activation is achieved by exposing the photochromic-dichroic layer to UV radiation for a time sufficient to reach a saturated or near saturated state (that is, a state wherein the absorption properties of the layer do not substantially change over the interval of time during which the measurements are made). Absorption measurements are taken over a period of time (typically 10 to 300 seconds) at 3 second intervals for light that is linearly polarized in a plane perpendicular to the optical bench (referred to as the 0° polarization plane or direction) and light that is linearly polarized in a plane that is parallel to the optical bench (referred to as the 90° polarization plane or direction) in the following sequence: 0°, 90°, 90°, 0° etc. The absorbance of the linearly polarized light by the photochromic-dichroic layer is measured at each time interval for all of the wavelengths tested and the unactivated absorbance (i.e., the absorbance of the coating in an unactivated state) over the same range of wavelengths is subtracted to obtain absorption spectra for the photochromic-dichroic layer in an activated state in each of the 0° and 90° polarization planes to obtain an average difference absorption spectrum in each polarization plane for the coating in the saturated or near-saturated state.

For purposes of non-limiting illustration and with reference to FIG. 3, there is depicted an average difference absorption spectrum (generally indicated character 104) in one polarization plane of a representative a photochromic-dichroic layer. The average absorption spectrum (generally indicated character 107) is the average difference absorption

spectrum obtained for the same photochromic-dichroic layer in the orthogonal polarization plane.

Based on the average difference absorption spectra obtained for the photochromic-dichroic layer, the average dichroic ratio for the photochromic-dichroic layer is obtained as follows. The dichroic ratio of the photochromic-dichroic layer at each wavelength in a predetermined range of wavelengths corresponding to $\lambda_{max\text{-}vis}$ +/- 5 nanometers (generally indicated as character 110 in FIG. 3), wherein $\lambda_{max\text{-}vis}$ is the wavelength at which the layer had the highest average absorbance in any plane, is calculated according to the following equation (Eq. 1):

$$DR_{\lambda i} = Ab^1_{\lambda i} / Ab^2_{\lambda i} \qquad \text{Eq.1}$$

With reference to equation Eq. 1, $DR_{\lambda i}$ is the dichroic ratio at wavelength $\lambda_i$, Ab\i is the average absorption at wavelength $\lambda_i$ in the polarization direction (i.e., 0° or 90°) having the higher absorbance, and $Ab^2_{\lambda i}$ is the average absorption at wavelength $\lambda_i$ in the remaining polarization direction. As previously discussed, the "dichroic ratio" refers to the ratio of the absorbance of radiation linearly polarized in a first plane to the absorbance of the same wavelength radiation linearly polarized in a plane orthogonal to the first plane, wherein the first plane is taken as the plane with the highest absorbance.

The average dichroic ratio ("DR") for the photochromic-dichroic layer is then calculated by averaging the individual dichroic ratios over the predetermined range of wavelengths (i.e., $\lambda_{max\text{-}vis}$ +/- 5 nanometers) according to the following equation (Eq. 2):

$$DR = (\Sigma DR_{\lambda i}) / n_i \qquad \text{Eq. 2}$$

With reference to equation Eq. 2, DR is average dichroic ratio for the layer, $AR_{\lambda i}$ are the individual dichroic ratios (as determined above in Eq. 1) for each wavelength within the predetermined range of wavelengths, and $n_i$ is the number of individual dichroic ratios averaged. A more detailed description of this method of determining the average dichroic ratio is provided in the Examples of United States Patent No. 7,256,921 at column 102, line 38 through column 103, line 15.

With some embodiments, the photochromic-dichroic compound(s) of the photochromic-dichroic layer of the photochromic-dichroic films of the present invention, can each independently be at least partially aligned. As previously discussed, the term "photochromic-dichroic" means displaying both photochromic and dichroic (i.e., linearly polarizing) properties under certain conditions, which properties are at least detectible by instrumentation. Accordingly, "photochromic-dichroic compounds" are compounds displaying both photochromic and dichroic (i.e., linearly polarizing) properties under certain conditions, which properties are at least detectible by instrumentation. Thus, photochromic-dichroic compounds have an absorption spectrum for at least visible radiation that varies in response to at least actinic radiation and are capable of absorbing one of two orthogonal plane polarized components of at least transmitted radiation more strongly than the other. Additionally, as with conventional photochromic compounds discussed herein, the photochromic-dichroic compounds disclosed herein can each independently be thermally reversible. That is, the photochromic-dichroic compounds can each independently switch from a first state to a second state in response to actinic radiation and revert back to the first state in response to thermal energy. As used herein with some embodiments, the term "compound" means a substance formed by the union of two or more elements, components, ingredients, or parts and includes, without limitation, molecules and macromolecules (for example polymers and oligomers) formed by the union of two or more elements, components, ingredients, or parts.

For purposes of non-limiting illustration, the photochromic-dichroic layer of the photochromic-dichroic films of the present invention can have a first state having a first absorption spectrum, a second state having a second absorption spectrum that is different from the first absorption spectrum, and can be adapted to switch from the first state to the second state in response to at least actinic radiation and to revert back to the first state in response to thermal energy. Further, the photochromic-dichroic compound(s) can be dichroic (i.e., linearly polarizing) in one or both of the first state and the second state. For example, although not required, the photochromic-dichroic compound(s) can each independently be linearly polarizing in an activated state and non-polarizing in the bleached or faded state (the not activated or unactivated state). As used herein, the term "activated state" refers to a photochromic-dichroic compound when exposed to sufficient actinic radiation to cause at least a portion of the photochromic-dichroic compound to switch from a first state to a second state. Further, although not required, the photochromic-dichroic compound(s) can be dichroic in both the first and second states. While not limiting herein, for example, the photochromic-dichroic compound(s) can each linearly polarize visible radiation in both the activated state and the bleached state. Further, the photochromic-dichroic compound(s) can linearly polarize visible radiation in an activated state, and can linearly polarize UV radiation in the bleached state.

Although not required, according to various non-limiting embodiments of the present invention, the photochromic-dichroic compound(s), of the photochromic-dichroic layer of the photochromic-dichroic film, can have an average dichroic ratio of at least 1.5 in an activated state as determined according to the DICHROIC RATIO TEST METHOD. According to other non-limiting embodiments of the present invention, the photochromic-dichroic compound(s) can have an average dichroic ratio greater than 2.3 in an activated state as determined according to the DICHROIC RATIO TEST METHOD. According to still other non-limiting embodiments, the at least partially aligned photochromic-dichroic compound(s), of the photochromic-dichroic layer, can have an average dichroic ratio ranging from 1.5 to 50 in an activated state, as determined according to the DICHROIC RATIO TEST METHOD. In accordance with other non-limiting embodiments, the at least partially aligned photochromic-dichroic compound(s), of the photochromic-dichroic layer, can have an average dichroic ratio ranging from 4 to 20, or an average dichroic ratio ranging from 3 to 30, or an average dichroic ratio ranging from 2.5 to 50 in an activated state as determined according to the DICHROIC RATIO TEST METHOD. More typically, however, the average dichroic ratio of the at least partially aligned photochromic-dichroic compound(s) can be any average dichroic ratio that is sufficient to impart the desired properties to the photochromic-dichroic films of the present invention. Non-limiting examples of suitable photochromic-dichroic compounds from which the photochromic-dichroic compound(s) of the photochromic-dichroic layer can be selected, with some embodiments, are described in detail herein below.

The DICHROIC RATIO TEST METHOD for determining the average dichroic ratio of a photochromic-dichroic compound is essentially the same as the method used to determine the average dichroic ratio of a photochromic-dichroic layer containing such a photochromic-dichroic compound, except that, instead of measuring the absorbance of a coated substrate, a cell assembly containing an aligned liquid crystal material and the particular photochromic-dichroic compound is tested. With some embodiments, the DICHROIC RATIO TEST METHOD is conducted in accordance with the procedure described in further detail in the examples herein.

With some embodiments, and for purposes of non-limiting illustration, the cell assembly can include two opposing glass substrates that are spaced apart by 20 microns +/- 1 micron. The substrates are sealed along two opposite edges to form a cell. The inner surface of each of the glass substrates is coated with a polyimide coating, the surface of which has been at least partially ordered by rubbing. Alignment of the photochromic-dichroic compound is achieved by introducing the photochromic-dichroic compound and the liquid crystal medium into the cell assembly, and allowing the liquid crystal medium to align with the rubbed polyimide surface. Once the liquid crystal medium and the photochromic-dichroic compound are aligned, the cell assembly is placed on an optical bench (which is described in detail in the Examples) and the average dichroic ratio is determined in the manner previously described for the coated substrates, except that the unactivated absorbance of the cell assembly is subtracted from the activated absorbance to obtain the average difference absorption spectra.

While dichroic compounds are capable of preferentially absorbing one of two orthogonal components of plane polarized light, it is generally necessary to suitably position or arrange the molecules of a dichroic compound in order to achieve a net linear polarization effect. Similarly, it is generally necessary to suitably position or arrange the molecules of a photochromic-dichroic compound to achieve a net linear polarization effect. That is, it is generally necessary to align the molecules of a photochromic-dichroic compound such that the long axis of the molecules, of the photochromic-dichroic compound in an activated state, are generally parallel to each other. As such, and in accordance with various non-limiting embodiments disclosed herein, the photochromic-dichroic compound(s) are at least partially aligned. Further, if the activated state of a photochromic-dichroic compound corresponds to a dichroic state of the material in which it resides, the photochromic-dichroic compound can be at least partially aligned such that the long axis of the molecules of the photochromic-dichroic compound in the activated state are aligned. As used herein the term "align" means to bring into suitable arrangement or position by interaction with another material, compound or structure.

Further, although not limiting herein, the photochromic-dichroic layer can include a plurality of photochromic-dichroic compounds. Although not limiting herein, when two or more photochromic-dichroic compounds are used in combination, the photochromic-dichroic compounds can be chosen to complement one another so as to produce a desired color or hue. For example, mixtures photochromic-dichroic compounds can be used according to certain non-limiting embodiments of the present invention to attain certain activated colors, such as a near neutral gray or near neutral brown. See, for example, U.S. Patent 5,645,767, column 12, line 66 to column 13, line 19, which describes the parameters that define neutral gray and brown colors. Additionally or alternatively, the photochromic-dichroic layer of the photochromic-dichroic films of the present invention, can include mixtures of photochromic-dichroic compounds having complementary linear polarization states. For example, the photochromic-dichroic compounds can be chosen to have complementary linear polarization states over a desired range of wavelengths so as to provide a photochromic-dichroic film that is capable of polarizing light over the desired range of wavelengths. Still further, mixtures of complementary photochromic-dichroic compounds having essentially the same polarization states at the same wavelengths can be chosen to reinforce or enhance the overall linear polarization achieved. For example, according to some non-limiting embodiments, the photochromic-dichroic layer of the photochromic-dichroic films of the present invention, can include at least two at least partially aligned photochromic-dichroic compounds, in which each of the at least partially aligned photochromic-dichroic compounds have: complementary colors; and/or complementary linear polarization states.

The photochromic-dichroic layer and each further layer of the photochromic-dichroic films prepared in accordance with the method of the present invention can each independently further include at least one additive that can facilitate one or more of the processing, the properties, or the performance of such layer. Non-limiting examples of such additives include dyes, polymerization inhibitors, solvents, plasticizers, light stabilizers (such as, but not limited to, ultraviolet light absorbers and light stabilizers, such as hindered amine light stabilizers (HALS)), heat stabilizers, mold release agents, rheology control agents, leveling agents (such as, but not limited to, surfactants), free radical scavengers, and adhesion promoters (such as hexanediol diacrylate and coupling agents), alignment promoters, horizontal alignment agents, and/or kinetic enhancing additives.

Additives can be independently present in each layer of the photochromic-dichroic film, which some embodiments of the present invention, in amounts of from 0 percent by weight to 40 percent by weight, or from 0.1 percent by weight to 25 percent by weight, or from 0.5 percent by weight to 15 percent by weight, or from 0.75 percent by weight to 10 percent by weight, or from 1 percent by weight to 5 percent by weight, in each case based on the weight of the layer, inclusive of the recited values, and including any combination of the recited lower and upper values.

Examples of dyes that can be present in the photochromic-dichroic layer and/or further layers of the photochromic-dichroic films include, but are not limited to, organic dyes that are capable of imparting a desired color or other optical property to that particular layer. With some embodiments, at least one further layer includes one or more dyes and/or one or more ultraviolet light absorbers that serve to prevent or minimize the amount of actinic radiation from reaching the underlying photochromic-dichroic layer thereby minimizing or preventing activation of the photochromic-dichroic compound(s) therein during storage of the photochromic-dichroic film. Minimizing or preventing activation of the photochromic-dichroic compounds of the underlying photochromic-dichroic layer during storage can extend the usable life of the photochromic-dichroic compounds therein after the further layer(s), such as the first and second further layers are removed from the photochromic-dichroic layer, in accordance with some embodiments of the present invention.

As used herein, the term "alignment promoter" means an additive that can facilitate at least one of the rate and uniformity of the alignment of a material to which it is added. Non-limiting examples of alignment promoters that can be present in the photochromic-dichroic layer include, but are not limited to, those described in U.S. Patent 6,338,808 and U.S. Patent Publication No. 2002/0039627.

Horizontal alignment (or orientation) agents that can be used in one or more layers of the photochromic-dichroic film, such as the photochromic-dichroic layer, with some embodiments of the present invention assist in aligning the longitudinal axis of a photochromic-dichroic compound substantially parallel to a horizontal plane of the photochromic-dichroic layer. Examples of horizontal alignment agents that can be used with some embodiments of the present invention include, but are not limited to, those disclosed at column 13, line 58 through column 23, line 2 of United States Patent No. 7,315,341 B2.

Non-limiting examples of kinetic enhancing additives that can be present in one or more layers, such as the photochromic-dichroic layer, of the photochromic-dichroic film prepared in accordance with the method of the present invention, include epoxy-containing compounds, organic polyols, and/or plasticizers. More specific examples of such kinetic enhancing additives are disclosed in U.S. Patent 6,433,043 and U.S. Patent Publication No. 2003/0045612.

Examples of solvents that can be present in forming the various layers of the photochromic-dichroic films of the present invention, such as in the molten photochromic-dichroic layer and/or each further molten layer, include, but are not limited to, those that assist with dissolving solid components of the various molten thermoplastic compositions. Examples of solvents include, but are not limited to, the following: propylene glycol monomethyl ether acetate and their derivates (sold as DOWANOL® industrial solvents), acetone, amyl propionate, anisole, benzene, butyl acetate, cyclohexane, dialkyl ethers of ethylene glycol, e.g., diethylene glycol dimethyl ether and their derivates (sold as CELLOSOLVE® industrial solvents), diethylene glycol dibenzoate, dimethyl sulfoxide, dimethyl formamide, dimethoxybenzene, ethyl acetate, isopropyl alcohol, methyl cyclohexanone, cyclopentanone, methyl ethyl ketone, methyl isobutyl ketone, methyl propionate, propylene carbonate, tetrahydrofuran, toluene, xylene, 2-methoxyethyl ether, 3-propylene glycol methyl ether, and mixtures thereof.

With some embodiments, one or more solvents are present in precursor thermoplastic compositions from which the molten thermoplastic compositions are formed (such as the molten thermoplastic photochromic-dichroic compositions and/or the further molten thermoplastic compositions). The solvent(s) can, with some embodiments, be removed prior to and/or concurrent with formation of the molten thermoplastic compositions. With some embodiments, the solvent(s) can be removed from the precursor thermoplastic compositions, prior to formation of the related molten thermoplastic compositions, by art-recognized methods, such as distillation, distillation under conditions of reduced pressure, and thin-film evaporation. With some further embodiments, the solvent(s) can be removed from the precursor thermoplastic compositions, concurrent with formation of the related molten thermoplastic compositions, by art-recognized methods, such as with a devolatilizing extruder.

In accordance with further non-limiting embodiments, one or more layers, such as the photochromic-dichroic layer, includes at least one conventional dichroic compound. Examples of suitable conventional dichroic compounds include, but are not limited to, azomethines, indigoids, thioindigoids, merocyanines, indans, quinophthalonic dyes, perylenes, phthaloperines, triphenodioxazines, indoloquinoxalines, imidazo-triazines, tetrazines, azo and (poly)azo dyes, benzoquinones, naphthoquinones, anthroquinone and (poly)anthroquinones, anthropyrimidinones, iodine and iodates. With further non-limiting embodiments, the dichroic material can include at least one reactive functional group that is capable of forming at least one covalent bond with another material. Examples of such functional groups that the dichroic material can have, with some embodiments, include, alkoxy, polyalkoxy, alkyl, a polyalkyl substituent terminated with at least one polymerizable group, and combinations thereof. The first and/or second further layers can, with some embodiments, each independently include one or more such conventional dichroic compounds.

If present and in accordance with some embodiments, one or more conventional dichroic compounds can be present in a layer of the photochromic-dichroic film, in an amount of at least 0.1 percent by weight and less than or equal to 25 percent by weight, such as from 0.5 to 20 percent by weight, or from 1 to 5 percent by weight, in which the percent weights are in each case based on total weight of the layer, such as total weight of the layer.

With some embodiments, one or more layers, such as the photochromic-dichroic layer, of the photochromic-dichroic film includes at least one conventional photochromic compound. As used herein, the term "conventional photochromic compound" includes both thermally reversible and non-thermally reversible (such as actinic light reversible, such as photo-reversible) photochromic compounds. Generally, although not limiting herein, when two or more conventional photochromic materials are used in combination with each other or with a photochromic-dichroic compound, the various materials can be chosen to complement one another to produce a desired color or hue. For example, mixtures of photochromic compounds can be used according to certain non-limiting embodiments disclosed herein to attain certain activated colors, such as a near neutral gray or near neutral brown. See, for example, U.S. Patent 5,645,767, column 12, line 66 to column 13, line 19, which describes the parameters that define neutral gray and brown colors. The first and/or second further layers can, with some embodiments, each independently include one or more such conventional photochromic compounds.

If present and in accordance with some embodiments, one or more conventional photochromic compounds can be present in a layer of the photochromic-dichroic film, in an amount of at least 0.1 percent by weight and less than or equal to 25 percent by weight, such as from 0.5 to 20 percent by weight, or from 1 to 5 percent by weight, in which the percent weights are in each case based on total weight of the layer, such as total weight of the layer.

In accordance with some embodiments, the photochromic-dichroic layer is free of conventional photochromic compounds.

Non-limiting examples of photochromic-dichroic compounds that can be included in the photochromic-dichroic layer of the photochromic-dichroic film include, but are not limited to, the following:

(PCDC-1) 3-phenyl-3-(4-(4-(3-piperidin-4-yl-propyl)piperidino)phenyl)-13,13-dimethyl-3H,13-indeno[2',3':3,4]naphtho[1,2-b]pyran;

(PCDC-2) 3-phenyl-3-(4-(4-(3-(1-(2-hydroxyethyl)piperidin-4-yl)propyl)piperidino)phenyl)-13,13-dimethyl-3H,13H-indeno[2',3':3,4]naphtho[1,2-b]pyran;

(PCDC-3) 3-phenyl-3-(4-(4-(4-butyl-phenylcarbamoyl)-piperidin-1-yl) phenyl)-13,13-dimethyl-6-methoxy-7-(4-phenyl-piperazin-1-yl)- 3H,13H-indeno[2',3':3,4] naphtho[1,2-b]pyran;

(PCDC-4) 3-phenyl-3-(4-([1,4']bipiperidinyl-1'-yl)phenyl)-13,13-dimethyl-6-methoxy-7-([1,4']bipiperidinyl-1'-yl)-3H,13H-indeno[2',3':3,4]naphtho[1,2-b]pyran;

(PCDC-5) 3-phenyl-3-(4-(4-phenyl-piperazin-1-yl)phenyl)-13,13-dimethyl-6-methoxy-7-(4-(4-hexylbenzoyloxy)-piperidin-1-yl)-3H,13H-indeno[2',3':3,4] naphtho[1,2-b]pyran;

(PCDC-6) 3-phenyl-3-(4-(4-phenyl-piperazin-1-yl)phenyl)-13,13-dimethyl-6-methoxy-7-(4-(4'-octyloxy-biphenyl-4-carbonyloxy)-piperidin-1-yl)- 3H,13H-indeno[2',3':3,4]naphtho[1,2-b]pyran;

(PCDC-7) 3-phenyl-3-(4-(4-phenyl-piperazin-1-yl)phenyl)-13,13-dimethyl-6-methoxy-7-{4-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy]-piperidin-1-yl}-3H,13H-indeno[2',3':3,4]naphtho[1,2-b]pyran;

(PCDC-8) 3-phenyl-3-(4-{4-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy]-piperidin-1-yl}-phenyl)-13,13-dimethyl-6-methoxy-7-{4-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy]-piperidin-1-yl}-3H,13H-indeno[2',3':3,4]naphtho[1,2-b]pyran;

(PCDC-9) 3-phenyl-3-(4-(4-phenylpiperazin-1-yl)phenyl)-13,13-dimethyl-6-methoxy-7-(4-(4-(4'-octyloxy-biphenyl-4-carbonyloxy)phenyl)piperazin-1-yl)-3H,13H-indeno[2',3':3,4] naphtho[1,2-b]pyran;

(PCDC-10) 3-phenyl-3-(4-(4-phenyl-piperazin-1-yl)phenyl)-13,13-dimethyl-6-methoxy-7-(4-(4-(4-hexyloxyphenylcarbonyloxy)phenyl)piperazin-1-yl)-3H,13H-indeno[2',3':3,4]naphtho[1,2-b]pyran;

(PCDC-11) 3-phenyl-3-(4-(4-phenyl-piperazin-1-yl)phenyl)-13,13-dimethyl-6-methoxy-7-(4-(4-(4-(2-fluorobenzoyloxy)benzoyloxy)phenyl) piperazin-1-yl)- 3H,13H-indeno[2',3':3,4]naphtho[1,2-b]pyran;

(PCDC-12) 3-phenyl-3-(4-(pyrrolidin-1-yl)phenyl)-13-hydroxy-13-ethyl-6-methoxy-7-(4-(4-(4-hexylbenzoyloxy)phenyl)piperazin-1-yl)-3H,13H-indeno[2',3':3,4] naphtho[1,2-b]pyran;

(PCDC-13) 3-phenyl-3-(4-(pyrrolidin-1-yl)phenyl)-13,13-dimethyl-6-methoxy-7-(4-(4-hexylbenzoyloxy)benzoyloxy)- 3H,13H-indeno[2',3':3,4]naphtho[1,2-b]pyran;
(PCDC-14) 3-phenyl-3-(4-(pyrrolidin-1-yl)phenyl)-13,13-dimethyl-6-methoxy-7-(4-(4-(4-hexylbenzoyloxy)benzoyloxy)benzoyloxy)- 3H,13H-indeno[2',3':3,4] naphtho[1,2-b]pyran;
(PCDC-15) 3-phenyl-3-(4-(4-methoxyphenyl)-piperazin-1-yl))phenyl)-13,13-dimethyl-6-methoxy-7-(4-(4-(3-phenylprop-2-ynoyloxy)phenyl)piperazin-1-yl)- 3H,13H-indeno[2',3':3,4]naphtho[1,2-b]pyran;
(PCDC-16) 3-(4-methoxyphenyl)-3-(4-(4-methoxyphenyl)piperazin-1-yl)phenyl)-13-ethyl-13-hydroxy-6-methoxy-7-(4-(4-(4-hexylbenzoyloxy)phenyl)piperazin-1-yl)- 3H,13H-indeno[2',3':3,4]naphtho[1,2-b]pyran;
(PCDC-17) 3-phenyl-3-{4-(pyrrolidin-1-yl)phenyl)-13-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxy]-13-ethyl-6-methoxy-7-(4-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy]-piperadin-1-yl)- 3H,13H-indeno[2',3':3,4]naphtho[1,2-b]pyran;
(PCDC-18) 3-phenyl-3-(4-{4-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy]-piperidin-1-yl}-phenyl)-13-ethyl-13-hydroxy-6-methoxy-7-{4-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy]-piperidin-1-yl}-)-3H,13H-indeno[2',3':3,4]naphtho[1,2-b]pyran;
(PCDC-19) 3-phenyl-3-{4-(pyrrolidin-1-yl)phenyl)-13,13-dimethyl-6-methoxy-7-(4-(4-(4-(3-phenyl-3-{4-(pyrrolidin-1-yl)phenyl}-13,13-dimethyl-6-methoxy-indeno[2',3':3,4]naphtho[1,2-b]pyran-7-yl)-piperadin-1-yl)oxycarbonyl)phenyl)phenyl)cabonyloxy)-3H, 13H-indeno[2',3':3,4]naphtho[1,2-b]pyran;
(PCDC-20) 3-{2-methylphenyl}-3-phenyl-5-(4-(4'-(trans-4-pentylcyclohexyl)-[1,1'-biphenyl]-4-ylcarboxamido)phenyl)-3H-naphtho[2,1-b]pyran;
(PCDC-21) 3-{4-[4-(4-methoxy-phenyl)-piperazin-1-yl]-phenyl}-3-phenyl-7-(4-(4'-(trans-4-pentylcyclohexyl)-[1,1'-biphenyl]-4-ylcarboxamido)phenyl)-3H-naphtho[2,1-b]pyran;
(PCDC-22) 3-{4-[4-(4-methoxy-phenyl)-piperazin-1-yl]-phenyl}-3-phenyl-7-(4-phenyl-(phen-1-oxy)carbonyl)-3H-naphtho[2,1-b]pyran;
(PCDC-23) 3-{4-[4-(4-methoxy-phenyl)-piperazin-1-yl]-phenyl}-3-phenyl-7-(N-(4-((4-dimethylamino)phenyl)diazenyl)phenyl)carbamoyl-3H-naphtho[2,1-b]pyran;
(PCDC-24) 2-phenyl-2-{4-[4-(4-methoxy-phenyl)-piperazin-1-yl]-phenyl}-benzofuro[3',2':7,8] benzo[b]pyran;
(PCDC-25) 2-phenyl-2-{4-[4-(4-methoxy-phenyl)-piperazin-1-yl]-phenyl}-7-(4-(4'-(trans-4-pentylcyclohexyl)-[1,1'-biphenyl]-4-ylcarboxamido)phenyl)-benzothieno[3',2':7,8] benzo[b]pyran;
(PCDC-26) 7-{17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy}-2-phenyl-2-(4-pyrrolidin-1-yl-phenyl)-6-methoxycarbonyl-2H-benzo[b]pyran;
(PCDC-27) 2-phenyl-2-{4-[4-(4-methoxy-phenyl)-piperazin-1-yl]-phenyl}-9-hydroxy-8-methoxycarbonyl-2H-naphtho[1,2-b]pyran;
(PCDC-28) 2-phenyl-2-{4-[4-(4-methoxy-phenyl)-piperazin-1-yl]-phenyl}-9-hydroxy-8-(N-(4-butyl-phenyl))carbamoyl-2H-naphtho[1,2-b]pyran;
(PCDC-29) 2-phenyl-2-{4-[4-(4-methoxy-phenyl)-piperazin-1-yl]-phenyl}-9-hydroxy-8-(4-(4'-(trans-4-pentylcyclohexyl)-[1,1'-biphenyl]-4-ylcarboxamido)phenyl)-2H-naphtho[1,2-b]pyran;
(PCDC-30) 1,3,3-trimethyl-6'-(4-ethoxycarbonyl)-piperidin-1-yl)-spiro[indoline-2,3'-3H-naphtho[2,1-b][1,4]oxazine];
(PCDC-31) 1,3,3-trimethyl-6'-(4-[N-(4-butylphenyl)carbamoyl]-piperidin-1-yl)-spiro[indoline-2,3'-3H-naphtho[2,1-b][1,4]oxazine];
(PCDC-32) 1,3,3-trimethyl-6'-(4-(4-methoxyphenyl)piperazin-1-yl)-spiro[indoline-2,3'-3H-naphtho[2,1-b][1,4]oxazine];
(PCDC-33) 1,3,3-trimethyl-6'-(4-(4'-(trans-4-pentylcyclohexyl)-[1,1'-biphenyl]-4-ylcarboxamido)phenyl)-spiro[indoline-2,3'-3H-naphtho[2,1-b][1,4]oxazine];
(PCDC-34) 1,3,3,5,6-pentamethyl-7'-(4-(4'-(trans-4-pentylcyclohexyl)-[1,1'-biphenyl]-4-ylcarboxamido)phenyl))-spiro[indoline-2,3'-3H-naphtho[2,1-b][1,4]oxazine];
(PCDC-35) 1,3-diethyl-3-methyl-5-methoxy-6'-(4-(4'-Hexyloxy-biphenyl-4-carbonyloxy)-piperidin-1-yl)-spiro[indoline-2,3'-3H-naphtho[2,1-b][1,4]oxazine];
(PCDC-36) 1,3-diethyl-3-methyl-5-[4-(4-pentadecafluoroheptyloxy-phenylcarbamoyl)-benzyloxy]-6'-(4-(4'-hexyloxy-biphenyl-4-carbonyloxy)-piperidin-1-yl)-spiro[indoline-2,3'-3H-naphtho[2,1-b][1,4]oxazine];
(PCDC-37) 2-phenyl-2-{4-[4-(4-methoxy-phenyl)-piperazin-1-yl]-phenyl}-5-carbomethoxy-8-(N-(4-phenyl)phenyl) carbamoyl-2H-naphtho[1,2-b]pyran;
(PCDC-38) 2-phenyl-2-{4-[4-(4-methoxy-phenyl)-piperazin-1-yl]-phenyl}-5-carbomethoxy-8-(N-(4-phenyl)phenyl) carbamoyl-2H-fluoantheno[1,2-b]pyran;
(PCDC-39) 2-phenyl-2-{4-[4-(4-methoxy-phenyl)-piperazin-1-yl]-phenyl}-5-carbomethoxy-11-(4-{17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy}phenyl)-2H-fluoantheno[1,2-b]pyran;
(PCDC-40) 1-(4-carboxybutyl)-6-(4-(4-propylphenyl)carbonyloxy)phenyl)-3,3-dimethyl-6'-(4-ethoxycarbonyl)-piperidin-1-yl)-spiro[(1,2-dihydro-9H-dioxolano[4',5':6,7]indoline-2,3'-3H-naphtho[2,1-b][1,4]oxazine];
(PCDC-41) 1-(4-carboxybutyl)-6-(4-(4-propylphenyl)carbonyloxy)phenyl)-3,3-dimethyl-7'-(4-ethoxycarbonyl)-piperidin-1-yl)-spiro[(1,2-dihydro-9H-dioxolano[4',5':6,7]indoline-2,3'-3H-naphtho[1,2-b][1,4]oxazine];
(PCDC-42) 1,3-diethyl-3-methyl-5-(4-{17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy}phenyl)-6'-(4-(4'-hexyloxy-biphenyl-4-carbonyloxy)-piperidin-1-yl)-spiro[indoline-2,3'-3H-naphtho[2,1-b][1,4]oxazine];
(PCDC-43) 1-butyl-3-ethyl-3-methyl-5-methoxy-7'-(4-(4'-Hexyloxy-biphenyl-4-carbonyloxy)-piperidin-1-yl)-spiro[indoline-2,3'-3H-naphtho[1,2-b][1,4]oxazine];
(PCDC-44) 2-phenyl-2-{4-[4-(4-methoxy-phenyl)-piperazin-1-yl]-phenyl}-5-methoxycarbonyl-6-methyl-2H-9-(4-(4-propylphenyl)carbonyloxy)phenyl)-(1,2-dihydro-9H-dioxolano[4',5':6,7]) naphtho[1,2-b]pyran;
(PCDC-45) 3-(4-methoxyphenyl)-3-(4-(4-methoxyphenyl)piperazin-1-yl)phenyl)-13-ethyl-13-hydroxy-6-methoxy-7-(4-(4-propylphenyl)carbonyloxy)phenyl)- 3H,13H-[1,2-dihydro-9H-dioxolano[4",5":6,7][indeno[2',3':3,4]]naphtho[1,2-b]pyran;
(PCDC-46) 3-phenyl-3-(4-(4-methoxyphenyl)piperazin-1 -yl)phenyl)-13-ethyl-13-hydroxy-6-methoxy-7-(4-(4-hexylphenyl)carbonyloxy)phenyl)-3H, 13H-[1,2-dihydro-9H-dioxolano[4",5":5,6][indeno[2',3':3,4]]naphtho[1,2-b]pyran;
(PCDC-47) 4-(4-((4-cyclohexylidene-1-ethyl-2,5-dioxopyrrolin-3-ylidene)ethyl)-2-thienyl)phenyl-(4-propyl)benzoate;
(PCDC-48) 4-(4-((4-adamantan-2-ylidene-1-(4-(4-hexylphenyl)carbonyloxy)phenyl)-2,5-dioxopyrrolin-3-ylidene)ethyl)-2-thienyl)phenyl-(4-propyl)benzoate;
(PCDC-49) 4-(4-((4-adamantan-2-ylidene-2,5-dioxo-1-(4-(4-(4-propylphenyl)piperazinyl)phenyl)pyrrolin-3-ylidene)ethyl)-2-thienyl)phenyl (4-propyl)benzoate;
(PCDC-50) 4-(4-((4-adamantan-2-ylidene-2,5-dioxo-1-(4-(4-(4-propylphenyl)piperazinyl)phenyl)pyrrolin-3-ylidene)ethyl)-1-methylpyrrol-2-yl)phenyl (4-propyl)benzoate;
(PCDC-51) 4-(4-((4-adamantan-2-ylidene-2,5-dioxo-1-(4-{17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy}phenyl)pyrrolin-3-ylidene)ethyl)-1-methylpyrrol-2-yl)phenyl (4-propyl)benzoate;
(PCDC-52) 4-(4-methyl-5,7-dioxo-6-(4-(4-(4-propylphenyl)piperazinyl)phenyl)spiro[8,7a-dihydrothiapheno[4,5-f]isoindole-8,2'-adamentane]-2-yl)phenyl (4-propyl) phenyl benzoate;
(PCDC-53) N-(4-{17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyloxy}phenyl -6,7-dihydro-4-methyl-2-phenylspiro(5,6-benzo[b]thiophenedicarboxyimide-7,2-tricyclo[3.3.1.1]decane);
(PCDC-54) N-cyanomethyl-6,7-dihydro-2-(4-(4-(4-propylphenyl)piperazinyl)phenyl)-4-methylspiro(5,6- benzo[b]thiophenedicarboxyimide-7,2-tricyclo[3.3.1.1] decane);
(PCDC-55) N-phenylethyl-6,7-dihydro-2-(4-(4-(4-hexylbenzoyloxy)phenyl)piperazin-1-yl)phenyl-4-methylspiro(5,6-benzo[b]thiophenedicarboxyimide-7,2-tricyclo[3.3.1.1] decane);
(PCDC-56) N-phenylethyl-6,7-dihydro-2-(4-(4-(4-hexylbenzoyloxy)phenyl)piperazin-1-yl)phenyl-4-cyclopropylspiro(5,6-benzo[b]thiophenedicarboxyimide-7,2-tricyclo[3.3.1.1] decane);
(PCDC-57) N-phenylethyl-6,7-dihydro-2-(4-(4-(4-hexylbenzoyloxy)phenyl)piperazin-1-yl)phenyl-4-cyclopropyl spiro(5,6-benzo[b]furodicarboxyimide-7,2-tricyclo[3.3.1.1] decane);
(PCDC-58) N-cyanomethyl-6,7-dihydro-4-(4-(4-(4-hexylbenzoyloxy)phenyl)piperazin-1-yl)phenyl-2-phenylspiro(5,6-benzo[b]thiophenedicarboxyimide-7,2-tricyclo[3.3.1.1] decane);
(PCDC-59) N-[17-(1,5-dimethyl-hexyl)-10,13-dimethyl-2,3,4,7,8,9,10,11,12,13,14,15,16,17-tetradecahydro-1H-cyclopenta[a]phenanthren-3-yloxycarbonyl -6,7-dihydro-2-(4-methoxyphenyl)phenyl-4-methylspiro(5,6-benzo[b]thiophenedicarboxyimide-7,2-tricyclo[3.3.1.1] decane);
(PCDC-60) N-cyanomethyl-2-(4-(6-(4-butylphenyl)carbonyloxy-(4,8-dioxabicyclo[3.3.0]oct-2-yl))oxycarbonyl)phenyl -6,7-dihydro-4-cyclopropylspiro(5,6-benzo[b] thiophenedicarboxyimide-7,2-tricyclo[3.3.1.1]decane);
(PCDC-61) 6,7-dihydro-N-methoxycarbonylmethyl-4-(4-(6-(4-butylphenyl)carbonyloxy-(4,8-dioxabicyclo[3.3.0]oct-2-yl))oxycarbonyl)phenyl-2-phenylspiro(5,6- benzo[b]thiophenedicarboxyimide-7,2-tricyclo[3.3.1.1] decane); and
(PCDC-62) 3-phenyl-3-(4-pyrrolidinylphenyl)-13,13-dimethyl-6-methoxy-7-(4-(4-(4-(4-(6-(4-(4-(4-onylphenylcabonyloxy)phenyl)oxycarbonyl)phenoxy)hexyloxy)phenyl)piperazin-1-yl)indeno[2',3':3,4] naphtho[1,2-b]pyran.

With some further embodiments, the photochromic-dichroic compound(s) of the photochromic-dichroic layer of the photochromic-dichroic film of the present invention, can be chosen from one or more of the following:

(PCDC-a1) 3,3-Bis(4-methoxyphenyl)-10-[4-(4-(trans-4-pentylcyclohexyl)benzamido)phenyl]-13,13-dimethyl-12-bromo-3,13-dihydro-indeno[2',3':3,4]naphtho[1,2-b]pyran;

(PCDC-a2) 3,3-Bis(4-methoxyphenyl)-10-[4-((4-(trans-4-pentylcyclohexyl)phenoxy)carbonyl) phenyl]-6,13,13-trimethyl-3,13-dihydro-indeno[2',3':3,4]naphtho[1,2-b]pyran;

(PCDC-a3) 3-(4-Fluorophenyl)-3-(4-piperidinophenyl)-10-[4-(4-(4-(trans-4-pentylcyclohexyl)phenyl)benzamido) phenyl]-6-trifluromethyl-11,13,13-trimethyl-3,13-dihydro- indeno[2',3':3,4]naphtho[1,2-b]pyran;

(PCDC-a4) 3,3-Bis(4-methoxyphenyl)- 10-[4-(4-(trans-4-pentylcyclohexyl)benzamido)phenyl]-5,7-difluoro-13,13-dimethyl-3,13-dihydro-indeno[2',3':3,4]naphtho[1,2-b]pyran;

(PCDC-a5) 3-(4-Methoxyphenyl)-3-(4-piperidinophenyl)-10-[4-(4-(4-(trans-4-pentylcyclohexyl)phenyl)benzamido) phenyl]-5,7-difluoro-13,13-dimethyl-3,13-dihydro-indeno[2',3':3,4]naphtho[1,2-b]pyran;

(PCDC-a6) 3-(4-Methoxyphenyl)-3-(4-morpholinophenyl)-10-[4-(4-(4-(trans-4-pentylcyclohexyl)phenyl)benzamido)phenyl]-5,7-difluoro-13,13-dimethyl-3,13-dihydro-indeno[2',3':3,4]naphtho[1,2-b]pyran;

(PCDC-a7) 3-(4-Fluorophenyl)-3-(4-piperidinophenyl)-10-[4-((4-(trans-4-pentylcyclohexyl)phenoxy)carbonyl)phenyl]-12-bromo-5,7-difluoro-13,13-dimethyl-3,13-dihydro- indeno[2',3':3,4]naphtho[1,2-b]pyran;

(PCDC-a8) 3-Phenyl-3-(4-piperidinophenyl)-10-[4-(4-(4-(trans-4-pentylcyclohexyl)phenyl)benzamido)phenyl]-12-bromo-5,7-difluoro-13,13-dimethyl-3,13-dihydro- indeno[2',3':3,4]naphtho[1,2-b]pyran;

(PCDC-a9) 3-Phenyl-3-(4-piperidinophenyl)-10-[4-((4-(trans-4-pentylcyclohexyl)phenoxy)carbonyl)phenyl]-12-bromo-5,7-difluoro-13,13-dimethyl-3,13-dihydro- indeno[2',3':3,4]naphtho[1,2-b]pyran;

(PCDC-a10) 3-(4-Fluorophenyl)-3-(4-piperidinophenyl)- 10-[4-(4-(4-(trans-4-pentylcyclohexyl)phenyl)benzamido)phenyl]-12-bromo-13,13-dimethyl-3,13-dihydro-indeno[2',3':3,4]naphtho[1,2-b]pyran;

(PCDC-a11) 3,3-Bis(4-methoxydinophenyl)-10-[4-(4-(4-(trans-4-pentylcyclohexyl)phenyl)benzamido)phenyl]-12-bromo-6,7-dimethoxy-11,13,13-trimethyl-3,13-dihydro- indeno[2',3':3,4]naphtho[1,2-b]pyran;

(PCDC-a12) 3,3-Bis(4-methoxyphenyl)-10-[4-(4-(4-(trans-4-pentylcyclohexyl)phenyl)benzamido) phenyl]-6-trifluromethyl-12-bromo-13,13-dimethyl-3,13-dihydro- indeno[2',3':3,4]naphtho[1,2-b]pyran;

(PCDC-a13) 3,3-Bis(4-methoxyphenyl)-10,12-bis[4-(4-(4-(trans-4-pentylcyclohexyl)phenyl)benzamido)phenyl]-6-trifluromethyl-13,13-dimethyl-3,13-dihydro- indeno[2',3':3,4]naphtho[1,2-b]pyran;

(PCDC-a14) 3,3-Bis(4-methoxyphenyl)-10-[4-(4-(4-(trans-4-pentylcyclohexyl)phenyl) benzamido)phenyl]-5,7-difluoro-13,13-dimethyl-3,13-dihydro-indeno[2',3':3,4]naphtho[1,2-b]pyran;

(PCDC-a15) 3,3-Bis(4-methoxyphenyl)-10-[4-(4-(4-(trans-4-pentylcyclohexyl)phenyl)benzamido) phenyl]-6-trifluromethyl-13,13-dimethyl-3,13-dihydro- indeno[2',3':3,4]naphtho[1,2-b]pyran;

(PCDC-a16) 3,3-Bis(4-methoxyphenyl)-10-[4-(4-(4-(trans-4-pentylcyclohexyl)phenyl) benzamido)phenyl]-5,7-difluoro-12-bromo-13,13-dimethyl-3,13-dihydro-indeno[2',3':3,4]naphtho[1,2-b]pyran;

(PCDC-a17) 3-(4-Fluorophenyl)-3-(4-morpholinophenyl)-10-[4-(4-(4-(trans-4-pentylcyclohexyl) phenyl)benzamido)phenyl]-6-trifluoromethyl-13-methyl-13-butyl-3,13-dihydro- indeno[2',3':3,4]naphtho[1,2-b]pyran;

(PCDC-a18) 3-(4-Fluorophenyl)-3-(4-morpholinophenyl)-10-[4-(4-(4-(trans-4-pentylcyclohexyl) phenyl)benzamido)phenyl]-5,7-difluoro-12-bromo-13,13-dimethyl-3,13-dihydro- indeno[2',3':3,4]naphtho[1,2-b]pyran;

(PCDC-a19) 3-Phenyl-3-(4-methoxyphenyl)-10-[4-(4-(4-(trans-4-pentylcyclohexyl) phenyl)benzamido)phenyl]-6-trifluoromethyl-13,13-dimethyl-3,13-dihydro-indeno[2',3':3,4]naphtho[1,2-b]pyran;

(PCDC-a20) 3-Phenyl-3-(4-morpholinophenyl)-10-[4-(4-(4-(trans-4-pentylcyclohexyl) phenyl)benzamido)phenyl]-6-trifluoromethyl-13,13-dimethyl-3,13-dihydro-indeno[2',3':3,4]naphtho[1,2-b]pyran;

(PCDC-a21) 3,3-Bis(4-fluorophenyl)-10-[4-(4-(4-(trans-4-pentylcyclohexyl) phenyl)benzamido)phenyl]-6-trifluoromethyl-12-bromo-13,13-dimethyl-3,13-dihydro-indeno[2',3':3,4]naphtho[1,2-b]pyran;

(PCDC-a22) 3,3-Bis(4-fluorophenyl)-10-[4-(4-(4-(trans-4-pentylcyclohexyl) phenyl)benzamido)phenyl]-6-trifluoromethyl-13,13-dimethyl-3,13-dihydro-indeno[2',3':3,4]naphtho[1,2-b]pyran;

(PCDC-a23) 3-(4-Methoxyphenyl)-3-(4-butoxyphenyl)-10-[4-(4-(4-(trans-4-pentylcyclohexyl) phenyl)benzamido)phenyl]-6-trifluoromethyl-13,13-dimethyl-3,13-dihydro- indeno[2',3':3,4]naphtho[1,2-b]pyran;

(PCDC-a24) 3-(4-Fluorophenyl)-13,13-dimethyl-3-(4-morpholinophenyl)-10-(4-(4'-(trans-4-pentylcyclohexyl)-[1,1'-biphenyl]-4-ylcarboxamido)phenyl)-6-(trifluoromethyl)-3,13-dihydro-indeno[2',3':3,4]naphtho[1,2-b]pyran;

(PCDC-a25) 3-(4-Butoxyphenyl)-3-(4-fluorophenyl)-13,13-dimethyl-10-(4-(4'-(trans-4-pentylcyclohexyl)-[1,1'-biphenyl]-4-ylcarboxamido)phenyl)-6-(trifluoromethyl)-3,13-dihydro- indeno[2',3':3,4]naphtho[1,2-b]pyran;

(PCDC-a26) 3-(4-(4-(4-Methoxyphenyl)piperazin-1-yl)phenyl)-13,13-dimethyl-10-(4-(4'-(trans-4-pentylcyclohexyl)-[1,1'-biphenyl]-4-ylcarboxamido)phenyl)-3-phenyl-6-(trifluoromethyl)-3,13-dihydro-indeno[2',3':3,4]naphtho[1,2-b]pyran;

(PCDC-a27) 3-(4-Butoxyphenyl)-3-(4-fluorophenyl)-13,13-dimethyl-10-(4-(((trans,trans-4'-pentyl-[1,1'-bi(cyclohexan)]-4-yl)oxy)carbonyl)phenyl)-6-(trifluoromethyl)-3,13-dihydroindeno[2',3':3,4]naphtho[1,2-b]pyran;

(PCDC-a28) 3-(4-Fluorophenyl)-13-hydroxy-13-methyl-10-(4-(4'-(trans-4-pentylcyclohexyl)-[1,1'-biphenyl]-4-ylcarboxamido)phenyl)-3-(4-butoxyphenyl)-6-(trifluoromethyl)-3,13-dihydro indeno[2',3':3,4]naphtho[1,2-b]pyran;

(PCDC-a29) 3-(4-Methoxyphenyl)-13,13-dimethyl-10-(4-(4'-(trans-4-pentylcyclohexyl)-[1,1'-biphenyl]-4-ylcarboxamido)phenyl)-3-(4-(trifluoromethoxy)phenyl)-6-(trifluoromethyl)-3,13-dihydro-indeno[2',3':3,4]naphtho[1,2-b]pyran;

(PCDC-a30) 3,3-Bis(4-hydroxyphenyl)-10-[4-(4-(4-(trans-4-pentylcyclohexyl)phenyl)benzamido) phenyl]-6-trifluromethyl-13,13-dimethyl-3,13-dihydro-indeno[2',3':3,4]naphtho[1,2-b]pyran;

(PCDC-a31) 3-(4-morpholinophenyl)-3-phenyl-13,13-dimethyl-10-(4-(4'-(trans-4-pentylcyclohexyl)-[1,1'-biphenyl]-4-ylcarboxamido)phenyl)-6-(trifluoromethyl)-3,13-dihydro- indeno[2',3':3,4]naphtho[1,2-b]pyran;

(PCDC-a32) 3-(4-morpholinophenyl)-3-(4-fluorophenyl)-13,13-dimethyl-10-(4-(4'-(trans-4-pentylcyclohexyl)-[1,1'-biphenyl]-4-ylcarboxamido)phenyl)-6-(trifluoromethyl)-3,13-dihydro- indeno[2',3':3,4]naphtho[1,2-b]pyran;

(PCDC-a40) 12-Bromo-3-(4-butoxyphenyl)-3-(4-fluorophenyl)-13,13-dimethyl-10-(4-((4'-(trans-4-pentylcyclohexyl)-[1,1'-biphenyl]-4-carbonyl)oxy)benzamido)-6-(trifluoromethyl)-3,13-dihydro-indeno[2',3':3,4]naphtho[1,2-b]pyran;

(PCDC-a41) 3-(4-Butoxyphenyl)-5,7-dichloro-11-methoxy-3-(4-methoxyphenyl)-13,13-dimethyl-10-(4-(4'-(trans-4-pentylcyclohexyl)-[1,1'-biphenyl]-4-ylcarboxamido)phenyl)-3,13-dihydro-indeno[2',3':3,4]naphtho[1,2-b]pyran;

(PCDC-a42) 3-(4-Butoxyphenyl)-3-(4-fluorophenyl)-13,13-dimethyl-10-(4-((4'-(trans-4-pentylcyclohexyl)-[1,1'-biphenyl]-4-carbonyl)oxy)benzamido)-6-(trifluoromethyl)-3,13-dihydro-indeno[2',3':3,4]naphtho[1,2-b]pyran;

(PCDC-a43) 5,7-Dichloro-3,3-bis(4-hydroxyphenyl)-11-methoxy-13,13-dimethyl-10-(4-(4'-(trans-4-pentylcyclohexyl)-[1,1'-biphenyl]-4-ylcarboxamido)phenyl)-3,13-dihydro-indeno[2',3':3,4]naphtho[1,2-b]pyran;

(PCDC-a44) 6,8-Dichloro-3,3-bis(4-hydroxyphenyl)-11-methoxy-13,13-dimethyl-10-(4-(4'-(trans-4-pentylcyclohexyl)-[1,1'-biphenyl]-4-ylcarboxamido)phenyl)-3,13-dihydro-indeno[2',3':3,4]naphtho[1,2-b]pyran;

(PCDC-a45) 3-(4-Butoxyphenyl)-5,8-difluoro-3-(4-fluorophenyl)-13,13-dimethyl-10-(4-(4'-(trans-4-pentylcyclohexyl)-[1,1'-biphenyl]-4-ylcarboxamido)phenyl)-3,13-dihydro-indeno[2',3':3,4]naphtho[1,2-b]pyran;

(PCDC-a46) 3-(4-Butoxyphenyl)-3-(4-fluorophenyl)-13,13-dimethyl-10-(4-(4'-(trans-4-pentylcyclohexyl)-[1,1'-biphenyl]-4-carbonyl)piperazin-1-yl)-6-(trifluoromethyl)-3,13-dihydro- indeno[2',3':3,4]naphtho[1,2-b]pyran;

(PCDC-a47) 3-(4-Morpholinophenyl)-3-(4-methoxyphenyl)-10,7-bis[4-(4-(4-(trans-4-pentylcyclohexyl) phenyl)benzamido)phenyl]-5-fluoro-13,13-dimethyl-3,13-dihydro-indeno[2',3':3,4]naphtho[1,2-b]pyran;

(PCDC-a48) 3-(4-Morpholinophenyl)-3-(4-methoxyphenyl)-10-[4-(4-(4-(trans-4-pentylcyclohexyl) phenyl)benzamido)-2-(trifluoromethyl)phenyl]-13,13-dimethyl-3,13-dihydro- indeno[2',3':3,4]naphtho[1,2-b]pyran;

(PCDC-a49) 3, 3-Bis(4-methoxyphenyl)-10-[4-(4-(4-(trans-4-pentylcyclohexyl)phenyl)benzamido)-2-(trifluoromethyl)phenyl]-13,13-dimethyl-3,13-dihydro- indeno[2',3':3,4]naphtho[1,2-b]pyran;

(PCDC-a50) 3-(4-Morpholinophenyl)-3-(4-methoxyphenyl)-10-[4-(4-(4-(trans-4-pentylcyclohexyl) phenyl)benzamido)-2-(trifluoromethyl)phenyl]-13,13-dimethyl-3,13-dihydro- indeno[2',3':3,4]naphtho[1,2-b]pyran;

(PCDC-a51) 3,3-Bis(4-methoxyphenyl)-13,13-dimethyl-10-(2-methyl-4-(trans-4-((4'-((trans-4-pentylcyclohexyl)biphenyl-4-yloxy)carbonyl)cyclohexanecarboxamido)phenyl)-3,13-dihydro-indeno[2',3':3,4]naphtho[1,2-b]pyran;

(PCDC-a52) 3-(4-(4-(4-Butylphenyl)piperazin-1-yl)phenyl)-3-(4-methoxyphenyl)-13,13-dimethyl-10-(4-(4'-(trans-4-pentylcyclohexyl)biphenyl-4-ylcarboxamido)-2-(trifluoromethyl)phenyl)-3, 13-dihydro-indeno[2',3':3,4]naphtho[1,2-b]pyran;

(PCDC-a53) 3-(4-(4-(4-Butylphenyl)piperazin-1-yl)phenyl)-3-(4-methoxyphenyl)-13,13-dimethyl-10-(2-methyl-4-(4'-(trans-4-pentylcyclohexyl)biphenyl-4-ylcarboxamido)phenyl)-7-(4-(4-(trans-4-pentylcyclohexyl)benzamido)phenyl)-3,13-dihydro-indeno[2',3':3,4]naphtho[1,2-b]pyran;

(PCDC-a54) 3-(4-Methoxyphenyl)-13,13-dimethyl-7,10-bis(4-(4'-(trans-4-pentylcyclohexyl)biphenyl-4-ylcarboxamido)phenyl)-3-phenyl-3,13-dihydro-indeno[2',3':3,4]naphtho[1,2-b]pyran;

(PCDC-a55) 3-p-Tolyl-3-(4-methoxyphenyl)- 6-methoxy-13,13-dimethyl-7-(4'-(trans,trans-4'-pentylbi(cyclohexane-4-)carbonyloxy)biphenylcarbonyloxy)-10-(4-(4'-(trans-4-pentylcyclohexyl)biphenyl-4-ylcarboxamido)phenyl)-3,13-dihydro-indeno[2',3':3,4]naphtho[1,2-b]pyran;

(PCDC-a56) 10-(4-(((3S,8S,9S,10R,13R,14S,17R)-10,13-Dimethyl-17-((R)-6-methylheptan-2-yl)-2,3,4,7,8,9,10,11,12,13,14,15,16,17-tetradecahydro-1H-cyclopenta[a]phenanthren-3-yloxy)carbonyl)piperazin-1 -yl)-3-(4-methoxyphenyl)-13,13-dimethyl-3-(4-morpholinophenyl)- 3,13-dihydro-indeno[2',3':3,4]naphtho[1,2-b]pyran;

(PCDC-a57) 6-Methoxy-3-(4-methoxyphenyl)-13,13-dimethyl-3-(4-((S)-2-methylbutoxy)phenyl)-10-(4-(4'-(trans-4-pentylcyclohexyl)biphenyl-4-ylcarboxamido)phenyl)- 3,13-dihydro-indeno[2',3':3,4]naphtho[1,2-b]pyran;

(PCDC-a58) 6-Methoxy-3-(4-methoxyphenyl)-13,13-dimethyl-3-(4-((S)-2-methylbutoxy)phenyl)-7-(4'-(trans,trans-4'-pentylbi(cyclohexane-4-)carbonyloxy)biphenylcarbonyloxy)-10-(4-(4'-(trans-4-pentylcyclohexyl)biphenyl-4-ylcarboxamido)phenyl)-3,13-dihydro-indeno[2',3':3,4]naphtho[1,2-b]pyran; and

(PCDC-a59) 6-Methoxy-3-(4-methoxyphenyl)-13,13-dimethyl-3-(4-((S)-2-methylbutoxy)phenyl)-10-(4-(((3R,3aS,6S,6aS)-6-(4'-(trans-4-pentylcyclohexyl)biphenylcarbonyloxy)hexahydrofuro[3,2-b]furan-3-yloxy)carbonyl)phenyl)-3,13-dihydro-indeno[2',3':3,4]naphtho[1,2-b]pyran.

With some further embodiments, the photochromic-dichroic compound(s) of the photochromic-dichroic layer of the photochromic-dichroic film of the present invention, can be chosen from one or more of the following:

(PCDC-b1) 3-(4-fluorophenyl)-3-(4-(piperidin-1-yl)phenyl)-13-methoxy-13-ethyl-6-methoxy-7-(4'-((4-(trans-4-pentylcyclohexyl)benzoyl)oxy)-[1,1'-biphenyl]-4-carbonyloxy)-3,13-dihydro-indeno[2',3':3,4]naphtho[1,2-b]pyran;

(PCDC-b2) 3-(4-fluorophenyl)-3-(4-(piperidin-1-yl)phenyl)-13-methoxy-13-ethyl-6-methoxy-7-(4-(4'-(4-(trans-4-pentylcyclohexyl)-[1,1'-biphenyl]-4-carbonyloxy)benzoyloxy))-3,13-dihydro-indeno[2',3':3,4]naphtho[1,2-b]pyran;

(PCDC-b3) 3,3-bis(4-methoxyphenyl)-13-methoxy-13-ethyl-6-methoxy-7-(4'-((4-(trans-4-pentylcyclohexyl)benzoyl)oxy)-[1,1'-biphenyl]-4-carbonyloxy)-3,13-dihydro-indeno[2',3':3,4]naphtho[1,2-b]pyran;

(PCDC-b4) 3,3-bis(4-methoxyphenyl)-13-methoxy-13-ethyl-6-methoxy-7-(4-(4'-(4-(trans-4-pentylcyclohexyl)-[1,1'-biphenyl]-4-carbonyloxy)benzoyloxy))-3,13-dihydro-indeno[2',3':3,4]naphtho[1,2-b]pyran;

(PCDC-b5) 3-(4-fluorophenyl)-3-(4-(piperidin-1-yl)phenyl)-13-methoxy-13-ethyl-6-methoxy-7-(4'-(4-(trans-4-pentylcyclohexyl)-[1,1'-biphenyl]-4-carbonyloxy))-3,13-dihydro-indeno[2',3':3,4]naphtho[1,2-b]pyran;

(PCDC-b6) 3,3-bis(4-methoxyphenyl)-13-methoxy-13-ethyl-6-methoxy-7-((trans,trans)-4'-pentyl-[1,1'-bi(cyclohexane)]-4-carbonyloxy)-3,13-dihydro-indeno[2',3':3,4]naphtho[1,2-b]pyran;

(PCDC-b7) 3,3-bis(4-fluorophenyl)-13-methoxy-13-ethyl-6-methoxy-7-(4'-(4'-(trans-4-pentylcyclohexyl)-[1,1'-biphenyl]-4-carbonyloxy)-[1,1'-biphenyl]-4-carbonyloxy)-3,13-dihydro-indeno[2',3':3,4]naphtho[1,2-b]pyran;

(PCDC-b8) 3-(4-methoxyphenyl)-3-(4-(piperidin-1-yl)phenyl)-13-methoxy-13-ethyl-6-methoxy-7-(4'-(4'-(trans-4-pentylcyclohexyl)-[1,1'-biphenyl]-4-carbonyloxy)-[1,1'-biphenyl]-4-carbonyloxy)-3,13-dihydro-indeno[2',3':3,4]naphtho[1,2-b]pyran;

(PCDC-b9) 3-(4-methoxyphenyl)-3-(4-morpholinophenyl)-13-methoxy-13-ethyl-6-methoxy-7-(4'-(4'-(trans-4-pentylcyclohexyl)-[1,1'-biphenyl]-4-carbonyloxy)-[1,1'-biphenyl]-4-carbonyloxy)-3,13-dihydro-indeno[2',3':3,4]naphtho[1,2-b]pyran;

(PCDC-b10) 3-(4-(4-methoxyphenyl)piperazin-1-yl)-3-phenyl-13-methoxy-13-ethyl-6-methoxy-7-(4'-(4-(2-hydroxyethoxy)benzoyloxy)-[1,1'-biphenyl]-4-carbonyloxy)-[1,1'-biphenyl]-4-carbonyloxy)-3,13-dihydro-indeno[2',3':3,4]naphtho[1,2-b]pyran;

(PCDC-b11) 3,3-bis(4-methoxyphenyl)-13-methoxy-13-ethyl-6-methoxy-7-(3-phenylpropioloyloxy)-3,13-dihydro-indeno[2',3':3,4]naphtho[1,2-b]pyran;

(PCDC-b12) 3,3-bis(4-methoxyphenyl)-13-methoxy-13-ethyl-6-methoxy-7-(2-methyl-4-(4'-(trans-4-pentylcyclohexyl)-[1,1'-biphenyl]-4-ylcarboxamido)phenyl)-3,13-dihydro-indeno[2',3':3,4]naphtho[1,2-b]pyran;

(PCDC-b13) 3,3-bis(4-methoxyphenyl)-6,13-dimethoxy-7-(4-(4-(trans,trans-4'-pentyl-[1,1'-bi(cyclohexane)]-4-carbonyloxy)phenyl)piperazin-1yl)-13-trifluoromethyl-3,13-dihydro-indeno[2',3':3,4]naphtho[1,2-b]pyran;

(PCDC-b14) 3,3-bis(4-methoxyphenyl)-6-methoxy-7-(4-(4-(trans,trans-4'-pentyl-[1,1'-bi(cyclohexane)]-4-carbonyloxy)phenyl)piperazin-1yl)-13-hydroxy-13-trifluoromethyl-3,13-dihydro-indeno[2',3':3,4]naphtho[1,2-b]pyran;

(PCDC-b15) 3,3-bis(4-methoxyphenyl)-6,7-di(4-(4-(trans,trans-4'-pentyl-[1,1'-bi(cyclohexane)]-4-carbonyloxy)phenyl)piperazin-1yl)-13-methoxy-13-trifluoromethyl-3,13-dihydro-indeno[2',3':3,4]naphtho[1,2-b]pyran;

(PCDC-b16) 3,3-bis(4-methoxyphenyl)-6-methoxy-7-(4-(4-((trans,trans)-4'-pentyl-[1,1'-bi(cyclohexane)]-4-carbonyloxy)phenyl)piperazin-1-yl)-13-fluoro-13-trifluoromethyl-3,13-dihydro-indeno[2',3':3,4]naphtho[1,2-b]pyran;

(PCDC-b17) 3-(4-fluorophenyl)-3-(4-(piperidin-1-yl)phenyl)-7-(2-methyl-4-(4'-(trans-4-pentylcyclohexyl)-[1,1'-biphenyl]-4-ylcarboxamido)phenyl)-11-trifluoromethyl-13,13-dimethyl-3,13-dihydro-indeno[2',3':3,4]naphtho[1,2-b]pyran;

(PCDC-b18) 3-(4-butoxyphenyl)-3-(4-methoxyphenyl)-7-(2-methyl-4-(4'-(trans-4-pentylcyclohexyl)-[1,1'-biphenyl]-4-ylcarboxamido)phenyl)-11-trifluoromethyl-13,13-dimethyl-3,13-dihydro-indeno[2',3':3,4]naphtho[1,2-b]pyran;

(PCDC-b19) 3-(4-(N-morpholinyl)phenyl)-3-phenyl-7-(4-(4'-(trans-4-pentylcyclohexyl)-[1,1'-biphenyl]-4-ylcarboxamido)phenyl)-10,12-difluoro-13,13-dimethyl-3,13-dihydro-indeno[2',3':3,4]naphtho[1,2-b]pyran;

(PCDC-b20) 3-(4-fluorophenyl)-3-(4-(piperidin-1-yl)phenyl)-7-(4-(4'-(trans-4-pentylcyclohexyl)-[1,1'-biphenyl]-4-ylcarboxamido)phenyl)-10,12-difluoro-13,13-dimethyl-3,13-dihydro-indeno[2',3':3,4]naphtho[1,2-b]pyran;

(PCDC-b21) 3,3-bis(4-methoxyphenyl)-6-methoxy-7-(2-methyl-4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b22) 3,3-bis(4-methoxyphenyl)-6-methoxy-7-(4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b23) 3,3-bis(4-methoxyphenyl)-6-methoxy-7-(2-methyl-4-(4-(4-(trans-4-pentylcyclohexyl)benzamido)phenyl)phenyl)-10,12-di(trifluoromethyl)-13,13-dimethyl-3,13-dihydro-indeno[2',3':3,4]naphtho[1,2-b]pyran;

(PCDC-b24) 3,3-bis(4-methoxyphenyl)-6-methoxy-7-(2-methyl-4-(4-(4-(trans-4-pentylcyclohexyl)benzamido)benzamido)phenyl)-10,12-di(trifluoromethyl)-13,13-dimethyl-3,13-dihydro-indeno[2',3':3,4]naphtho[1,2-b]pyran;

(PCDC-b25) 3-(4-methoxyphenyl)-3-phenyl-6-methoxy-7-(2-methyl-4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b26) 3-(4-methoxyphenyl)-3-phenyl-6-methoxy-7-(2-methyl-4-(4-(4-(trans-4-pentylcyclohexyl)benzamido)phenyl)phenyl)-10,12-di(trifluoromethyl)-13,13-dimethyl-3,13-dihydro-indeno[2',3':3,4]naphtho[1,2-b]pyran;

(PCDC-b27) 3-(4-methoxyphenyl)-3-phenyl-6-methoxy-7-(2-methyl-4-(4-((trans,trans)-4'-pentyl-[1,1'-bi(cyclohexane)]-4-carboxamido)benzamido)phenyl)-10,12-di(trifluoromethyl)-13,13-dimethyl-3,13-dihydro-indeno[2',3':3,4]naphtho[1,2-b]pyran;

(PCDC-b28) 3-(4-methoxyphenyl)-3-phenyl-6-methoxy-7-(2-methyl-4-(trans-4-(((4'-(trans-4-pentylcyclohexyl)-[1,1'-biphenyl]-4-yl)oxy)carbonyl)cyclohexanecarboxamido)phenyl)-10,12-di(trifluoromethyl)-13,13-dimethyl-3,13-dihydro-indeno[2',3':3,4]naphtho[1,2-b]pyran;

(PCDC-b29) 3-(4-N-morpholinylphenyl)-3-phenyl-6-methoxy-7-(2-methyl-4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b30) 3-(4-N-morpholinophenyl)-3-phenyl-6-methoxy-7-(2-methyl-4-(trans-4-(((4'-(trans-4-pentylcyclohexyl)-[1,1'-biphenyl]-4-yl)oxy)carbonyl)cyclohexanecarboxamido)phenyl)-10,12-di(trifluoromethyl)-13,13-dimethyl-3,13-dihydro-indeno[2',3':3,4]naphtho[1,2-b]pyran;

(PCDC-b31) 3-(4-N-morpholinophenyl)-3-phenyl-6-methoxy-7-(4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b32) 3-(4-N-morpholinophenyl)-3-(4-methoxyphenyl)-6-methoxy-7-(2-methyl-4-(4'-(trans-4-pentylcyclohexyl)-[1,1'-biphenyl]-4-ylcarboxamido)phenyl)-10, 12-di(trifluoromethyl)-13,13-dimethyl-3,13-dihydro-indeno[2',3':3,4]naphtho[1,2-b]pyran;

(PCDC-b33) 3-(4-N-morpholinophenyl)-3-(4-methoxyphenyl)-6-methoxy-7-(4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b34) 3-phenyl-3-(4-(piperidin-1-yl)phenyl)-6-methoxy-7-(4-(4-(trans-4-pentylcyclohexyl)benzamido)-2-(trifluoromethyl)phenyl)-10,12-di(trifluoromethyl)-13,13-dimethyl-3,13-dihydro-indeno[2',3':3,4]naphtho[1,2-b]pyran;

(PCDC-b35) 3,3-bis(4-fluorophenyl)-6-methoxy-7-(4-(4'-(trans-4-pentylcyclohexyl)-[1,1'-biphenyl]-4-ylcarboxamido)phenyl)-10,12-di(trifluoromethyl)-13,13-dimethyl-3,13-dihydro-indeno[2',3':3,4]naphtho[1,2-b]pyran;

(PCDC-b36) 3,3-bis(4-fluorophenyl)-6-methoxy-7-(trans-4-(4'-(trans-4-pentylcyclohexyl)-[1,1'-biphenyl]-4-yloxycarbonyl)cyclohexanecarbonyloxy)-10,12-di(trifluoromethyl)-13,13-dimethyl-3,13-dihydro-indeno[2',3':3,4]naphtho[1,2-b]pyran;

(PCDC-b37) 3-(4-(piperidin-1-yl)phenyl)-3-phenyl-6-methoxy-7-(trans-4-(4'-(trans-4-pentylcyclohexyl)-[1,1'-biphenyl]-4-yloxycarbonyl)cyclohexanecarbonyloxy)-10,12-di(trifluoromethyl)-13,13-dimethyl-3,13-dihydro-indeno[2',3':3,4]naphtho[1,2-b]pyran;

(PCDC-b38) 3-(4-(N-morpholino)phenyl)-3-phenyl-6-methoxy-7-(trans-4-(4'-(trans-4-pentylcyclohexyl)-[1,1'-biphenyl]-4-yloxycarbonyl)cyclohexanecarbonyloxy)-10,12-di(trifluoromethyl)-13,13-dimethyl-3,13-dihydro-indeno[2',3':3,4]naphtho[1,2-b]pyran;

(PCDC-b39) 3-(4-(N-morpholino)phenyl)-3-phenyl-6-methoxy-7-(4-(4-((trans,trans)-4'-pentyl-[1,1'-bi(cyclohexane)]-4-carbonyloxy)phenyl)benzoyloxy)-10,12-di(trifluoromethyl)-13,13-dimethyl-3,13-dihydro-indeno[2',3':3,4]naphtho[1,2-b]pyran;

(PCDC-b40) 3,3-bis(4-methoxyphenyl)-6-methoxy-7-(4-(4-((trans,trans)-4'-pentyl-[1,1'-bi(cyclohexane)]-4-carbonyloxy)phenyl)benzoyloxy)-10,12-di(trifluoromethyl)-13,13-dimethyl-3,13-dihydro-indeno[2',3':3,4]naphtho[1,2-b]pyran;

(PCDC-b41) 3-(4-fluorophenyl)-3-(4-(piperidin-1-yl)phenyl)-6-methoxy-7-(4-(4-((trans,trans)-4'-pentyl-[1,1'-bi(cyclohexane)]-4-carbonyloxy)phenyl)benzoyloxy)-10,12-di(trifluoromethyl)-13,13-dimethyl-3,13-dihydro-indeno[2',3':3,4]naphtho[1,2-b]pyran;

(PCDC-b42) 3-(4-fluorophenyl)-3-(4-(piperidin-1-yl)phenyl)-6-methoxy-7-(trans-4-(4'-(trans-4-pentylcyclohexyl)-[1,1'-biphenyl]-4-yloxycarbonyl)cyclohexanecarbonyloxy)-10,12-di(trifluoromethyl)-13,13-dimethyl-3,13-dihydro-indeno[2',3':3,4]naphtho[1,2-b]pyran;

(PCDC-b43) 3,3-bis(4-methoxyphenyl)-6,13-dimethoxy-7-(trans-4-(4'-(trans-4-pentylcyclohexyl)-[1,1'-biphenyl]-4-yloxycarbonyl)cyclohexanecarbonyloxy)-13-ethyl-3,13-dihydro-indeno[2',3':3,4]naphtho[1,2-b]pyran;

(PCDC-b44) 3,3-bis(4-methoxyphenyl)-6-methoxy-7-(4-(4-(trans,trans-4'-pentyl-[1,1'-bi(cyclohexane)]-4-carbonyloxy)phenyl)piperazin-1-yl)-10,12-di(trifluoromethyl)-13,13-dimethyl-3,13-dihydro-indeno[2',3':3,4]naphtho[1,2-b]pyran;

(PCDC-b45) 3,3-bis(4-hydroxyphenyl)-6-methoxy-7-(4-(4-(trans,trans-4'-pentyl-[1,1'-bi(cyclohexane)]-4-carbonyloxy)phenyl)piperazin-1-yl)-10,12-di(trifluoromethyl)-13,13-dimethyl-3,13-dihydro-indeno[2',3':3,4]naphtho[1,2-b]pyran;

(PCDC-b46) 3,3-bis(4-fluorophenyl)-6-methoxy-7-(4-(4-(trans,trans-4'-pentyl-[1,1'-bi(cyclohexane)]-4-carbonyloxy)phenyl)piperazin-1-yl)-10,12-di(trifluoromethyl)-13,13-dimethyl-3,13-dihydro-indeno[2',3':3,4]naphtho[1,2-b]pyran;

(PCDC-b47) 3-(4-methoxyphenyl)-3-(4-N-morpholinophenyl)-6-methoxy-7-(4-(4-(trans,trans-4'-pentyl-[1,1'-bi(cyclohexane)]-4-carbonyloxy)phenyl)piperazin-1-yl)-10,12-di(trifluoromethyl)-13,13-dimethyl-3,13-dihydro-indeno[2',3':3,4]naphtho[1,2-b]pyran;

(PCDC-b48) 3,3-bis(4-methoxyphenyl)-6-methoxy-7-(4-(4-(trans-4-(4'-(trans-4-pentylcyclohexyl)-[1,1'-biphenyl]-4-yloxycarbonyl)cyclohexanecarbonyloxy)phenyl)piperazin-1-yl)-10,12-di(trifluoromethyl)-13,13-dimethyl-3,13-dihydro-indeno[2',3':3,4]naphtho[1,2-b]pyran;

(PCDC-b49) 3,3-bis(4-methoxyphenyl)-6-methoxy-7-(4-(4-(trans-4-(4-(trans-4-pentylcyclohexyl)-phenyloxycarbonyl)-cyclohexanecarbonyloxy)phenyl)piperazin-1-yl)-10,12-di(trifluoromethyl)-13,13-dimethyl-3,13-dihydro-indeno[2',3':3,4]naphtho[1,2-b]pyran;

(PCDC-b50) 3,3-bis(4-methoxyphenyl)-7-(4-(4-(trans-4-pentylcyclohexyl)phenoxycarbonyl)phenyl)-11-methyl-13,13-dimethyl-3,13-dihydro-indeno[2',3':3,4]naphtho[1,2-b]pyran;

(PCDC-b51) 3-(4-fluorophenyl)-3-(4-(piperidin-1-yl)phenyl)-6-methyl-7-(4-(4'-(trans-4-pentylcyclohexyl)-[1,1'-biphenyl]-4-ylcarboxamido)phenyl)-11-trifluoromethyl-13,13-dimethyl-3,13-dihydro-indeno[2',3':3,4]naphtho[1,2-b]pyran; (PCDC-b52) 3,3-bis(4-hydroxyphenyl)-6-methyl-7-(4-(4'-(trans-4-pentylcyclohexyl)-[1,1'-biphenyl]-4-ylcarboxamido)phenyl)-11-trifluoromethyl-13,13-dimethyl-3,13-dihydro-indeno[2',3':3,4]naphtho[1,2-b]pyran;

(PCDC-b53) 3,3-bis(4-methoxyphenyl)-6-methoxy-7-(4-(4-(trans,trans-4'-pentyl-[1,1'-bi(cyclohexane)]-4-carbonyloxy)phenyl)piperazin-1-yl)-11-trifluoromethyl-13,13-dimethyl-3,13-dihydro-indeno[2',3':3,4]naphtho[1,2-b]pyran;

(PCDC-b54) 3-(4-(4-methoxyphenyl)piperazin-1-yl)-3-phenyl-6-methoxy-7-(4-((4-(trans-4-propylcyclohexyl)phenoxy)carbonyl)phenyloxycarbonyl)-13,13-dimethyl-3,13-dihydro-indeno[2',3':3,4]naphtho[1,2-b]pyran; and

(PCDC-b55) 3,3-bis(4-methoxyphenyl)-7-(4-([1,1':4',1"-terphenyl]-4-ylcarbamoyl)piperazin-1-yl)-6,13-dimethoxy-13-trifluoromethyl-3,13-dihydro-indeno[2',3':3,4]naphtho[1,2-b]pyran.

More generally, the photochromic-dichroic compound(s) of the photochromic-dichroic layer of the photochromic-dichroic films prepared in accordance with the present invention include: (a) at least one photochromic group (PC), which can be chosen from, for example, pyrans, oxazines, and fulgides; and (b) at least one lengthening agent or group attached to the photochromic group. Such photochromic-dichroic compounds are described in detail in United States Patent No. 7,342,112 B1 at column 5, line 35 to column 14, line 54; and Table 1. Other suitable photochromic compounds and reaction schemes for their preparation can be found in United States Patent No. 7,342,112 B1 at column 23, line 37 to column 78, line 13.

Non-limiting examples of thermally reversible photochromic pyrans from which the photochromic (PC) group of the photochromic-dichroic compound can be chosen include benzopyrans, naphthopyrans, e.g., naphtho[1,2-b]pyrans, naphtho[2,1-b]pyrans, indeno-fused naphthopyrans, such as those disclosed in U.S. Patent 5,645,767, and heterocyclic-fused naphthopyrans, such as those disclosed in U.S. Patent Nos. 5,723,072, 5,698,141, 6,153,126, and 6,022,497; spirofluoreno[1,2-b]pyrans, such as spiro-9-fluoreno[1,2-b]pyrans; phenanthropyrans; quinopyrans; fluoroanthenopyrans; spiropyrans, e.g., spiro(benzindoline)naphthopyrans, spiro(indoline)benzopyrans, spiro(indoline)naphthopyrans, spiro(indoline)quinopyrans and spiro(indoline)pyrans. More specific examples of naphthopyrans and the complementary organic photochromic substances are described in U.S. Patent 5,658,501. Spiro(indoline)pyrans are also described in the text, Techniques in Chemistry, Volume III, "Photochromism", Chapter 3, Glenn H. Brown, Editor, John Wiley and Sons, Inc., New York, 1971.

Non-limiting examples of photochromic oxazines from which the PC group can be chosen include benzoxazines, naphthoxazines, and spiro-oxazines, e.g., spiro(indoline)naphthoxazines, spiro(indoline)pyridobenzoxazines, spiro(benzindoline)pyridobenzoxazines, spiro(benzindoline)naphthoxazines, spiro(indoline)benzoxazines, spiro(indoline)fluoranthenoxazine, and spiro(indoline)quinoxazine. Non-limiting examples of photochromic fulgides from which PC can be chosen include: fulgimides, and the 3-furyl and 3-thienyl fulgides and fulgimides, which are disclosed in U.S. Patent 4,931,220 and mixtures of any of the aforementioned photochromic materials/compounds.

In accordance with some embodiments, the photochromic-dichroic compound can include at least two photochromic compounds (PCs), in which case the PCs can be linked to one another via linking group substituents on the individual PCs. For example, the PCs can be polymerizable photochromic groups or photochromic groups that are adapted to be compatible with a host material ("compatibilized photochromic group"). Non-limiting examples of polymerizable photochromic groups from which PC can be chosen and that are useful in conjunction with various non-limiting embodiments of the present invention are disclosed in U.S. Patent 6,113,814. Non-limiting examples of compatiblized photochromic groups from which PC can be chosen and that are useful in conjunction with various non-limiting embodiments of the present invention are disclosed in U.S. Patent 6,555,028.

Other suitable photochromic groups and complementary photochromic groups are described in U.S. Patents 6,080,338 at column 2, line 21 to column 14, line 43; 6,136,968 at column 2, line 43 to column 20, line 67; 6,296,785 at column 2, line 47 to column 31, line 5; 6,348,604 at column 3, line 26 to column 17, line 15; 6,353,102 at column 1, line 62 to column 11, line 64; and 6,630,597 at column 2, line 16 to column 16, line 23.

With some embodiments of the present invention, the photochromic-dichroic compound includes at least one first photochromic moiety (or first PC moiety/group), and each photochromic moiety is independently selected from indeno-fused naphthopyrans, naphtho[1,2-b]pyrans, naphtho[2,1-b]pyrans, spirofluoroeno[1,2-b]pyrans, phenanthropyrans, quinolinopyrans, fluoroanthenopyrans, spiropyrans, benzoxazines, naphthoxazines, spiro(indoline)naphthoxazines, spiro(indoline)pyridobenzoxazines, spiro(indoline)fluoranthenoxazines, spiro(indoline)quinoxazines, fulgides, fulgimides, diarylethenes, diarylalkylethenes, diarylalkenylethenes, thermally reversible photochromic compounds, and non-thermally reversible photochromic compounds, and mixtures thereof.

The photochromic-dichroic compound(s) can be present in the photochromic-dichroic layer in amounts (or ratios) such that the photochromic-dichroic film exhibits desired optical properties, such as a desired level of photochromic activity and a desired level of dichroic activity. The particular amounts of the photochromic-dichroic compound(s) that are present in the photochromic-dichroic layer is not critical, with some embodiments, provided that at least a sufficient amount is present so as to produce the desired effect. For purposes of non-limiting illustration, the amount(s) of photochromic-dichroic compound(s) that are present in the photochromic-dichroic layer can depend on a variety of factors, such as but not limited to, the absorption characteristics of the particular photochromic-dichroic compound, the color and intensity particular photochromic-dichroic compound upon photochromic activation, and the level of dichroic activity of the particular photochromic-dichroic compound upon dichroic activation.

The photochromic-dichroic layer of the photochromic-dichroic films of the present invention can, with some

embodiments, include one or more photochromic-dichroic compounds, in an amount of from 0.01 to 40 weight percent, or from 0.05 to 15, or from 0.1 to 5 weight percent, based on the weight of the photochromic-dichroic layer.

The photochromic-dichroic compound(s) of the photochromic-dichroic layer of the photochromic-dichroic films of the present invention can be prepared in accordance with art-recognized methods. With some embodiments, the photochromic-dichroic compound(s) can be prepared in accordance with the description provided at column 35, line 28 through column 66, line 60 of United States Patent No. 7,256,921.

With some embodiments, the photochromic-dichroic layer, of the photochromic-dichroic film, further includes a phase-separated polymer that includes: a matrix phase that is at least partially ordered; and a guest phase that is at least partially ordered. The guest phase of the photochromic-dichroic layer includes the photochromic-dichroic compound, and the photochromic-dichroic compound is at least partially aligned with at least a portion of the guest phase of said photochromic-dichroic layer.

In accordance with further embodiments of the present invention, the photochromic-dichroic layer further includes an interpenetrating polymer network that includes: an anisotropic material that is at least partially ordered, and a polymeric material. The anisotropic material of the photochromic-dichroic layer includes the photochromic-dichroic compound, and the photochromic-dichroic compound is at least partially aligned with at least a portion of the anisotropic material of the photochromic-dichroic layer.

With some embodiments of the present invention, the photochromic-dichroic layer further includes an anisotropic material. As used herein the term "anisotropic" means having at least one property that differs in value when measured in at least one different direction. Accordingly, "anisotropic materials" are materials that have at least one property that differs in value when measured in at least one different direction. Non-limiting examples of anisotropic materials that can be included in the photochromic-dichroic layer include, but are not limited to, those liquid crystal materials as described further herein.

With some embodiments, the anisotropic material of the photochromic-dichroic layer includes a liquid crystal material. Classes of liquid crystal materials include, but are not limited to, liquid crystal oligomers, liquid crystal polymers, mesogenic compounds, and combinations thereof.

Liquid crystal materials, because of their structure, are generally capable of being ordered or aligned so as to take on a general direction. More specifically, because liquid crystal molecules have rod- or disc-like structures, a rigid long axis, and strong dipoles, liquid crystal molecules can be ordered or aligned by interaction with an external force or another structure such that the long axis of the molecules takes on an orientation that is generally parallel to a common axis. For example, it is possible to align the molecules of a liquid crystal material with a magnetic field, an electric field, linearly polarized infrared radiation, linearly polarized ultraviolet radiation, linearly polarized visible radiation, or shear forces. It is also possible to align liquid crystal molecules with an oriented surface. For example, liquid crystal molecules can be applied to a surface that has been oriented, for example by rubbing, grooving, or photo-alignment methods, and subsequently aligned such that the long axis of each of the liquid crystal molecules takes on an orientation that is generally parallel to the general direction of orientation of the surface. Examples of liquid crystal materials suitable for use as an anisotropic material include, but are not limited to, liquid crystal polymers, liquid crystal pre-polymers, liquid crystal monomers, and liquid crystal mesogens. As used herein the term "pre-polymer" means partially polymerized materials.

Liquid crystal polymers and pre-polymers, from which the anisotropic material can be selected include, but are not limited to, main-chain liquid crystal polymers and pre-polymers and side-chain liquid crystal polymers and pre-polymers. With main-chain liquid crystal polymers and pre-polymers, rod- or disc-like liquid crystal mesogens are primarily located within the polymer backbone. With side-chain liquid crystal polymers and pre-polymers, the rod- or disc-like liquid crystal mesogens primarily are located within the side chains of the polymer.

Examples of liquid crystal polymers and pre-polymers, from which the anisotropic material can be selected, include, but are not limited to, main-chain and side-chain polymers and pre-polymers having functional groups chosen from acrylates, methacrylates, allyl, allyl ethers, alkynes, amino, anhydrides, epoxides, hydroxides, isocyanates, blocked isocyanates, siloxanes, thiocyanates, thiols, urea, vinyl, vinyl ethers, and blends thereof. Examples of photocross-linkable liquid crystal polymers and pre-polymers, that the anisotropic material can be selected from, include, but are not limited to, those polymers and pre-polymers having functional groups chosen from acrylates, methacrylates, alkynes, epoxides, thiols, and blends thereof.

Liquid crystal mesogens, from which the anisotropic material can be selected, include, but are not limited to, thermotropic liquid crystal mesogens and lyotropic liquid crystal mesogens. Additional classes of liquid crystal mesogens, that can be independently included in the first and second alignment layers, include, but are not limited to, columatic (or rod-like) liquid crystal mesogens and discotic (or disc-like) liquid crystal mesogens.

With some embodiments, the photochromic-dichroic layer includes: (i) liquid crystal oligomers and/or polymers prepared at least in part from the monomeric mesogenic compounds; and/or (ii) the mesogenic compounds, in each case as disclosed in Table 1 of United States Patent No. 7,910,019 B2 at columns 43-90 thereof.

In accordance with some embodiments of the present invention, the photochromic-dichroic compound(s), of the photochromic-dichroic layer are at least partially aligned by interaction with the anisotropic material of the photochromic-dichroic layer, which itself is at least partially ordered. For purposes of non-limiting illustration, at least a portion of the photochromic-dichroic compound can be aligned such that the long-axis of the photochromic-dichroic compound in the dichroic state is essentially parallel to the general direction of the anisotropic material of the photochromic-dichroic layer. Further, although not required, the photochromic-dichroic compound(s) can be bound to or reacted with at least a portion of the at least partially ordered anisotropic material of the photochromic-dichroic layer.

Methods of ordering, or introducing order into, the anisotropic material of the photochromic-dichroic layer include, but are not limited to, exposing the anisotropic material to at least one of a magnetic field, an electric field, linearly polarized ultraviolet radiation, linearly polarized infrared radiation, linearly polarized visible radiation, and a shear force.

By ordering at least a portion of the anisotropic material, it is possible to at least partially align at least a portion of the photochromic-dichroic compound that is contained within or otherwise connected to the anisotropic material of the photochromic-dichroic layer. Although not required, the photochromic-dichroic compound can be at least partially aligned while in an activated state. With some embodiments, ordering of the anisotropic material and/or aligning the photochromic-dichroic compound can each independently occur prior to, during, or after formation of the photochromic-dichroic layer.

The photochromic-dichroic compound and the related anisotropic material can each independently be aligned and ordered during formation of the photochromic-dichroic layer. With some embodiments, the photochromic-dichroic layer can be subjected to stretching, such as unilateral or bilateral stretching as it is being formed (prior to cooling below its melting point) and/or after it has been formed (after it has cooled to below its melting point). With some embodiments, shear forces imparted by the rotating roll and the continuous belt can result in alignment of the photochromic-dichroic compound and the related anisotropic material. With additional embodiments, exposure of the molten stream (or molten extrudate) to actinic radiation as it drops vertically prior to contacting the rotating roll, can convert the photochromic-dichroic compound to an activated state, at least partial alignment of the photochromic-dichroic compound while in the activated state can also be achieved.

According to some embodiments, the anisotropic material can be adapted to allow the photochromic-dichroic compound to switch from a first state to a second state at a desired rate. In general, conventional photochromic compounds can undergo a transformation from one isomeric form to another in response to actinic radiation, with each isomeric form having a characteristic absorption spectrum. The photochromic-dichroic compound of the photochromic-dichroic layer of the photochromic-dichroic films of the present invention can undergo a similar isomeric transformation. Without intending to be bound by any theory, the rate or speed at which this isomeric transformation (and the reverse transformation) occurs depends, in part, upon the properties of the local environment surrounding the particular photochromic-dichroic compound (which can be referred to as the "host"). Although not limiting herein, it is believed based on the evidence at hand that the rate of transformation of the photochromic-dichroic compound depends, in part, upon the flexibility of the chain segments of the respective host, and more particularly on the mobility or viscosity of the chain segments of the respective host. Correspondingly it is believed, without intending to be bound by any theory, that the rate of transformation of the photochromic-dichroic compound is generally faster in hosts having flexible chain segments, than in hosts having stiff or rigid chain segments. As such, and in accordance with some embodiments, when the anisotropic material is a host, the anisotropic material can be adapted to allow the photochromic-dichroic compound to transform between various isomeric states at desired rates. For example, the anisotropic material can be adapted by adjusting the molecular weight of the anisotropic material.

In accordance with some embodiments, the photochromic-dichroic compound(s) of the photochromic-dichroic layer can be encapsulated or overcoated with an anisotropic material having relatively flexible chain segments, such as a liquid crystal material, and thereafter dispersed or distributed in another material having relatively rigid chain segments. The encapsulating anisotropic material can be at least partially ordered. For example, the encapsulated photochromic-dichroic compound can be dispersed or distributed in a liquid crystal polymer having relatively rigid chain segments and thereafter the mixture can be incorporated into the molten thermoplastic photochromic-dichroic composition.

The photochromic-dichroic films of the present invention can be used to prepare or as part of numerous photochromic-dichroic articles. Examples of such photochromic-dichroic articles include, but are not limited to, ophthalmic articles or elements, display articles or elements, windows, mirrors, packaging material such as shrink-wrap, and active and passive liquid crystal cell articles or elements.

Photochromic-dichroic articles can be prepared with the photochromic-dichroic films of the present invention by methods including, but not limited to, lamination methods, film-insert molding methods, and combinations thereof. In accordance with some embodiments, lamination methods include, applying one or more photochromic-dichroic films can to one or more surfaces of a substrate, which results in the formation of a photochromic-dichroic article. One or more adhesive layers can optionally be present between the substrate and the photochromic-dichroic film. With some embodiments, the photochromic-dichroic film can be adhered to a substrate by the application of elevated temperature. Film-insert molding methods include, with some embodiments, inserting one or more photochromic-dichroic films into a mold, introducing (e.g., injecting) a thermoplastic and/or thermosetting composition into the mold, and removing a molded photochromic-dichroic article from the mold. The photochromic-dichroic film can be positioned so as to: abut an

interior surface of the mold; and/or be suspended within the interior of the mold.

Examples of ophthalmic articles or elements include, but are not limited to, corrective and non-corrective lenses, including single vision or multi-vision lenses, which can be either segmented or non-segmented multi-vision lenses (such as, but not limited to, bifocal lenses, trifocal lenses and progressive lenses), as well as other elements used to correct, protect, or enhance (cosmetically or otherwise) vision, including without limitation, contact lenses, intra-ocular lenses, magnifying lenses, protective lenses, and visors, such as protective visors.

Examples of display articles, elements and devices include, but are not limited to, screens, monitors, and security elements, including without limitation, security marks and authentication marks.

Examples of windows include, but are not limited to, automotive and aircraft transparencies, filters, shutters, and optical switches.

With some embodiments, the photochromic-dichroic article can be a security element. Examples of security elements include, but are not limited to, security marks and authentication marks that are connected to at least a portion of a substrate, such as: access cards and passes, e.g., tickets, badges, identification or membership cards, debit cards, etc.; negotiable instruments and non-negotiable instruments e.g., drafts, checks, bonds, notes, certificates of deposit, stock certificates, etc.; government documents, e.g., currency, licenses, identification cards, benefit cards, visas, passports, official certificates, deeds etc.; consumer goods, e.g., software, compact discs ("CDs"), digital-video discs ("DVDs"), appliances, consumer electronics, sporting goods, cars, etc.; credit cards; and merchandise tags, labels and packaging.

With further embodiments, the security element can be connected to at least a portion of a substrate chosen from a transparent substrate and a reflective substrate. Alternatively, according to further embodiments in which a reflective substrate is required, if the substrate is not reflective or sufficiently reflective for the intended application, a reflective material can be first applied to at least a portion of the substrate before the security mark is applied thereto. For example, a reflective aluminum coating can be applied to the at least a portion of the substrate prior to forming the security element thereon. Additionally or alternatively, the security element can be connected to at least a portion of a substrate chosen from untinted substrates, tinted substrates, photochromic substrates, tinted-photochromic substrates, linearly polarizing, circularly polarizing substrates, and elliptically polarizing substrates.

Furthermore, security elements according to the aforementioned embodiments can further include one or more other coatings or films or sheets to form a multi-layer reflective security element with viewing angle dependent characteristics, such as described in U.S. Patent 6,641,874.

The present invention is more particularly described in the following examples, which are intended to be illustrative only, since numerous modifications and variations therein will be apparent to those skilled in the art. Unless otherwise specified, all parts and all percentages are by weight.

## EXAMPLES

Part 1 demonstrates the preparation of a monolayer film (not according to the present invention) of PEBAX® 5533 SA 01 containing photochromic-dichroic dyes. Part 2 describes performance of the film using the DICHROIC RATIO TEST METHOD.

Part 1.

A photochromic-dichroic dye-containing master batch was first prepared by extruding 10.01 g 2,2-di(4-fluorophenyl)-5-((2-methoxy)ethoxycarbonyl)-6-methyl-8-[(4-(4-(4-(trans-4-pentylcyclohexyl)benzoyloxy)phenyl)cyclohexyloxy)carbonyl]-2H-naphtho[1,2-b]pyran dye and 10.01 g 2-(4-piperidinophenyl)-2-phenyl-5-methoxycarbonyl-6-methyl-8-[(4-(4-(4-(trans-4-pentylcyclohexyl)benzoyloxy)phenyl)cyclohexyloxy)carbonyl]-2H-naphtho[1,2-b]pyran dye and 380.5 g of cryo pulverized PEBAX 5533 SA 01 polymer into a strand using an extruder manufactured by PRISM. The molten strand was subsequently cooled through a water bath. The strand was then dried using an air blower and subsequently chopped into granules using a SCHEER® model SGS 50 strand granulator. 39.95 g of PEBAX 5533 SA 01 was then added to these granules to achieve the desired dye concentration.

This master batch was added into the empty hopper of a COLLIN® 45 mm single screw extruder. The extruder barrel temperature was ramped from a low temperature to a higher temperature through four heating zones in order to generate melt conditions suitable for film extrusions. The molten polymer was then fed to a feedblock and subsequently to an extrusion die. The melt temperature was measured as 205°C, with a melt pressure of 64 bar and a die temperature of 220°C.

The resultant molten film was subsequently fed to a calender consisting of a rotating metal chill roll and a continuous polished metal belt under tension, maintained at a constant speed with a chill roll temperature of 20°C, clamping force of 250N, and a sleeve tension of 70N.

Sections of the film were stretched to a stretch ratio of 5X original length using a tensile tester as supplied by Lloyd Instruments, Ltd. The samples were annealed at a temperature of approximately 120°C for two minutes while

clamped in the tensile tester. The heat was supplied by an Infrared heat lamp held at a distance of approximately 10cm. The samples were subsequently removed from the tensile tester and their dichroic properties measured.

Part 2.

DICHROIC RATIO TEST METHOD

An optical bench was used in the DICHROIC RATIO TEST METHOD to measure the average Dichroic Ratios (DR) the samples prepared in Example 1 as follows. Prior to testing, six samples were cut into sections that were at least 7 cm by 4 cm and held in a purpose made aluminum frame clamp. The clamped samples were exposed to activating radiation for 5 minutes at a distance of 15 centimeters (cm) from a bank of four UV Tubes BLE-7900B supplied by Spectronics Corp and then placed for 30 minutes at a distance of 15 cm from a bank of four UVless tubes F40GO supplied by General Electric and finally held in the dark for at least 30 minutes. Afterwards the clamped sample was placed in a spring loaded holder on an optical bench. The optical bench included an activating light source (an Oriel Model 66011 300-Watt Xenon arc lamp fitted with a Melles Griot 04 IES 211 high-speed computer controlled shutter that momentarily closed during data collection so that stray light would not interfere with the data collection process, a Schott 3 mm KG-2 band-pass filter, which removed short wavelength radiation, neutral density filter(s) for intensity attenuation and a condensing lens for beam collimation) positioned at a 300 angle of incidence to the surface of the sample. An HL-2000 tungsten halogen lamp from Ocean Optics equipped with a fiber optic cable used for monitoring response measurements was positioned in a perpendicular manner to the surface of the sample. Linear polarization of the light source was achieved by passing the light from the end of the cable through a Moxtek, Proflux Polarizer held in a computer driven, motorized rotation stage (Model M-061-PD from Polytech, PI). The monitoring beam was set so that the one polarization plane (0°) was perpendicular to the plane of the optical bench table and the second polarization plane (90°) was parallel to the plane of the optical bench table. The samples were run in air, at room temperature (22.8°C ± 2.8°C (73° F.±5° F.)) maintained by the lab air conditioning system.

To conduct the measurements, the samples were exposed to 1.25 W/m$^2$ of UVA from the activating light source for 300 seconds to activate the photochromic-dichroic compound. An International Light Research Radiometer (Model IL-1700) with a detector system (Model SED033 detector, B Filter, and diffuser) was used to verify exposure prior to each test. Light from the monitoring source that was polarized in the 0° polarization plane was then passed through sample and focused on a 50,8 mm (2") integrating sphere, which was connected to a Ocean Optics 2000 spectrophotometer using a single function fiber optic cable. The spectral information after passing through the sample was collected using Ocean Optics OOIBase32 and OOIColor software, and PPG propriety software. While the photochromic-dichroic compound was activated, the position of the polarizing sheet was rotated back and forth to polarize the light from the monitoring light source to the 90° polarization plane and back. Data was collected at 3-second intervals during activation. For each test, rotation of the polarizers was adjusted to collect data in the following sequence of polarization planes: 0°, 90°, 90°, 0° etc.

Response measurements, in terms of a change in optical density between the unactivated or bleached state and the activated or colored state were determined by establishing the initial unactivated transmittance, opening the shutter from the Xenon lamp(s) and measuring the transmittance through activation at selected intervals of time. During the times of the actual transmission measurement, the Xenon beam was briefly closed to prevent light scattering.

Absorption spectra were obtained and analyzed for each sample using the Igor Pro software (available from WaveMetrics). The change in the absorbance for each sample was calculated by subtracting out the 0 time (i.e., unactivated) absorption measurement for each wavelength tested. Average absorbance values were obtained in the region of the activation profile where the photochromic response was saturated or nearly saturated (i.e., the regions where the absorbance did not increase or did not increase significantly over time) for each sample by averaging the absorbance taken at each time interval for each sample in this region (for each wavelength extracted were averaged of 5 to 100 data points). The average absorbance values in a predetermined range of wavelengths corresponding maximum-visible +/- 5 nm were extracted for the 0° and 90° polarizations, and the dichroic ratio for each wavelength in this range was calculated by dividing the larger average absorbance by the small average absorbance. For each wavelength extracted, 5 to 100 data points were averaged. The average dichroic ratio for the sample was then calculated by averaging these individual dichroic ratios. The lambda max or maximum lambda reported below is the wavelength where a peak in absorbance was observed for the sample in the crossed polarization state (sample polarization direction is 90 degrees to the Moxtek, Proflux Polarizer). Results are presented below in Table 1.

Table 1. Dichroic ratio test results.

| Sample | DR | Max A, nm |
|---|---|---|
| 1 | 5.6 | 577 |

(continued)

| Sample | DR | Max A, nm |
|---|---|---|
| 2 | 5.4 | 575 |
| 3 | 5.7 | 575 |
| 4 | 5.4 | 579 |
| 5 | 5.9 | 572 |
| 6 | 5.6 | 577 |

The present invention has been described with reference to specific details of particular embodiments thereof. It is not intended that such details be regarded as limitations upon the scope of the invention except insofar as and to the extent that they are included in the accompanying claims.

## Claims

1. A method of preparing a photochromic-dichroic film (23) comprising a photochromic-dichroic layer (29'), said method comprising:

   (a) forming a molten thermoplastic photochromic-dichroic composition comprising a thermoplastic polymer and a photochromic-dichroic compound, and
   forming at least one further molten thermoplastic composition, each further thermoplastic composition independently comprising a further thermoplastic polymer;
   (b) forming a molten stream (17) comprising, a first molten layer (29) comprising said molten thermoplastic photochromic-dichroic composition, and at least one further molten layer (26, 32), each further molten layer (26, 32) independently comprising said further molten thermoplastic composition;
   (c) passing said molten stream (17) between and in contact with both a rotating roll (11) and a continuous belt (14) that is moving,
   wherein said rotating roll (11) rotates in a first direction (59), said continuous belt (14) moves in a second direction (56), and said first direction (59) and said second direction (56) each correspond to a same relative direction (62);
   (d) obtaining said photochromic-dichroic film (23) from between said rotating roll (11) and said continuous belt (14), wherein said photochromic-dichroic film (23) comprises said photochromic-dichroic layer (29'), and said photochromic-dichroic layer (29') is formed from said first molten layer (29), wherein said photochromic-dichroic film (23) comprises said photochromic-dichroic layer (29') interposed between a first further layer (26') and a second further layer (32'), said first further layer (26') and said second further layer (32') each independently being formed from said further molten layer (26, 32); and
   (e) collecting said photochromic-dichroic film (23) on a collection roll thereby forming a wound roll, wherein said first further layer (26') defines a first exterior surface (95') of said photochromic-dichroic film (23), and said second further layer (32') defines a second exterior surface (98') of said photochromic-dichroic film (23),
   at least one of said first exterior surface (95') and said second exterior surface (98') comprising micro-grooves, and said micro-grooves being dimensioned to allow gas to escape from between overlapping layers of said photochromic-dichroic film (23) residing on said wound roll.

2. The method of claim 1 wherein

   - said molten thermoplastic photochromic-dichroic composition is formed in an extruder (35) having a terminal portion (38), each further molten thermoplastic composition is formed in at least one further extruder (44) each having a terminal portion (47), the terminal portion (38) of said extruder (35) and the terminal portion (47) of each further extruder (44) being in fluid communication with a die (53), and said molten stream (17) is a molten extrudate that emerges from said die (53); or
   - said rotating roll (11) is rotated at a circumferential velocity, said continuous belt (14) is moved at a linear velocity, and said circumferential velocity of said rotating roll (11) and said linear velocity of said continuous belt (14) are substantially equivalent; or
   - said continuous belt (14) provides substantially uniform pressure to said molten stream (17) as said molten stream (17) passes between and in contact with both of said rotating roll (11) and said continuous belt (14).

**3.** The method of claim 1 wherein said rotating roll (11) has an exterior surface (68), and said continuous belt (14) has an exterior surface (71),

a portion of said exterior surface (68) of said rotating roll (11) and a portion of said exterior surface (71) of said continuous belt (14) being in facing opposition to each other, and
said molten stream (17) passing between and in contact with both of said portion of said exterior surface (68) of said rotating roll (11) and said portion of said exterior surface (71) of said continuous belt (14) that are in facing opposition to each other.

**4.** The method of claim 3 wherein said exterior surface (68) of said rotating roll (11) and said exterior surface (71) of said continuous belt (14) each independently have a surface roughness value (Ra) of less than or equal to 50 micrometers.

**5.** The method of claim 4 wherein each exterior surface (95', 98') of said photochromic-dichroic film (23) independently have a surface roughness value (Ra) of less than or equal to 50 micrometers.

**6.** The method of claim 3 wherein said exterior surface (68) of said rotating roll (11) and said exterior surface (71) of said continuous belt (14) are each independently defined by an elastomeric polymer, a metal, and combinations thereof.

**7.** The method of claim 6 wherein said elastomeric polymer is selected from silicone rubber, polytetrafluoroethylene, polypropylene, and combinations thereof.

**8.** The method of claim 3 wherein said exterior surface (68) of said rotating roll (11) and said exterior surface (71) of said continuous belt (14) are each independently defined by a metal.

**9.** The method of claim 8 wherein said metal is stainless steel.

**10.** The method of claim 3 wherein at least 10 percent and less than or equal to 75 percent of said exterior surface (68) of said rotating roll (11) is in facing opposition with said exterior surface (71) of said continuous belt (14).

**11.** The method of claim 1 wherein

- said thermoplastic polymer and said further thermoplastic polymer each independently comprise at least one of, thermoplastic polyurethane, thermoplastic polycarbonate, thermoplastic polyester, thermoplastic polyolefin, thermoplastic(meth)acrylate, thermoplastic polyamide, thermoplastic polysulfone, thermoplastic poly(ether-amide) block copolymers, thermoplastic poly(ester-ether) block copolymers, thermoplastic poly(ether-urethane) block copolymers, thermoplastic poly(ester-urethane) block copolymers, and thermoplastic poly(ether-urea) block copolymers; or
- said molten stream (17) consists of said first molten layer (29), and said photochromic-dichroic layer (29') defines said photochromic-dichroic film (23).

**12.** The method of claim 1 wherein,

said photochromic-dichroic layer (29') comprises thermoplastic poly(ether-amide) block copolymer,
said first further layer (26') comprises thermoplastic poly(ethylene-vinyl acetate) copolymer, and
said second further layer (32') comprises thermoplastic poly(ethylene-vinyl acetate) copolymer.

**13.** The method of claim 1 further comprising,

- storing said wound roll, or
- removing, from said photochromic-dichroic layer (29'), said first further layer (26') and said second further layer (32'), and
retaining said photochromic-dichroic layer (29'),
wherein said photochromic-dichroic layer (29') defines said photochromic-dichroic film (23); or
- subjecting said photochromic-dichroic film (23) to stretching selected from unilateral stretching and bilateral stretching, wherein stretching results in separation of said first further layer (26') from said photochromic-dichroic layer (29'), and separation of said second further layer (32') from said photochromic-dichroic layer (29'),

- removing, from said photochromic-dichroic layer (29'), said first further thermoplastic layer (26') and said second further thermoplastic layer (32'), and
retaining said photochromic-dichroic layer (29'),
wherein said photochromic-dichroic layer (29') defines said photochromic-dichroic film (23).

**14.** The method of claim 1 wherein

- said photochromic-dichroic compound comprises at least one photochromic moiety, and each photochromic moiety is independently selected from indeno-fused naphthopyrans, naphtho[1,2-b]pyrans, naphtho[2,1-b]pyrans, spirofluoroeno[1,2-b]pyrans, phenanthropyrans, quinolinopyrans, fluoroanthenopyrans, spiropyrans, benzoxazines, naphthoxazines, spiro(indoline)naphthoxazines, spiro(indoline)pyridobenzoxazines, spiro(indoline)fluoranthenoxazines, spiro(indoline)quinoxazines, fulgides, fulgimides, diarylethenes, diarylalkylethenes, diarylalkenylethenes, thermally reversible photochromic compounds, and non-thermally reversible photochromic compounds, and mixtures thereof; or
- said photochromic-dichroic layer (29') further comprises at least one additive selected from dyes, alignment promoters, horizontal alignment agents, kinetic enhancing additives, polymerization inhibitors, solvents, light stabilizers, heat stabilizers, plasticizers, mold release agents, rheology control agents, leveling agents, free radical scavengers, and adhesion promoters; or
- said photochromic-dichroic layer (29') further comprises at least one dichroic material chosen from azomethines, indigoids, thioindigoids, merocyanines, indans, quinophthalonic dyes, perylenes, phthaloperines, triphenodioxazines, indoloquinoxalines, imidazo-triazines, tetrazines, azo and (poly)azo dyes, benzoquinones, naphthoquinones, anthraquinone and (poly)anthraquinones, anthrapyrimidinones, iodine and iodates.

## Patentansprüche

**1.** Verfahren zur Herstellung eines photochrom-dichroitischen Films (23), der eine photochrom-dichroitische Schicht (29') umfasst, wobei das Verfahren umfasst:

(a) Bilden einer geschmolzenen thermoplastischen photochrom-dichroitischen Zusammensetzung, die ein thermoplastisches Polymer und eine photochrom-dichroitische Verbindung umfasst, und
Bilden wenigstens einer weiteren geschmolzenen thermoplastischen Zusammensetzung, wobei jede weitere thermoplastische Zusammensetzung unabhängig ein weiteres thermoplastisches Polymer umfasst;
(b) Bilden eines geschmolzenen Stroms (17), der eine erste geschmolzene Schicht (29), die die geschmolzene thermoplastische photochrom-dichroitische Zusammensetzung umfasst, und wenigstens eine weitere geschmolzene Schicht (26, 32) umfasst, wobei jede weitere geschmolzene Schicht (26, 32) unabhängig die weitere geschmolzene thermoplastische Zusammensetzung umfasst;
(c) Führen des geschmolzenen Stroms (17) zwischen und in Kontakt mit einer sich drehenden Walze (11) und einem sich bewegenden kontinuierlichen Band (14), wobei sich die sich drehende Walze (11) in eine erste Richtung dreht (59), sich das kontinuierliche Band (14) in eine zweite Richtung (56) bewegt und die erste Richtung (59) und die zweite Richtung (56) jeweils einer gleichen relativen Richtung (62) entsprechen;
(d) Erhalten des photochrom-dichroitischen Films (23) aus zwischen der sich drehenden Walze (11) und dem kontinuierlichen Band (14), wobei der photochrom-dichroitische Film (23) die photochrom-dichroitische Schicht (29') umfasst und die photochrom-dichroitische Schicht (29') aus der ersten geschmolzenen Schicht (29) gebildet wird, wobei der photochrom-dichroitische Film (23) die photochrom-dichroitische Schicht (29') zwischen einer ersten weiteren Schicht (26') und einer zweiten weiteren Schicht (32') angeordnet aufweist, wobei die erste weitere Schicht (26') und die zweite weitere Schicht (32') jeweils unabhängig aus der weiteren geschmolzenen Schicht (26, 32) gebildet sind; und
(e) Sammeln des photochrom-dichroitischen Films (23) auf einer Sammelrolle, um eine gewickelte Rolle zu bilden, wobei die erste weitere Schicht (26') eine erste Außenoberfläche (95') des photochrom-dichroitischen Films (23) definiert und die zweite weitere Schicht (32') eine zweite Außenoberfläche (98') des photochrom-dichroitischen Films (23) definiert,
wobei wenigstens eine von der ersten Außenoberfläche (95') und der zweiten Außenoberfläche (98') Mikrorillen umfasst und die Mikrorillen bemessen sind, Entweichen von Gas aus zwischen übereinanderliegenden Schichten des auf der gewickelten Rolle angeordneten photochrom-dichroitischen Films (23) zu erlauben.

**2.** Verfahren gemäß Anspruch 1, wobei

- die geschmolzene thermoplastische photochrom-dichroitische Zusammensetzung in einem Extruder (35) gebildet wird, der einen Endabschnitt (38) aufweist, jede weitere geschmolzene thermoplastische Zusammensetzung in wenigstens einem weiteren Extruder (44) gebildet wird, die jeweils einen Endabschnitt (47) aufweisen, der Endabschnitt (38) des Extruders (35) und der Endabschnitt (47) jedes weiteren Extruders (44) in Fluidkommunikation mit einem Düsenkopf (53) stehen und der geschmolzene Strom (17) ein geschmolzenes Extrudat ist, das aus dem Düsenkopf (53) austritt; oder
- die sich drehende Walze (11) mit einer Umfangsgeschwindigkeit gedreht wird, das kontinuierliche Band (14) mit einer Lineargeschwindigkeit bewegt wird und die Umfangsgeschwindigkeit der sich drehenden Walze (11) und die Lineargeschwindigkeit des kontinuierlichen Bands (14) im Wesentlichen äquivalent sind; oder
- das kontinuierliche Band (14) einen im Wesentlichen gleichmäßigen Druck auf den geschmolzenen Strom (17) ausübt, während der geschmolzene Strom (17) zwischen und in Kontakt mit der sich drehenden Walze (11) und dem kontinuierlichen Band (14) durchtritt.

3. Verfahren gemäß Anspruch 1, wobei die sich drehende Walze (11) eine Außenoberfläche (68) aufweist und das kontinuierliche Band (14) eine Außenoberfläche (71) aufweist,
ein Teil der Außenoberfläche (68) der sich drehenden Walze (11) und ein Teil der Außenoberfläche (71) des kontinuierlichen Bands (14) einander gegenüberliegen und der geschmolzene Strom (17) zwischen und in Kontakt mit dem Teil der Außenoberfläche (68) der sich drehenden Walze (11) und dem Teil der Außenoberfläche (71) des kontinuierlichen Bands (14), die einander gegenüberliegen, durchtritt.

4. Verfahren gemäß Anspruch 3, wobei die Außenoberfläche (68) der sich drehenden Walze (11) und die Außenoberfläche (71) des kontinuierlichen Bands (14) unabhängig voneinander jeweils einen Oberflächenrauigkeitswert (Ra) von kleiner als oder gleich 50 Mikrometer aufweisen.

5. Verfahren gemäß Anspruch 4, wobei jede Außenoberfläche (95', 98') des photochrom-dichroitischen Films (23) unabhängig einen Oberflächenrauigkeitswert (Ra) von kleiner als oder gleich 50 Mikrometer aufweist.

6. Verfahren gemäß Anspruch 3, wobei die Außenoberfläche (68) der sich drehenden Walze (11) und die Außenoberfläche (71) des kontinuierlichen Bands (14) jeweils unabhängig durch ein elastomeres Polymer, ein Metall oder Kombinationen davon definiert sind.

7. Verfahren gemäß Anspruch 6, wobei das elastomere Polymer ausgewählt ist aus Siliconkautschuk, Polytetrafluorethylen, Polypropylen und Kombinationen davon.

8. Verfahren gemäß Anspruch 3, wobei die Außenoberfläche (68) der sich drehenden Walze (11) und die Außenoberfläche (71) des kontinuierlichen Bands (14) jeweils unabhängig durch ein Metall definiert sind.

9. Verfahren gemäß Anspruch 8, wobei das Metall rostfreier Stahl ist.

10. Verfahren gemäß Anspruch 3, wobei wenigstens 10 Prozent und weniger als oder gleich 75 Prozent der Außenoberfläche (68) der sich drehenden Walze (11) der Außenoberfläche (71) des kontinuierlichen Bands (14) gegenüberliegen.

11. Verfahren gemäß Anspruch 1, wobei

- das thermoplastische Polymer und das weitere thermoplastische Polymer jeweils unabhängig wenigstens eines von thermoplastischem Urethan, thermoplastischem Polycarbonat, thermoplastischem Polyester, thermoplastischem Polyolefin, thermoplastischem (Meth)acrylat, thermoplastischem Polyamid, thermoplastischem Polysulfon, thermoplastischen Poly(ether-amid)-Blockcopolymeren, thermoplastischen Poly(ester-ether)-Blockcopolymeren, thermoplastischen Poly(ether-urethan)-Blockcopolymeren, thermoplastischen Poly(ester-urethan)-Blockcopolymeren und thermoplastischen Poly(ether-harnstoff)-Blockcopolymeren umfassen; oder
- der geschmolzene Strom (17) aus der ersten geschmolzenen Schicht (29) besteht und die photochrom-dichroitische Schicht (29') den photochrom-dichroitischen Film (23) definiert.

12. Verfahren gemäß Anspruch 1, wobei

die photochrom-dichroitische Schicht (29') thermoplastisches Poly(ether-amid)-Blockcopolymer umfasst,

die erste weitere Schicht (26') thermoplastisches Poly(ethylen-vinylacetat)-Copolymer umfasst und die zweite weitere Schicht (32') thermoplastisches Poly(ethylen-vinylacetat)-Copolymer umfasst.

**13.** Verfahren gemäß Anspruch 1, ferner umfassend

- Lagern der gewickelten Rolle; oder
- Entfernen der ersten weiteren Schicht (26') und der zweiten weiteren Schicht (32') von der photochrom-dichroitischen Schicht (29') und
Behalten der photochrom-dichroitischen Schicht (29'),
wobei die photochrom-dichroitische Schicht (29') den photochrom-dichroitischen Film (23) definiert; oder
- Unterwerfen des photochrom-dichroitischen Films (23) an Strecken ausgewählt aus unilateralem Strecken und bilateralem Strecken, wobei Strecken zu Trennen der ersten weiteren Schicht (26') von der photochrom-dichroitischen Schicht (29') und Trennen der zweiten weiteren Schicht (32') von der photochrom-dichroitischen Schicht (29') führt,
- Entfernen der ersten weiteren thermoplastischen Schicht (26') und der zweiten weiteren thermoplastischen Schicht (32') von der photochrom-dichroitischen Schicht (29') und
Behalten der photochrom-dichroitischen Schicht (29'),
wobei die photochrom-dichroitische Schicht (29') den photochrom-dichroitischen Film (23) definiert.

**14.** Verfahren gemäß Anspruch 1, wobei

- die photochrom-dichroitische Verbindung wenigstens eine photochrome Einheit umfasst und jede photochrome Einheit unabhängig ausgewählt ist aus indeno-anellierten Naphthopyranen, Naphtho[1,2-b]pyranen, Naphtho[2,1-b]pyranen, Spirofluoreno[1,2-b]pyranen, Phenanthropyranen, Chinolinopyranen, Fluoranthenopyranen, Spiropyranen, Benzoxazinen, Naphthoxazinen, Spiro(indolin)naphthoxazinen, Spiro(indolin)pyridobenzoxazinen, Spiro(indolin)fluoranthenoxazinen, Spiro(indolin)chinoxazinen, Fulgiden, Fulgimiden, Diarylethenen, Diarylalkylethenen, Diarylalkenylethenen, thermisch reversiblen photochromen Verbindungen und nicht thermisch reversiblen photochromen Verbindungen und Gemischen davon; oder
- die photochrom-dichroitische Schicht (29') ferner wenigstens einen Zusatzstoff ausgewählt aus Farbstoffen, Ausrichtungsförderern, Horizontalausrichtungsmitteln, kinetikverbessernden Zusatzstoffen, Polymerisationshemmern, Lösungsmitteln, Lichtstabilisatoren, Wärmestabilisatoren, Weichmachern, Formtrennmitteln, rheologiesteuernden Mitteln, Verlaufmitteln, Radikalfängern und Haftförderern umfasst; oder
- die photochrom-dichroitische Schicht (29') ferner wenigstens ein dichroitisches Material ausgewählt aus Azomethinen, Indigoiden, Thioindigoiden, Merocyaninen, Indanen, Chinophthalon-Farbstoffen, Perylenen, Phthaloperinen, Triphenodioxazinen, Indolochinoxalinen, Imidazotriazinen, Tetrazinen, Azo- und (Poly)azofarbstoffen, Benzochinonen, Naphthochinonen, Anthrachinon und (Poly)anthrachinonen, Anthrapyrimidinonen, Iod und Iodaten umfasst.

## Revendications

**1.** Procédé de préparation d'un film photochromique-dichroïque (23) comprenant une couche photochromique-dichroïque (29'), ledit procédé comprenant :

(a) la formation d'une composition photochromique-dichroïque thermoplastique fondue comprenant un polymère thermoplastique et un composé photochromique-dichroïque, et
la formation d'au moins une composition thermoplastique fondue supplémentaire, chaque composition thermoplastique supplémentaire comprenant indépendamment un polymère thermoplastique supplémentaire ;
(b) la formation d'un flux fondu (17) comprenant une première couche fondue (29) comprenant ladite composition photochromique-dichroïque thermoplastique fondue et au moins une couche fondue supplémentaire (26, 32), chaque couche fondue supplémentaire (26, 32) comprenant indépendamment ladite composition thermoplastique fondue supplémentaire ;
(c) le passage dudit flux fondu (17) entre, et en contact avec, à la fois un rouleau rotatif (11) et une courroie continue (14) qui se déplace, ledit rouleau rotatif (11) tournant dans une première direction (59), ladite courroie continue (14) se déplaçant dans une deuxième direction (56), et ladite première direction (59) et ladite deuxième direction (56) correspondant chacune à une direction relative identique (62) ;
(d) l'obtention dudit film photochromique-dichroïque (23) d'entre ledit rouleau rotatif (11) et ladite courroie continue (14), ledit film photochromique-dichroïque (23) comprenant ladite couche photochromique-dichroïque

(29’), et ladite couche photochromique-dichroïque (29’) étant formée à partir de ladite première couche fondue (29), ledit film photochromique-dichroïque (23) comprenant ladite couche photochromique-dichroïque (29’) interposée entre une première couche supplémentaire (26’) et une deuxième couche supplémentaire (32’), ladite première couche supplémentaire (26’) et ladite deuxième couche supplémentaire (32’) étant chacune indépendamment formée à partir de ladite couche fondue supplémentaire (26, 32 ; et

(e) la réception dudit film photochromique-dichroïque (23) sur un rouleau de réception formant ainsi un rouleau enroulé, ladite première couche supplémentaire (26’) définissant une première surface extérieure (95’) dudit film photochromique-dichroïque (23), et ladite deuxième couche supplémentaire (32’) définissant une deuxième surface extérieure (98’) dudit film photochromique-dichroïque (23),

au moins l’une parmi ladite première surface extérieure (95’) et ladite deuxième surface extérieure (98’) comprenant des micro-rainures, et lesdites micro-rainures étant dimensionnées pour permettre à un gaz de s’échapper d’entre des couches qui se chevauchent dudit film photochromique-dichroïque (23) se trouvant sur ledit rouleau enroulé.

**2.** Procédé selon la revendication 1,

- ladite composition photochromique-dichroïque thermoplastique fondue étant formée dans une extrudeuse (35) possédant une partie terminale (38), chaque composition thermoplastique fondue supplémentaire étant formée dans au moins une extrudeuse (44) supplémentaire possédant chacune une partie terminale (47), la partie terminale (38) de ladite extrudeuse (35) et la partie terminale (47) de chaque extrudeuse (44) supplémentaire étant en communication fluidique avec une filière (53), et ledit flux fondu (17) étant un extrudat fondu qui émerge de ladite filière (53) ; ou
- ledit rouleau rotatif (11) étant mis en rotation à une vitesse circonférentielle, ladite courroie continue (14) étant déplacée à une vitesse linéaire, et ladite vitesse circonférentielle dudit rouleau rotatif (11) et ladite vitesse linéaire de ladite courroie continue (14) étant sensiblement équivalentes ; ou
- ladite courroie continue (14) fournissant une pression sensiblement uniforme audit flux fondu (17) lorsque ledit flux fondu (17) passe entre, et en contact avec, à la fois ledit rouleau rotatif (11) et ladite courroie continue (14).

**3.** Procédé selon la revendication 1, ledit rouleau rotatif (11) possédant une surface extérieure (68), et ladite courroie continue (14) possédant une surface extérieure (71),

une partie de ladite surface extérieure (68) dudit rouleau rotatif (11) et une partie de ladite surface extérieure (71) de ladite courroie continue (14) étant placées en opposition face-à-face l’une à l’autre, et

ledit flux fondu (17) passant entre, et en contact avec, à la fois ladite partie de ladite surface extérieure (68) dudit rouleau rotatif (11) et ladite partie de ladite surface extérieure (71) de ladite courroie continue (14) qui sont placées en opposition face-à-face l’une à l’autre.

**4.** Procédé selon la revendication 3, ladite surface extérieure (68) dudit rouleau rotatif (11) et ladite surface extérieure (71) de ladite courroie continue (14) possédant chacune indépendamment une valeur de rugosité de surface (Ra) inférieure ou égale à 50 $\mu$m.

**5.** Procédé selon la revendication 4, chaque surface extérieure (95’, 98’) dudit film photochromique-dichroïque (23) possédant indépendamment une valeur de rugosité de surface (Ra) inférieure ou égale à 50 $\mu$m.

**6.** Procédé selon la revendication 3, ladite surface extérieure (68) dudit rouleau rotatif (11) et ladite surface extérieure (71) de ladite courroie continue (14) étant chacune indépendamment définie par un polymère élastomérique, un métal et des combinaisons correspondantes.

**7.** Procédé selon la revendication 6, ledit polymère élastomérique étant choisi parmi un caoutchouc de silicone, un polytétrafluoroéthylène, un polypropylène et des combinaisons correspondantes.

**8.** Procédé selon la revendication 3, ladite surface extérieure (68) dudit rouleau rotatif (11) et ladite surface extérieure (71) de ladite courroie continue (14) étant chacune indépendamment définie par un métal.

**9.** Procédé selon la revendication 8, ledit métal étant un acier inoxydable.

**10.** Procédé selon la revendication 3, au moins 10 pour cent et jusqu’à 75 pour cent inclus de ladite surface extérieure (68) dudit rouleau rotatif (11) étant en opposition face-à-face avec ladite surface extérieure (71) de ladite courroie

continue (14).

**11.** Procédé selon la revendication 1,

- ledit polymère thermoplastique et ledit polymère thermoplastique supplémentaire comprenant chacun indépendamment au moins l'un parmi, un polyuréthane thermoplastique, un polycarbonate thermoplastique, un polyester thermoplastique, une polyoléfine thermoplastique, un (méth)acrylate thermoplastique, un polyamide thermoplastique, une polysulfone thermoplastique, des copolymères à blocs de poly(éther-amide) thermoplastiques, des copolymères à blocs de poly(ester-éther) thermoplastiques, des copolymères à blocs de poly(éther-uréthane) thermoplastiques, des copolymères à blocs de poly(ester-uréthane) thermoplastiques, et des copolymères à blocs de poly(éther-urée) thermoplastiques ; ou
- ledit flux fondu (17) étant constitué de ladite première couche fondue (29), et ladite couche photochromique-dichroïque (29') définissant ledit film photochromique-dichroïque (23).

**12.** Procédé selon la revendication 1,

ladite couche photochromique-dichroïque (29') comprenant un copolymère à blocs de poly(éther-amide) thermoplastique,
ladite première couche supplémentaire (26') comprenant un copolymère de poly(éthylène-acétate de vinyle) thermoplastique, et
ladite deuxième couche supplémentaire (32') comprenant un copolymère de poly(éthylène-acétate de vinyle) thermoplastique.

**13.** Procédé selon la revendication 1 comprenant en outre,

- le stockage dudit rouleau enroulé, ou
- le fait d'éliminer, de ladite couche photochromique-dichroïque (29'), ladite première couche supplémentaire (26') et ladite deuxième couche supplémentaire (32'), et
la rétention de ladite couche photochromique-dichroïque (29'),
ladite couche photochromique-dichroïque (29') définissant ledit film photochromique-dichroïque (23) ; ou
- la soumission dudit film photochromique-dichroïque (23) à un étirage choisi parmi un étirage unilatéral et un étirage bilatéral, l'étirage résultant en une séparation de ladite première couche supplémentaire (26') de ladite couche photochromique-dichroïque (29'), et la séparation de ladite deuxième couche supplémentaire (32') de ladite couche photochromique-dichroïque (29'),
- le fait d'éliminer, de ladite couche photochromique-dichroïque (29'), ladite première couche supplémentaire (26') et ladite deuxième couche supplémentaire (32'), et
la rétention de ladite couche photochromique-dichroïque (29'),
de ladite couche photochromique-dichroïque (29') définissant ledit film photochromique-dichroïque (23) .

**14.** Procédé selon la revendication 1,

- ledit composé photochromique-dichroïque comprenant au moins un groupement photochromique, et chaque groupement photochromique étant indépendamment choisi parmi naphtopyrannes indéno-condensés, des naphto[1,2-b]pyrannes, des naphto[2,1-b]pyrannes, des spirofluoroéno[1,2-b]pyrannes, des phénanthropyrannes, des quinoléinopyrannes, des fluoroanthénopyrannes, des spiropyrannes, des benzoxazines, des naphtoxazines, des spiro(indoline)naphtoxazines, des spiro(indoline)pyridobenzoxazines, des spiro(indoline)fluoranthénoxazines, des spiro(indoline)quinoxazines, des fulgides, des fulgimides, des diaryléthènes, des diarylalkyléthènes, des diarylalcényléthènes, des composés photochromique thermiquement réversibles, et des composés photochromiques non thermiquement réversibles, et des mélanges correspondants ; ou
- ladite couche photochromique-dichroïque (29') comprenant en outre au moins un additif choisi parmi des colorants, des promoteurs d'alignement, des agents d'alignement horizontal, des additifs facilitant la cinétique, des inhibiteurs de polymérisation, des solvants, des photostabilisants, des thermostabilisants, des plastifiants, des agents de démoulage, des agents de contrôle de la rhéologie, des agents nivelants, des piégeurs de radicaux libres, et des promoteurs d'adhérence ; ou
- ladite couche photochromique-dichroïque (29') comprenant en outre au moins un matériau dichroïque choisi parmi des azométhines, des indigoïdes, des thioindigoïdes, des mérocyanines, des indanes, des colorants quinophtaloniques, des pérylènes, des phthalopérines, des triphénodioxazines, des indoloquinoxalines, des imidazo-triazines, des tétrazines, des colorants azo et (poly)azo, des benzoquinones, des naphtoquinones, une

anthraquinone et des (poly)anthraquinones, des anthrapyrimidinones, l'iode et des iodates.

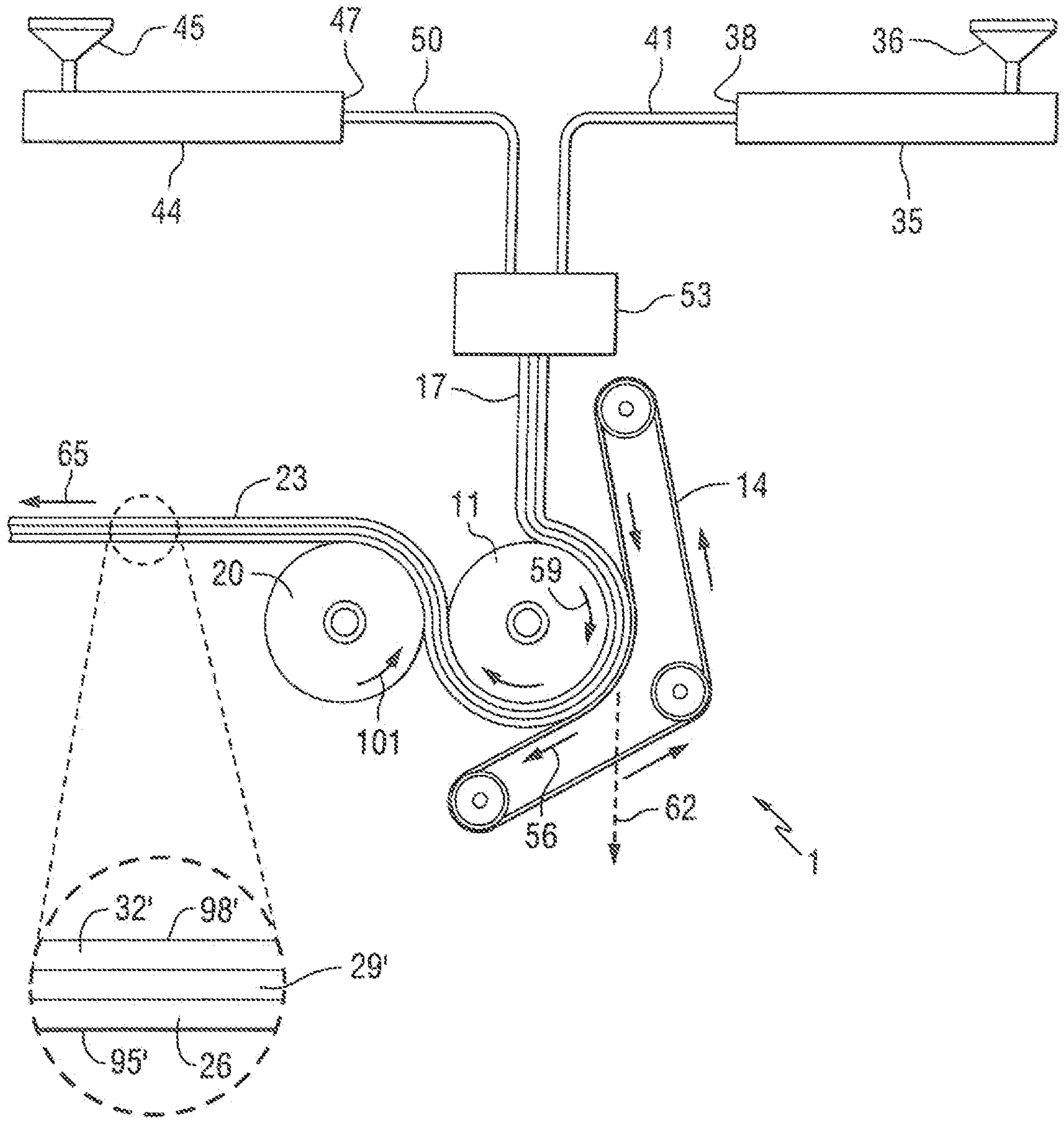
45
47
50
41
38
36
44
35
53
17
14
65
23
11
20
59
101
56
62
1
32'
98'
29'
95'
26

FIG. 1

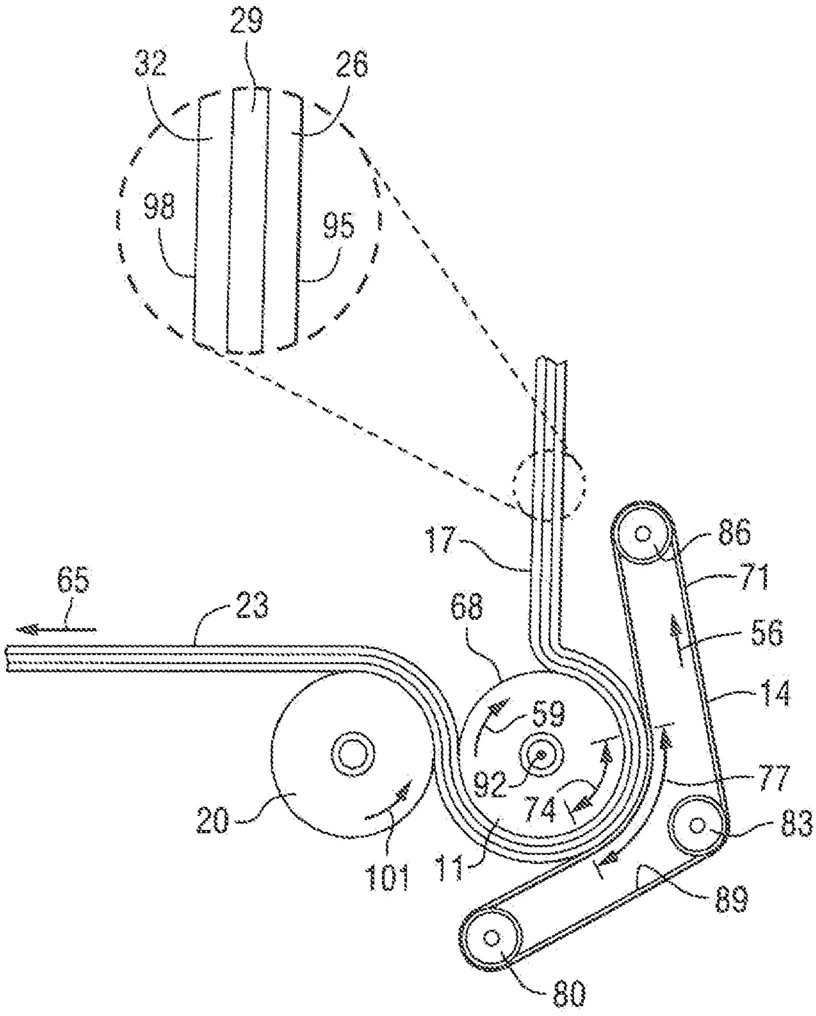


FIG. 2

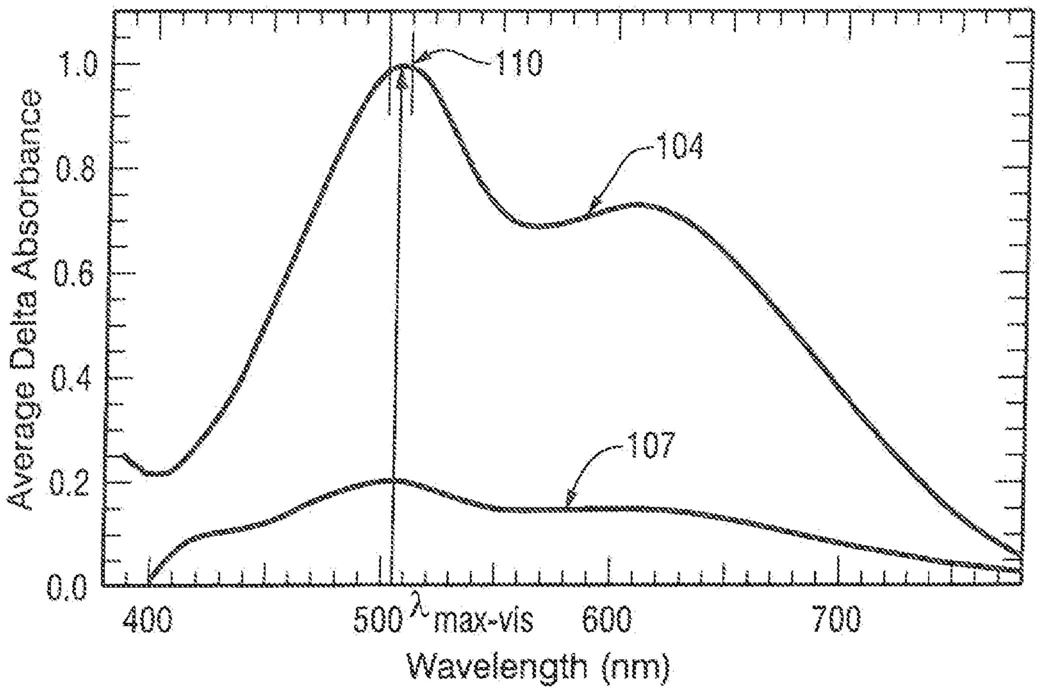
1.0
0.8
0.6
0.4
0.2
0.0
Average Delta Absorbance
110
104
107
400
500
λ max-vis
600
700
Wavelength (nm)

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2008187749 A1
- US 20110080628 A1
- US 2009169810 A1
- US 7282551 B2
- US 6096375 A
- US 7256921 B
- US 5645767 A
- US 6338808 B
- US 20020039627 A
- US 7315341 B2
- US 6433043 B
- US 20030045612 A
- US 7342112 B1
- US 5723072 A
- US 5698141 A
- US 6153126 A
- US 6022497 A
- US 5658501 A
- US 4931220 A
- US 6113814 A
- US 6555028 B
- US 6080338 A
- US 6136968 A
- US 6296785 B
- US 6348604 B
- US 6353102 B
- US 6630597 B
- US 7910019 B2
- US 6641874 B


### Non-patent literature cited in the description


- Techniques in Chemistry. Photochromism. John Wiley and Sons, Inc, 1971, vol. III